# EUROPÄISCHE PATENTSCHRIFT

(11) **EP 2 049 964 B1**
(45) Veröffentlichungstag und Bekanntmachung des Hinweises auf die Patenterteilung: **15.01.2014**
(21) Anmeldenummer: 07765680.9
(22) Anmeldetag: 27.06.2007
(51) Int. Cl.: G01F 1/00, G01D 21/00, G01F 1/84

(54) **VON EINER EXTERNEN ELEKTRISCHEN ENERGIEVERSORGUNG GESPEISTE FELDGERÄT-ELEKTRONIK**
ELECTRONIC SYSTEM FOR A FIELD DEVICE THAT IS FED BY AN EXTERNAL ELECTRIC ENERGY SUPPLY
SYSTÈME ÉLECTRONIQUE POUR UN APPAREIL À CHAMP ALIMENTÉ PAR UNE ALIMENTATION ÉLECTRIQUE EXTERNE

(30) Priorität: 03.07.2006 DE 102006030962
(43) Veröffentlichungstag der Anmeldung: 22.04.2009
(73) Patentinhaber: Endress+Hauser Flowtec AG, 4153 Reinach (CH)
(72) Erfinder: LALLA, Robert, 79541 Lörrach (DE)
(74) Vertreter: Andres, Angelika Maria
(86) Internationale Anmeldenummer: PCT/EP2007/056442
(87) Internationale Veröffentlichungsnummer: WO 2008/003629

(56) Entgegenhaltungen:
- WO-A-2004/048905
- WO-A-2006/072541
- DE-A1- 4 113 433
- GB-A- 2 148 559
- US-A- 3 764 880
- US-A1- 2006 161 359

## Beschreibung

Die Erfindung betrifft eine von einer externen elektrischen Energieversorgung gespeiste Feldgerät-Elektronik für ein Feldgerät sowie ein Feldgerät mit einer solchen Feldgerät-Elektronik.

In der industriellen Prozeß-Meß- und Automatisierungstechnik werden, insb. auch im Zusammenhang mit der Automation chemischer oder verfahrenstechnischer Prozesse und/oder der Steuerung von industriellen Anlagen, zur Erzeugung von Prozeßgrößen analog oder digital repräsentierenden Meßwertsignalen vor Ort, also prozeßnah installierte Meßgeräte, so genannte Feldgeräte eingesetzt. Ebenso können Feldgeräte als eine oder mehrer solcher Prozeßgrößen verändernde und insoweit in den Prozeß eingreifende Stellgeräte ausgebildet sein. Bei den jeweils zu erfassenden bzw. einzustellenden Prozeßgrößen kann es sich beispielsweise, wie auch vorbezeichnetem Stand der Technik entnehmbar, um einen Massendurchfluß, eine Dichte, eine Viskosität, einen Füll- oder einen Grenzstand, einen Druck oder eine Temperatur oder dergleichen, eines flüssigen, pulver-, dampf- oder gasförmigen Mediums handeln, das in einem entsprechenden Behälter, wie z.B. einer Rohrleitung oder einem Tank, geführt bzw. vorgehalten wird. Weiterführende Beispiele für derartige, dem Fachmann an und für sich bekannte Feldgeräte sind u.a. in der WO-A 05/040735, der WO-A 04/048905, der WO-A 03/048874, der WO-A 02/45045, der WO-A 02/103327, der WO-A 02/086426, der WO-A 01/02816, der WO-A 00/48157, der WO-A 00/36 379, der WO-A 00/14485, der WO-A 95/16 897, der WO-A 88/02 853, der WO-A 88/02 476, der US-B 70 04 191, der US-B 69 32 098, der US-B 67 99 476, der US-B 67 76 053, der US-B 67 69 301, der US-B 65 77 989, der US-B 66 62 120, der US-B 65 74 515, der US-B 65 35 161, der US-B 65 12 358, der US-B 64 87 507, der US-B 64 80 131, der US-B 64 76 522, der US-B 63 97 683, der US-B 63 52 000, der US-B 63 11 136, der US-B 62 85 094, der US-B 62 69 701, der US-B 62 36 322, der US-A 61 40 940, der US-A 60 14 100, der US-A 60 06 609, der US-A 59 59 372, der US-A 57 96 011, der US-A 57 42 225, der US-A 57 42 225, der US-A 56 87 100, der US-A 56 72 975, der US-A 56 04 685, der US-A 55 35 243, der US-A 54 69 748, der US-A 54 16 723, der US-A 53 63 341, der US-A 53 59 881, der US-A 52 31 884, der US-A 52 07 101, der US-A 51 31 279, der US-A 50 68 592, der US-A 50 65 152, der US-A 50 52 230, der US-A 49 26 340, der US-A 48 50 213, der US-A 47 68 384, der US-A 47 16 770, der US-A 46 56 353, der US-A 46 17 607, der US-A 45 94 584, der US-A 45 74 328, der US-A 45 24 610, der US-A 44 68 971, der US-A 43 17 116, der US-A 43 08 754, der US-A 38 78 725, der US-A 37 64 880, der EP-A 1 158 289, der EP-A 1 147 463, der EP-A 1058 093, der EP-A 984 248, der EP-A 591 926, der EP-A 525 920, oder der EP-A 415 655, der DE-A 44 12 388 oder der DE-A 39 34 007 ausführlich und detailliert beschrieben. Die darin gezeigten Feldgeräte weisen jeweils eine von einer externen elektrischen Energieversorgung gespeist, die eine Versorgungsspannung bereitstellt sowie einen davon getriebenen, die Feldgerät-Elektronik durchfließenden Versorgungsstrom liefert.

Für den Fall, daß das Feldgerät als Meßgerät dient, weist es weiters einen entsprechenden physikalisch-elektrischen oder chemisch-elektrischen Meßaufnehmer zum Erfassen der jeweiligen Prozeßgrößen auf. Dieser ist zumeist in eine Wandung des das Medium jeweils führenden Behälters oder der in den Verlauf einer das Medium jeweils führenden Leitung, beispielsweise eine Rohrleitung, eingesetzt und dient dazu, wenigstens ein die primär erfaßte Prozeßgröße möglichst genau repräsentierendes, insb. elektrisches, Meßsignal zu erzeugen. Zum Verarbeiten des Meßsignals ist der Meßaufnehmer weiters mit der in der Feldgerät-Elektronik vorgesehenen, insb. auch einer Weiterverarbeitung oder Auswertung des wenigstens einen Meßsignals dienenden, Betriebs- und Auswerteschaltung verbunden. Bei einer Vielzahl solcher Feldgeräte wird der Meßaufnehmer zum Erzeugen des Meßsignals im Betrieb zudem von einem von der Betriebs- und Auswerteschaltung zumindest zeitweise generierten Treibersignal so angesteuert, daß er in einer für die Messung geeigneten Weise zumindest mittelbar auf das Medium oder aber auch über eine entsprechende Sonde praktisch direkt auf das Medium einwirkt, um dort mit dem zu erfassenden Parameter korrespondierende Reaktionen hervorzurufen. Das Treibersignal kann dabei beispielsweise hinsichtlich einer Stromstärke, einer Spannungshöhe und/oder einer Frequenz entsprechend geregelt sein. Als Beispiele für solche aktiven, also ein elektrisches Treibersignal im Medium entsprechend umsetzende Meßaufnehmer sind im besonderen dem Messen von zumindest zeitweise strömenden Medien dienende Durchfluß-Meßaufnehmer mit wenigstens einer vom Treibersignal angesteuerten, Magnetfeld erzeugenden Spule oder wenigstens einem vom Treibersignal angesteuerten Ultraschallsender oder dem Messen und/oder Überwachen von Füllständen in einem Behälter dienende Füllstands- und/oder Grenzstandsaufnehmer, wie z.B. Mikrowellenantennen, Gouboun-Leitungen, also einen Wellenleiter für akustische oder elektromagnetische Oberflächenwellen, vibrierenden Tauchkörper oder dergleichen, zu nennen.

Zur Aufnahme der Feldgerät-Elektronik umfassen Feldgeräte der beschriebenen Art ferner ein Elektronik-Gehäuse, das, wie z.B. in der US-A 63 97 683 oder der WO-A 00/36379 vorgeschlagen, vom Feldgerät entfernt angeordnet und mit diesem nur über eine flexible Leitung verbunden sein kann oder das, wie z.B. auch in der EP-A 903 651 oder der EP-A 1 008 836 gezeigt, direkt am Meßaufnehmer oder einem den Meßaufnehmer separat einhausenden Meßaufnehmer-Gehäuse angeordnet ist. Oftmals dient dann das Elektronik-Gehäuse, wie beispielsweise in der EP-A 984 248, der US-A 45 94 584, der US-A 47 16 770 oder der US-A 63 52 000 gezeigt, auch dazu, einige mechanische Komponenten des Meßaufnehmers mit aufzunehmen, wie z.B. sich unter mechanischer Einwirkung betriebsmäßig veifoimende membran-, stab-, hülsen- oder rohrförmige Deformation- oder Vibrationskörper, vgl. hierzu auch die eingangs erwähnte US-B 63 52 000. Feldgeräte der beschriebenen Art sind ferner üblicherweise über ein an die Feldgerät-Elektronik angeschlossenes Datenübertragungs-System miteinander und/oder mit entsprechenden Prozeß-Leitrechnern verbunden, wohin sie die Meßwertsignale z.B. via (4 mA bis 20 mA)-Stromschleife und/oder via digitalen Daten-Bus senden und/oder von denen sie Betriebsdaten und/oder Steuerbefehle in entsprechender Weise empfangen. Als Datenübeitragungs-Systeme dienen hierbei, insb. serielle, Feldbus-Systeme, wie z.B. PROFIBUS-PA, FOUNDATION FIELDBUS sowie die entsprechenden Übertragungs-Protokolle. Mittels der Prozeß-Leitrechner können die übertragenen Meßwertsignale weiterverarbeitet und als entsprechende Meßergebnisse z.B. auf Monitoren visualisiert und/oder in Steuersignale für andere als Stellgeräte ausgebildete Feldgeräte, wie z.B. MagnetVentile, Elektro-Motoren etc., umgewandelt werden.

Ferner ist eine Vielzahl von Feldgeräten der beschriebenen Art, insb. auch Feldmeßgerät, elektrisch so ausgelegt, daß sie den Forderungen nach intrinsischer Explosionssicherheit genügen. Dementsprechend werden die Feldgeräte mit einer solch niedrigen elektrischen Leistung betrieben, daß mangels des Erreichens der Zündbedingungen Funken oder Lichtbogen elektrisch nicht ausgelöst werden können. Eigensicherere Explosionsschutz ist beispielsweise nach den Europäischen Normen EN 50 014 und EN 50 020 gegeben, wenn elektronische Vorrichtungen so ausgebildet sind, dass sie der darin definierten Zündschutzart "Eigensicherheit (Ex-i)" genügen. Entsprechend dieser Zündschutzart dürfen also im Feldgerät auftretende elektrische Ströme, Spannungen und Leistungen zu jeder Zeit vorgegebene Strom-, Spannungs- und Leistungsgrenzwerte nicht überschreiten. Diese drei Grenzwerte sind so gewählt, daß im Fehlerfall oder durch einen Kurzschluß der maximal freigesetzte Energiebetrag nicht dazu ausreicht, einen zündfähigen Funken zu erzeugen. Üblicherweise darf bei eigensicheren Feldgeräten die elektrische Leistung 1 W (= Watt) nicht übersteigen. Die Spannung kann z.B. durch Z-Dioden, der Strom z.B. durch Widerstände und die Leistung durch entsprechende Kombination von spannungs- und strombegrenzenden Komponenten unter den vorgegebenen Grenzwerten gehalten werden.

Bei modernen Feldgeräten handelt es sich zudem oftmals um so genannte Zweileiter-Feldgeräte, also solche Feldgeräte, bei denen die Feldgerät-Elektronik mit der externen elektrischen Energieversorgung lediglich über ein einziges Paar elektrischer Leitungen elektrisch verbunden ist und bei denen die Feldgerät-Elektronik auch den momentanen Meßwert über das einzige Paar elektrischer Leitungen an eine in der externen elektrischen Energieversorgung vorgesehene und/oder mit dieser elektrisch gekoppelte Auswerteeinheit überträgt. Die Feldgerät-Elektronik umfaßt dabei jeweils einen vom Versorgungsstrom durchflossenen Stromregler zum Einstellen und/oder Modulieren, insb. Takten, des Versorgungsstroms, eine interne Betriebs- und Auswerteschaltung zum Steuern des Feldgeräts, sowie eine an einer von der Versorgungsspannung abgeteilten internen Eingangsspannung der Feldgerät-Elektronik anliegende, die interne Betriebs- und Auswerteschaltung speisende interne Versorgungsschaltung mit wenigstens einem von einem veränderlichen Teilstrom des Versorgungsstroms durchflossenen Nutzspannungsregler, der eine auf einem vorgebbaren Spannungsniveau im wesentlichen konstant geregelten interne Nutzspannung in der Feldgerät-Elektronik bereitstellt. Beispiele für solche Zweileiter-Feldgeräte, insb. Zweileiter-Meßgeräte oder Zweileiter-Stellgeräte, können u.a. der WO-A 05/040735, der WO-A 04/048905, der WO-A 03/048874, WO-A 02/45045, der WO-A 02/103327, der WO-A 00/48157, WO-A 00/26739, der WO-A 94/20940, der US-B 67 99 476, der US-B 65 77 989, der US-B 66 62 120, der US-B 65 74 515, der US-B 65 35 161, der US-B 65 12 358, der US-B 64 80 131, der US-B 63 11 136, der US-B 62 85 094, der US-B 62 69 701, der US-A 61 40 940, der US-A 60 14 100, der US-A 59 59 372, der US-A 57 42 225, der US-A 56 72 975, der US-A 55 35 243, der US-A 54 16 723, der US-A 52 07 101, der US-A 50 68 592, der US-A 50 65 152, der US-A 49 26 340, der US-A 46 56 353, der US-A 43 17 116, der US-A 37 64 880, der EP-A 1 147 841, der EP-A 1 058 093, der EP-A 591 926, der EP-A 525 920, der EP-A 415 655, der DE-A 44 12 388 oder der DE-A 39 34 007 entnommen werden. Gegebenfalls ist innerhalb der Feldgerät-Elektronik, wie beispielsweise in der US-A 37 64 880 oder der WO-A 04/048905 beschrieben, noch eine galvanische Trennung vorgesehen, beispielsweise zwischen der interne Betriebs- und Auswerteschaltung und dem Stromregler, um zu vermeiden, daß allfällige, nicht immer sicher vermeidbare Potentialunterschiede zwischen der Anlage, in die das Feldgerät eingesetzt ist, und der externen elektrischen Energieversorgung unkontrolliert abgebaut werden.

Historisch bedingt sind solche Zweileiter-Feldgeräten überwiegend so ausgelegt, daß eine auf einen zwischen 4 mA und 20 mA ( = Milliampere) liegenden Wert eingestellte momentane Stromstärke des in dem als Stromschleife ausgebildeten einzigen Paar Leitung momentan fließenden Versorgungsstroms gleichzeitig auch den momentan vom Feldgerät erzeugten Meßwert bzw. den momentan an das Feldgerät gesendeten Einstellwert repräsentiert. Infolgedessen besteht ein besonderes Problem von solchen Zweileiter-Feldgeräten insoweit darin, daß die von der Feldgerät-Elektronik zumindest nominell umsetzbare oder umzusetzende elektrisch Leistung - im folgenden kurz "verfügbare Leistung" - während des Betriebes in praktisch unvorhersehbarer Weise über einen weiten Bereich schwanken kann. Dem Rechnung tragend sind moderne Zweileiter-Feldgeräte (2L-Feldgeräte), insb. moderne Zweileiter-Meßgeräte (2L-Meßgeräte) mit (4 mA bis 20 mA)-Stromschleife, daher üblicherweise so ausgelegt, daß ihre mittels eines in der Auswerte- und Betriebsschaltung vorgesehenen Mikrocomputers realisierte Geräte-Funktionalität änderbar ist, und insofern die zumeist ohnehin wenig Leistung umsetzende Betriebs- und Auswerteschaltung an die momentan verfügbare Leistung angepaßt werden kann.

Eine geeignete Adaption der Feldgerät-Elektronik an die verfügbare Leistung kann z.B., wie auch in der US-B 67 99 476, US-B 65 12 358 oder der US-A 54 16 723 vorgeschlagen, durch Angleichen der momentan im Feldgerät umgesetzte Leistung an die momentan verfügbare Leistung erreicht werden, und zwar in der Weise, daß einzelne Funktionseinheiten der Betriebs- und Auswerteschaltung mit entsprechend variablen Taktraten betrieben oder, je nach Höhe der momentan verfügbaren Leistung, sogar zeitweise abgeschaltet werden (Bereitschafts- oder Schlaf-Modus). Bei als Zweileiter-Meßgerät ausgelegten Feldgeräten mit aktivem Meßaufnehmer kann die momentan im Feldgerät umgesetzte elektrische Leistung, wie u.a. in der US-B 67 99 476, der US-A 60 14 100 oder der WO-A 02/103327 gezeigt, zudem durch Anpassen auch der momentan im Meßaufnehmer umgesetzten elektrischen Leistung an die momentan verfügbare Leistung angepaßt werden, beispielsweise durch Taktung des ggf. gepufferten Treibersignals einhergehend mit einer entsprechend anpaßbaren Schußrate, mit der das Treibersignal getaktet wird, und/oder durch Verringern einer maximalen Stromstärke und/oder einer maximalen Spannungshöhe des Treibersignals.

Allerdings hat bei als Zweileiter-Meßgerät ausgeführten Feldgeräten eine Änderung der Geräte-Funktionalität zumeist auch zur Folge, daß im Betrieb eine Genauigkeit, mit der der die Betriebs- und Auswerteschaltung den Meßwert ermittelt, und/oder eine Häufigkeit, mit der die Betriebs- und Auswerteschaltung beispielsweise den Meßwert aktualisiert, in Abhängigkeit von der momentan verfügbaren Leistung Änderungen unterworfen ist. Auch das Puffern von zeitweise vorhandener überschüssiger Leistung kann diesem Nachteil von Zweileiter-Meßgeräten mit (4 mA bis 20 mA)-Stromschleife nur bedingt abhelfen. Einerseits kann wegen der üblicherweise für solche Zweileiter-Meßgeräte oftmals gleichermaßen geforderten intrinsischen Explosionssicherheit allenfalls vorhandene überschüssige elektrische Energie ohnehin in nur sehr eingeschränktem Maße intern in der Feldgerät-Elektronik gespeichert werden. Zum anderen aber hängt der momentane Versorgungsstrom und insoweit auch die allenfalls vorhandene überschüssige Energie lediglich vom momentanen Meßwert ab, so daß also bei dauerhaft sehr niedrigem, zeitlich aber stark schwankendem Meßwert ein entsprechend vorgesehener Energiepuffer durchaus über einen längere Zeitraum völlig entladen sein kann. Darüber hinaus ist für die Umsetzung eines solch komplexen Leistungsmanagements im Feldgerät eine sehr umfängliche und insofern auch sehr schaltungs- und energieaufwendige Leistungsmessung erforderlich, vgl. hierzu auch die WO-A 00/26739, die
US-B 67 99 476, die US-B 65 12 358 oder die EP-A 1 174 841.

Abgesehen davon hat sich bei Feldgeräten der beschriebenen Art mit einem dem Führen und Messen von zumindest zeitweise strömenden Medien dienenden Meßaufnehmer ferner gezeigt, daß das adaptive Takten von Treibersignal und/oder einzelner Komponenten der Betriebs- und Auswerteschaltung nur bedingt geeignet ist. Dies gilt im Besonderen bei Verwendung eines Meßaufnehmers vom Vibrationstyp, wie sie beispielsweise in den eingangs erwähnten US-B 67 99 476, US-B 66 91 583, US-A 60 06 609, US-A 57 96 011, der US-A 56 87 100, der US-A 53 59 881, der US-A 47 68 384, der US-A 45 24 610 oder WO-A 02/103327 beschrieben sind. Die dort gezeigten Feldgeräte dienen dem Messen von Parametern in Rohrleitungen strömender Medien, vornehmlich deren Massedurchfluß, Dichte oder Viskosität. Zu diesem Zweck umfaßt der entsprechende Meßaufnehmer jeweils wenigstens ein im Betrieb vibrierendes, dem Führen des Mediums dienendes Meßrohr, eine mit der Feldgerät-Elektronik elektrisch verbundene Erregeranordnung mit einem auf das Meßrohr mechanisch einwirkenden Schwingungserreger zum Antreiben des Meßrohrs, sowie eine Sensoranordnung, die Meßrohrschwingungen örtlich repräsentierende Meßsignale mittels wenigstens einem am Meßrohr angeordneten Schwingungssensor generiert. Sowohl der Schwingungserreger als auch der Schwingungssensor ist dabei bevorzugt vom elektro-dynamischen Typ, also jeweils mittels einer Magnetspule und einem mit dieser über ein Magnetfeld in Wechselwirkung stehenden Tauchanker gebildet.

Aufgrund der für den Betrieb eines solchen Meßaufnehmers erforderlichen hochgenauen Amplituden - und Frequenzregelung des Treibersignals für die Erregeranordnung ist zum einen ein zeitlich hoch auflösendes Abtasten der Meßrohrschwingungen unabdingbar. Gleichermaßen ist bei an strömenden Medien vorgenommenen Messungen der ausgegebenen Meßwert auch selbst vergleichsweise oft zu aktualisieren. Zum anderen führt eine zumeist sehr hohe mechanische Zeitkonstante des durch den Meßaufnehmer gebildeten Schwingungssystems dazu, daß für allfällige Beschleunigungen desselben, insb. während instationärer Einschwingvorgänge, eine hohe Antriebsleistung benötigt und/oder oder vergleichsweise lange Einschwingzeiten veranschlagt werden müssen. Weitergehend Untersuchungen hierzu haben jedoch ferner gezeigt, daß wegen der üblicherweise begrenzten Speicherkapazität für elektrische Leistung auch ein Puffern überschüssiger Energie im Feldgerät kaum eine signifikante Verbesserung des von der Amplitude der Meßrohrschwingungen abhängigen Signal-zu-Rausch-Verhältnisses zu bewirken vermag. Insoweit ist also für Zweileiter-Meßgeräte mit einem aktiven Meßaufnehmer der vorgenannten Art, insb. für Zweileiter-Meßgeräte mit einem dem Führen strömender Medien dienenden Meßaufnehmer vom Vibrationstyp, auch ein temporäres und partielles Abschalten der Betriebs- und Auswerteschaltung wenig geeignet.

Eine weitere Möglichkeit zur Verbesserung der Leistungsfähigkeit von Feldgeräten der beschriebenen Art, insb. der von Zweileiter-Messgeräten, besteht darin, zumindest bei minimaler verfügbarer Leistung möglichst viel davon für die Realisierung der Geräte-Funktionalität tatsächlich zu nutzen, also einen entsprechenden Wirkungsgrad des Feldgeräts zumindest im Bereich kleiner verfügbarer Leistung zu optimieren. dem entsprechende Versorgungsschaltungen für die interne Speisung der Feldgerät-Elektronik sind beispielsweise in der US-B 65 77 989 oder US-A 61 40 940 eingehend diskutiert. Im Besonderen zielen die darin vorgeschlagenen Lösungen darauf ab, die intern tatsächlich umsetzbare elektrische Leistung zu optimieren. Dafür ist in der Feldgerät-Elektronik jeweils ein dem Einstellen und Halten der oben erwähnten internen Eingangsspannung der Feldgerät-Elektronik auf einem vorgebbaren, ggf. auch anpaßbaren, Spannungsniveau dienender Eingangsspannungsregler mit einem eingangs der Feldgerät-Elektronik wirkenden Spannungssteller vorgesehen, der in Abhängigkeit von der momentan verfügbaren Leistung und einer momentan tatsächlich benötigten Leistung von einem vom Versorgungsstrom abgezweigten, veränderlichen Teilstrom zumindest zeitweise durchflossen ist. Allerdings besteht ein Nachteil der vorgenannten Feldgerät-Elektronik darin, daß sämtliche internen Verbraucher praktisch von ein und derselben internen Nutzspannung versorgt sind und eine allfälliges Zusammenbrechen dieser einzigen Nutzspannung, beispielsweise infolge eines zu geringen Versorgungsstromes, einen Normalbetrieb des Feldgeräts nicht mehr ermöglicht oder sogar unvermittelt zu einem temporären Total-Ausfall der Feldgerät-Elektronik führen kann.

Ausgehend von den vorangehend am Beispiel herkömmlicher 2L-Meßgeräten diskutierten Nachteilen des Standes der Technik besteht eine Aufgabe der Erfindung darin, eine für eine Feldgerät der beschriebenen Art geeignete Feldgerät-Elektronik anzugeben, die es ermöglicht die Auswerte- und Betriebsschaltung, insb. einen darin vorgesehenen Mikroprozessor, zumindest im Normalbetrieb des Feldgeräts dauerhaft in Gang zu halten und dabei zumindest einzelne ausgewählte Funktionseinheiten, insb. den vorgesehenen Mikroprozessor, stets in ausreichendem Maße mit elektrischer Energie zu versorgen. Zudem soll die Feldgerät-Elektronik so ausgelegt sein, daß einzelne Baugruppen oder Komponenten mit vergleichsweise wenig Aufwand modular derart zusammengefaßt werden können, daß zumindest die eingangs der Feldgerät-Elektronik vorgesehenen Baugruppen oder Komponenten für eine Vielzahl von Typen von, insb. auch diversitären, Feldgeräten verwendet werden kann. Ein solches mittels der eingangs vorgesehenen Baugruppen oder Komponenten gebildetes Eingangsmodul soll dabei auf möglichst verlustarme und energiesparende Weise von einem zumindest Teile der Auswerte- und Betriebsschaltung, jedenfalls aber die darin vorgesehene Treiberschaltung umfassenden Schaltungsmodul galvanisch getrennt gehalten werden können.

Zudem soll die Feldgerät-Elektronik so ausgelegt sein, daß einzelne Baugruppen oder Komponenten mit möglichst geringem technischem Aufwand und auf möglichst verlustarme und energiesparende Weise wirksam galvanisch voneinander getrennt gehalten werden können. Des weiteren soll die Feldgerät-Elektronik so ausgelegt sein, daß einzelne Baugruppen oder Komponenten mit vergleichsweise wenig Aufwand modular derart zusammengefaßt werden können, daß zumindest die eingangs der Feldgerät-Elektronik vorgesehenen Baugruppen oder Komponenten einerseits für eine Vielzahl von Typen von, insb. auch diversitären, Feldgeräten verwendet und anderseits auf möglichst einfache Weise eine effektive galvanische Trennung selbiger Baugruppen von anderen, insb. sensornahen, Baugruppen der Feldgerät-Elektronik geschaffen werden kann.

Zur Lösung der Aufgabe besteht die Erfindung in einer von einer externen elektrischen Energieversorgung gespeisten Feldgerät-Elektronik für ein Feldgerät, wobei die externe elektrische Energieversorgung eine, insb. uni-polare, Versorgungsspannung bereitstellt und einen davon getriebenen, insb. uni-polaren und/ oder binären, veränderlichen Versorgungsstrom liefert. Die erfindungsgemäße Feldgerät-Elektronik umfaßt einen vom Versorgungsstrom durchflossenen Stromregler zum Einstellen und/oder Modulieren, insb. Takten, des Versorgungsstroms, eine interne Betriebs- und Auswerteschaltung zum Steuern des Feldgeräts, sowie eine an einer von der Versorgungsspannung abgeteilten internen Eingangsspannung der Feldgerät-Elektronik anliegende, die interne Betriebs- und Auswerteschaltung speisende interne Versorgungsschaltung mit einem zumindest zeitweise von einem, insb. veränderlichen, ersten Teilstrom des Versorgungsstroms durchflossenen ersten Nutzspannungsregler, der eine auf einem vorgebbaren ersten Spannungsniveau im wesentlichen konstant geregelten erste interne Nutzspannung in der Feldgerät-Elektronik bereitstellt, mit einem zumindest zeitweise von einem, insb. veränderlichen, zweiten Teilstrom des Versorgungsstroms durchflossenen zweiten Nutzspannungsregler, der eine über einen vorgebbaren Spannungsbereich veränderliche zweite interne Nutzspannung in der Feldgerät-Elektronik bereitstellt, sowie mit einem zumindest zeitweise von einem, insb. veränderlichen, dritten Teilstrom des Versorgungsstroms durchflossenen Spannungssteller zum Einstellen und Halten der internen Eingangsspannung der Feldgerät-Elektronik auf einem vorgebbaren, insb. im Betrieb veränderlichen, Spannungsniveau. Darüber hinaus sind bei der erfindungsgemäßen Feldgerät-Elektronik beiden Nutzspannungsregler voneinander galvanisch getrennt. Beide Nutzspannungsregler können dabei beispielsweise mittels wenigstens eines Übertragers miteinander gekoppelt sein.

Ferner besteht die Erfindung in einem Feldgerät das die vorgenannte Feldgerät-Elektronik umfaßt. In einer ersten Variante des Feldgeräts der Erfindung dient dieses dem Messen und/oder Überwachen wenigstens eines vorgegebenen physikalischen und/oder chemischen Parameters, insb. eines Durchflusses, einer Dichte, einer Viskosität, eines Füllstands, eines Drucks, einer Temperatur, eines pH-Wertes oder dergleichen, eines, insb. in einer Rohrleitung und/oder einem Behälter geführten, Mediums, und umfaßt das Feldgerät dafür weiters einen mit der Feldgerät-Elektronik elektrisch gekoppelten physikalisch-elektrischen Meßaufnehmer, der auf Änderungen des wenigstens einen Parameters reagiert und zumindest zeitweise wenigstens ein mit dem Parameter korrespondierendes Meßsignal, insb. eine veränderliche Signalspannung und/oder einen veränderlichen Signalstrom, abgibt. In einer zweiten Variante des Feldgeräts der Erfindung dient dieses Einstellen wenigstens eines vorgegebenen physikalischen und/oder chemischen Parameters, insb. eines Durchflusses, einer Dichte, einer Viskosität, eines Füllstands, eines Drucks, einer Temperatur, eines pH-Wertes oder dergleichen, eines, insb. in einer Rohrleitung und/ oder einem Behälter geführten, und umfaßt das Feldgerät dafür weiters ein mit der Feldgerät-Elektronik elektrisch gekoppeltes elektrisch-physikalisches Stellglied, der auf Änderungen wenigstens eines angelegten Steuersignals, insb. eine veränderliche Signalspannung und/oder einen veränderlichen Signalstrom, mit einer den einzustellenden Parameter beeinflussenden Verstellbewegung des Stellglieds reagiert.

Gemäß einer ersten Ausgestaltung der Erfindung ist vorgesehen, daß der erste Nutzspannungsregler und die interne Betriebs- und Auswerteschaltung voneinander galvanisch getrennt sind. Der erste Nutzspannungsregler und die interne Betriebs- und Auswerteschaltung können dabei beispielsweise mittels wenigstens eines Übertragers miteinander gekoppelt sein.

Gemäß einer zweiten Ausgestaltung der Erfindung ist vorgesehen, daß der zweite Nutzspannungsregler von der vom ersten Nutzspannungsregler gelieferten Nutzspannung oder/und einer davon abgeleiteten Sekundärspannung gespeist.

Gemäß einer dritten Ausgestaltung der Erfindung ist vorgesehen, daß der Stromsteller und der zweite Nutzspannungsregler voneinander galvanisch getrennt sind.

Gemäß einer vierten Ausgestaltung der Erfindung ist vorgesehen, daß der Stromsteller und die interne Betriebs- und Auswerteschaltung voneinander galvanisch getrennt sind.

Gemäß einer fünften Ausgestaltung der Erfindung ist vorgesehen, daß der Spannungssteller und der zweite Nutzspannungsregler voneinander galvanisch getrennt sind.

Gemäß einer sechsten Ausgestaltung der Erfindung ist vorgesehen, daß der Spannungssteller und die interne Betriebs- und Auswerteschaltung voneinander galvanisch getrennt sind.

Gemäß einer siebenten Ausgestaltung der Erfindung ist vorgesehen, daß die Betriebs- und Auswerteschaltung zumindest zeitweise sowohl von einem von der ersten Nutzspannung getriebenen, insb. veränderlichen, ersten Nutzstrom als auch von einem von der zweiten Nutzspannung getriebenen, insb. veränderlichen, zweiten Nutzstrom durchflossen ist.

Nach einer achten Ausgestaltung der Erfindung sind die interne Eingangsspannung der Feldgerät-Elektronik und/oder die zweite Nutzspannung der Feldgerät-Elektronik in Abhängigkeit von einer momentanen Spannungshöhe einer von der Versorgungsspannung abgeteilten, über der Feldgerät-Elektronik eingangs abfallenden Klemmenspannung geregelt. Nach einer Weiterbildung dieser Ausgestaltung der Erfindung ist die interne Eingangsspannung der Feldgerät-Elektronik mittels des Spannungsstellers auf einem vorgebbaren, insb. im Betrieb veränderlichen, Spannungsniveau gehalten, das niedriger ist als die Klemmenspannung. Das Spannungsniveau, auf dem die interne Eingangsspannung mittels des Spannungsstellers gehalten ist, kann im Betrieb, insb. stufenweise oder im wesentlichen kontinuierlich, veränderlich sein.

Nach einer neunten Ausgestaltung der Erfindung ist die zweite Nutzspannung in Abhängigkeit von einer momentanen Spannungshöhe der internen Eingangsspannung der Feldgerät-Elektronik und/oder in Abhängigkeit von einer momentanen Spannungshöhe einer von der Versorgungsspannung abgeteilten, über der Feldgerät-Elektronik eingangs abfallenden Klemmenspannung geregelt.

Nach einer zehnten Ausgestaltung der Erfindung ist die zweite Nutzspannung in Abhängigkeit von einer momentanen Stromstärke wenigstens eines der drei Teilströme geregelt. Nach einer Weiterbildung dieser Ausgestaltung der Erfindung ist vorgesehen, daß die zweite Nutzspannung in Abhängigkeit von der momentanen Stromstärke des dritten Teilstroms geregelt ist. Nach einer anderen Weiterbildung dieser Ausgestaltung der Erfindung ist ferner vorgesehen, daß die zweite Nutzspannung in Abhängigkeit von der momentanen Stromstärke des zweiten Teilstroms und einer momentanen Spannungshöhe der internen Eingangsspannung der Feldgerät-Elektronik geregelt ist.

Nach einer elften Ausgestaltung der Erfindung stellt die speisende externe Energieversorgung eine Versorgungsspannung mit veränderlicher, insb. schwankender, Spannungshöhe bereit.

Nach einer zwölften Ausgestaltung der Erfindung treibt die von der externen Energieversorgung gelieferte Versorgungsspannung einen Versorgungsstrom mit veränderlicher, insb. im wesentlichen in vorab nicht bestimmbarer Weise schwankender, Stromstärke.

Nach einer dreizehnten Ausgestaltung der Erfindung ist in der Betriebs- und Auswerteschaltung eine dem temporären Speichern elektrischer Energie dienende Speicherschaltung vorgesehen.

Nach einer vierzehnten Ausgestaltung der Erfindung weist der Spannungssteller vornehmlich der Dissipation elektrischer Energie und dem Abführen von dabei entstandener Wärmeenergie dienende Komponenten, insb. ein Halbleiterelement oder dergleichen, auf.

Nach einer fünfzehnten Ausgestaltung der Erfindung ist in der Betriebs- und Auswerteschaltung wenigstens ein Mikroprozessor vorgesehen, wobei die erste Nutzspannung oder eine davon abgeleitete Sekundärspannung zumindest anteilig als Betriebsspannung des Mikroprozessors dient. Gemäß einer Weiterbildung dieser Ausgestaltung der Erfindung sind der erste Nutzspannungsregler und der Mikroprozessor voneinander galvanisch getrennt. Gemäß einer anderen Weiterbildung dieser Ausgestaltung der Erfindung ist der der Mikroprozessor vom Stromsteller und/ oder vom Spannungssteller galvanisch getrennt gehalten.

Nach einer sechzehnten Ausgestaltung der Erfindung ist in der Betriebs- und Auswerteschaltung wenigstens ein digitaler Signalprozessor vorgesehen, wobei die erste Nutzspannung oder eine davon abgeleitete Sekundärspannung zumindest anteilig als Betriebsspannung des digitalen Signalprozessors dient. Gemäß einer Weiterbildung dieser Ausgestaltung der Erfindung sind der erste Nutzspannungsregler und der digitale Signalprozessor voneinander galvanisch getrennt. Gemäß einer anderen Weiterbildung dieser Ausgestaltung der Erfindung ist der der digitale Signalprozessor vom Stromsteller und/oder vom Spannungssteller galvanisch getrennt gehalten.

Nach einer siebzehnten Ausgestaltung der Erfindung ist in der Betriebs- und Auswerteschaltung wenigstens ein Verstärker vorgesehen, bei dem zumindest ein der beiden Nutzspannung oder eine davon abgeleitet Sekundärspannung zumindest anteilig als Betriebsspannung dient. Gemäß einer Weiterbildung dieser Ausgestaltung der Erfindung ist ferner vorgesehen, daß der erste Nutzspannungsregler und der wenigstens eine Verstärker voneinander galvanisch getrennt sind.

Nach einer achtzehnten Ausgestaltung der Erfindung ist in der Betriebs- und Auswerteschaltung wenigstens ein A/D-Wandler vorgesehen, bei dem die erste Nutzspannung oder eine davon abgeleitet Sekundärspannung zumindest anteilig als Betriebsspannung dient. Gemäß einer Weiterbildung dieser Ausgestaltung der Erfindung ist ferner vorgesehen, daß der erste Nutzspannungsregler und der wenigstens eine A/D-Wandler voneinander galvanisch getrennt sind.

Nach einer neunzehnten Ausgestaltung der Erfindung ist in der Betriebs- und Auswerteschaltung wenigstens ein D/A-Wandler vorgesehen, bei dem zumindest ein der beiden Nutzspannung oder eine davon abgeleitet Sekundärspannung zumindest anteilig als Betriebsspannung dient. Gemäß einer Weiterbildung dieser Ausgestaltung der Erfindung ist ferner vorgesehen, daß der erste Nutzspannungsregler und der wenigstens eine D/A-Wandler voneinander galvanisch getrennt sind.

Nach einer zwanzigsten Ausgestaltung der Erfindung sind in der Betriebs- und Auswerteschaltung Mittel zum Vergleichen von in der Feldgerät-Elektronik abfallenden elektrischen Spannungen und/oder in der Feldgerät-Elektronik fließenden elektrischen Strömen mit Referenzwerten vorgesehen. Nach einer Weiterbildung dieser Ausgestaltung der Erfindung erzeugt die Betriebs- und Auswerteschaltung zumindest dann ein eine Unterversorgung der Feldgerät-Elektronik signalisierendes Alarmsignal, wenn die Betriebs- und Auswerteschaltung ein Unterschreiten eines für die die zweite Nutzspannung vorgegebenen minimalen Nutzspannungsgrenzwerts durch die zweite Nutzspannung und ein Unterschreiten eines für den dritten Teilstrom vorgegebenen minimalen Teilstromgrenzwert durch den dritten Teilstrom detektiert. Nach einer anderen Weiterbildung dieser Ausgestaltung der Erfindung umfaßt die Feldgerät-Elektronik weiters wenigstens einen Komparator, der eine vom dritten Teilstrom des Versorgungsstroms abgeleitete Sensespannung mit einer zugehörigen Referenzspannung vergleicht und/oder einen Komparator, der die zweite Nutzspannung mit wenigstens einer zugehörigen Referenzspannung vergleicht.

Nach einer einundzwanzigsten Ausgestaltung der Erfindung umfaßt diese weiters dem Erzeugen von im wesentlichen stromproportionalen Sensespannung dienende Sensewiderstände.

Nach einer zweiundzwanzigsten Ausgestaltung der Erfindung umfaßt die Feldgerät-Elektronik weiters eine Meß- und Regeleinheit zum Erfassen und Einstellen von in der Feldgerät-Elektronik abfallenden Spannungen, insb. der zweiten Nutzspannung, und/ oder in der Feldgerät-Elektronik fließenden Strömen, insb. dem zweiten und/oder dritten Teilstrom. Nach einer Weiterbildung dieser Ausgestaltung der Erfindung steuert die Meß- und Regeleinheit den Spannungssteller so, daß der dritte Teilstrom fließt, wenn ein die zweite Nutzspannung mit wenigstens einer zugehörigen Referenzspannung vergleichender Komparator ein Überschreiten eines für die zweite Nutzspannung vorgegebenen maximalen Nutzspannungsgrenzwerts durch die zweite Nutzspannung signalisiert. Nach einer anderen Weiterbildung dieser Ausgestaltung der Erfindung stellt die Meß- und Regeleinheit anhand der Eingangsspannung und/oder der Klemmenspannung eine zwischen der Eingangsspannung und der Klemmenspannung bestehende Spannungsdifferenz auf eine vorgegebene

Spannungshöhe ein.

Nach einer dreiundzwanzigsten Ausgestaltung der Erfindung umfaßt die Feldgerät-Elektronik weiters wenigstens einen Komparator, der eine vom dritten Teilstrom des Versorgungsstroms abgeleitete Sensespannung mit einer zugehörigen Referenzspannung vergleicht, wobei der wenigstens eine Komparator für den dritten Teilstrom vom zweiten Nutzspannungsregler und/oder von der internen Betriebs- und Auswerteschaltung galvanisch getrennt gehalten ist.

Nach einer vierundzwanzigsten Ausgestaltung der Erfindung umfaßt die Feldgerät-Elektronik weiters wenigstens einen Komparator, der die zweite Nutzspannung mit wenigstens einer zugehörigen Referenzspannung vergleicht, wobei der wenigstens eine Komparator für die zweite Nutzspannung vom zweiten Nutzspannungsregler und/oder von der internen Betriebs- und Auswerteschaltung galvanisch getrennt gehalten ist.

Nach einer fünfundzwanzigsten Ausgestaltung der Erfindung umfaßt diese weiters eine Meß- und Regeleinheit zum Erfassen und Einstellen von in der Feldgerät-Elektronik abfallenden Spannungen, insb. der zweiten Nutzspannung, und/oder in der Feldgerät-Elektronik fließenden Strömen, insb. dem zweiten und/oder dritten Teilstrom und ist der zweite Nutzspannungsregler von der Meß- und Regeleinheit gesteuert. Dafür liefert die Meß- und Regeleinheit gemäß einer Weiterbildung der Erfindung zumindest zeitweise ein den zweite Nutzspannungsregler ansteuerndes Spannungssteuersignals liefert, das eine für die zweite Nutzspannung momentan einzustellende Spannungshöhe repräsentiert. Nach einer anderen Weiterbildung dieser Ausgestaltung der Erfindung ist vorgesehen, daß die Meß- und Regeleinheit und der zweite Nutzspannungsregler voneinander galvanisch getrennt sind. Dabei können die Meß- und Regeleinheit und der zweite Nutzspannungsregler beispielsweise mittels wenigstens eines Übertragers und/oder mittels wenigstens eines Optokopplers aneinander gekoppelt sein. Nach einer weiteren Weiterbildung dieser Ausgestaltung der Erfindung ist vorgesehen, daß die Meß- und Regeleinheit und die interne Betriebs- und Auswerteschaltung voneinander galvanisch getrennt sind. Dabei können die Meß- und Regeleinheit und die interne Betriebs- und Auswerteschaltung beispielsweise mittels wenigstens eines Übertragers und/oder mittels wenigstens eines Optokopplers miteinander gekoppelt sein.

Nach einer sechsundzwanzigsten Ausgestaltung der Erfindung ist die Feldgerät-Elektronik mit der externen elektrischen Energieversorgung lediglich über ein einziges Paar elektrischer Leitungen elektrisch verbunden.

Nach einer ersten Ausgestaltung des Feldgeräts der Erfindung kommuniziert das zumindest zeitweise mit einer vom Feldgerät entfernt angeordneten externen Steuer- und Kontroll-Einheit über ein Datenübertragungssystem, wobei in der Feldgerät-Elektronik dafür ferner eine die Kommunikation via Datenübertragungssystem kontrollierende Kommunikationsschaltung vorgesehen ist. Nach einer Weiterbildung dieser Ausgestaltung der Erfindung dient die erste Nutzspannung oder eine davon abgeteilte Sekundärspannung zumindest anteilig als Betriebsspannung für die Kommunikationsschaltung. Nach einer anderen Weiterbildung dieser Ausgestaltung der Erfindung sind der Stromsteller und die Kommunikationsschaltung voneinander galvanisch getrennt gehalten.

Nach einer zweiten Ausgestaltung des Feldgeräts gemäß der ersten Variante erzeugt die Betriebs- und Auswerteschaltung der Feldgerät-Elektronik mittels des wenigstens einen Meßsignals einen den wenigstens einen zu messenden und/oder zu überwachenden Parameter momentan, insb. digital, repräsentierenden Meßwert zumindest zeitweise. Nach einer Weiterbildung dieser Ausgestaltung der Erfindung stellt der Stromregler den Versorgungsstrom unter Berücksichtigung des den wenigstens einen zu messenden und/oder zu überwachenden Parameter momentan repräsentierenden Meßwerts ein. Nach einer anderen Weiterbildung dieser Ausgestaltung der Erfindung ist der Versorgungsstrom ein veränderlicher Gleichstrom und ist der Stromregler dafür ausgelegt, den Meßwert zumindest zeitweise einer Amplitude des Versorgungsstroms auf zu modulieren.

Nach einer dritten Ausgestaltung des Feldgeräts gemäß der ersten Variante ist der Versorgungsstrom zumindest zeitweise ein getakteter Strom ist und wobei der Stromregler dafür ausgelegt, den Versorgungsstrom zu takten.

Nach einer vierten Ausgestaltung des Feldgeräts gemäß der ersten Variante umfaßt die Betriebs- und Auswerteschaltung wenigstens eine Treiberschaltung für den Meßaufnehmer, bei der die zweite Nutzspannung oder eine davon abgeleitet Sekundärspannung zumindest anteilig als Betriebsspannung dient. Nach einer Weiterbildung dieser Ausgestaltung der Erfindung weist die Treiberschaltung wenigstens Operations-Verstärker auf. Nach einer anderen Weiterbildung dieser Ausgestaltung der Erfindung weist die Treiberschaltung wenigstens einen D/ A-Wandler und/oder wenigstens einen Signalgenerator zum Erzeugen des Treibersignals auf. Gemäß einer nächsten Weiterbildung dieser Ausgestaltung der Erfindung weist der Meßaufnehmer eine von der Treiberschaltung gespeiste, insb. veränderliche, elektrische Impedanz auf, insb. eine Magnetspule von veränderlicher Induktivität und/oder einen Meßkondensator von veränderlicher Kapazität. Weiters ist vorgesehen daß sich die elektrische Impedanz des Meßaufnehmers in Abhängigkeit vom wenigstens eine zu messenden und/oder zu überwachenden Parameter verändert. Ferner ist vorgesehen, daß eine über der sich ändernden elektrischen Impedanz abfallende Signalspannung und/oder ein durch die sich ändernden elektrische Impedanz fließender Signalstrom als Meßsignal dient.

Nach einer fünften Ausgestaltung des Feldgeräts gemäß der ersten Variante weist die Betriebs- und Auswerteschaltung wenigstens einen A/D-Wandler für das wenigstens eine Aufnehmersignal auf, bei dem die erste Nutzspannung oder eine davon abgeleitet Sekundärspannung zumindest anteilig als Betriebsspannung dient. Nach einer Weiterbildung dieser Ausgestaltung der Erfindung weist die Betriebs- und Auswerteschaltung wenigstens einen mit dem A/D-Wandler verbundenen, insb. mittels eines Mikroprozessors und/oder eines Signalprozessor gebildeten, Mikrocomputer für das Generieren des Meßwerts auf, wobei die erste Nutzspannung zumindest anteilig als eine Betriebsspannung des Mikrocomputers dient.

Nach einer sechsten Ausgestaltung des Feldgeräts gemäß der ersten Variante umfaßt der Meßaufnehmer wenigstens ein in den Verlauf einer Rohrleitung eingesetztes, insb. im Betrieb zumindest zeitweise vibrierendes, Meßrohr zum Führen des Mediums. Nach einer Weiterbildung dieser Ausgestaltung der Erfindung ist am Meßaufnehmer wenigstens eine Magnetspule zum Erzeugen eines, insb. veränderlichen, Magnetfeldes angeordnet. Nach einer Ausgestaltung dieser Weiterbildung der Erfindung ist die Magnetspule im Betrieb des Meßaufnehmers zumindest zeitweise von einem das Magnetfeld generierenden, insb. bipolaren und/ oder in einer Stromstärke veränderlichen, Erregerstrom durchflossen, der von der zweiten Nutzspannung oder eine davon abgeleitet Sekundärspannung getrieben ist. Nach einer anderen Ausgestaltung dieser Weiterbildung der Erfindung steht die Magnetspule via Magnetfeld mit einem Tauchanker in Wechselwirkung, und wobei Magnetfeldspule und Tauchanker relative zueinander beweglich sind. Nach einer weiteren Ausgestaltung dieser Weiterbildung der Erfindung vibriert das wenigstens eine Meßrohr des Meßaufnehmers, angetrieben von einer mittels der Magnetfeldspule und dem Tauchanker gebildeten elektro-mechanischen, insb. elektro-dynamischen, Erregeranordnung, im Betrieb des Meßaufnehmers zumindest zeitweise.

Nach einer anderen Weiterbildung des Feldgeräts gemäß der ersten Variante umfaßt der Meßaufnehmer zwei in den Verlauf den Rohrleitung eingesetzte, im Betrieb zumindest zeitweise vibrierende Meßrohre zum Führen des Mediums.

Nach einer siebenten Ausgestaltung des Feldgeräts gemäß der ersten Variante dient der Meßaufnehmer dem Erfassen wenigstens eines Parameters von einem das Medium vorhaltenden Behälter, insb. einem Füllstand, und umfaßt der Meßaufnehmer dafür wenigstens eine in ein Lumen des Behälters hineinragende oder zumindest mit dem Lumen kommunizierende Meßsonde, insb. eine Mikrowellenantenne, eine Gouboun-Leitung, einen vibrierenden Tauchkörper oder dergleichen.

Nach einer achten Ausgestaltung des Feldgeräts gemäß der ersten Variante ist die Feldgerät-Elektronik mit der externen elektrischen Energieversorgung lediglich über ein einziges Paar elektrischer Leitungen elektrisch verbunden und überträgt die Feldgerät-Elektronik den zumindest zeitweise erzeugten, den wenigstens einen zu messenden und/oder zu überwachenden Parameter momentan, insb. digital, repräsentierenden Meßwert über das einzige Paar elektrischer Leitungen an eine in der externen elektrischen Energieversorgung vorgesehene und/oder mit dieser elektrisch gekoppelte Auswerteschaltung. Nach einer Weiterbildung dieser Ausgestaltung der Erfindung repräsentiert eine momentane, insb. auf einen zwischen 4 mA und 20 mA liegenden Wert eingestellte, Stromstärke des Versorgungsstroms den momentan erzeugten Meßwert.

Ein Grundgedanke der Erfindung besteht darin, in der Feldgerät-Elektronik vorgesehene Verbraucher - abgesehen von der Versorgungsschaltung selbst - einerseits zumindest in eine erste Gruppe elektrischer Schaltungen oder Verbraucher von höhere Priorität und in eine zweite Gruppe elektrischer Schaltungen oder Verbraucher von niederer Priorität zu unterteilen, und anderseits die Versorgungsschaltung so auszulegen, daß im Normalbetrieb des Feldgeräts zumindest der Leistungs- bzw. Energiebedarf der ersten Gruppe elektrischer Schaltungen stets gedeckt ist. Darüber hinaus können solche Schaltungen oder Komponenten, die vornehmlich dazu dienen, elektrische Energie intern im Feldgerät zu speichern und/oder elektrischer Energie aus dem Feldgerät heraus dissipieren zu lassen, einer dritten Gruppe elektrischer Verbraucher zugeordnet werden, die lediglich bei einer ausreichenden Versorgung der ersten und zweiten Gruppe elektrischer Verbraucher stromdurchflossen und somit mit elektrischer Energie versorgt ist.

Der erste Gruppe elektrischer Schaltungen von höhere Priorität sind vorteilhafter in Weise u.a. der wenigstens eine in der Feldgerät-Elektronik vorgesehene Mikroprozessor sowie die der Kommunikation mit allfälligen übergeordneten Steuer- und Kontrolleinheiten dienenden Kommunikationsschaltungen zugeordnet. Dies hat den Vorteil, daß das Feldgerät einerseits permanent in Funktion und anderseits zumindest auch permanent on-line gehalten werden kann. Ferner kann, für den Fall, daß es sich bei dem Feldgerät um ein Meßgerät handelt, auch der der Erfassung und Aufbereitung des wenigstens einen Meßsignals dienende Meßkanal überwiegend der ersten Gruppe elektrischer Schaltungen zugeordnet werden, während allfällig vorhandene, vornehmlich dem Betreiben des elektrisch-physikalischen Meßaufnehmers dienende Erregerkanäle als elektrische Schaltungen von niedere Priorität realisiert werden. Dies hat bei Verwendung der erfindungsgemäßen Feldgerät-Elektronik in einem Meßgerät mit einem Meßaufnehmer vom Vibrationstyp im besonderen den Vorteil, daß praktisch der gesamte, von den Schwingungssensoren bis zum Mikroprozessor verlaufende Meßkanal mit der im wesentlichen konstant geregelten ersten Nutzspannung betrieben und somit im Normalbetrieb permanent mit der erforderlichen elektrischen Leistung versorgt werden kann. Dies hat den Vorteil, daß insoweit die betriebsgemäß erzeugten Meßrohrschwingungen stets gleichermaßen hochfrequent abgetastet und auch hoch aufgelöst verarbeitet werden können. Ferner kann, selbst wenn der Erregerkanal teilweise oder ausschließlich mit der variablen zweiten Nutzspannung betrieben wird, das Meßrohr im Normalbetrieb - wenn auch mit ggf. schwankender Schwingungsamplitude - praktisch lückenlos, also permanent angeregt werden. Die Erfindung basiert u.a. auf der Erkenntnis, daß weder das temporäre Abschalten des Mikroprozessors, noch das lückende Betreiben beispielsweise des Erregerkanals erhebliche Verbesserungen in der Energiebilanz des Feldgeräts bewirken kann. Vielmehr kommt es darauf an, einerseits die für den Betrieb des Feldgeräts und ggf. die Kommunikation vitalen Komponenten möglichst permanent und ausreichend mit Energie zu versorgen und anderseits, falls erforderlich, eher weniger essentielle Komponenten ggf. unterzuversorgen oder abzuschalten. Ferner hat sich gezeigt, daß es - besonders auch bei kontinuierlich oder zumindest quasi kontinuierlich messenden Feldgeräten, beispielsweise Coriolis-Massendurchfluß-Meßgeräten, - weitaus lohnender sein kann, die verfügbare elektrische Energie vorrangig in den wenigstens einen Mikroprozessor, insb. die Meßwertverarbeitung und -auswertung zu investieren, als beispielsweise in die Erregeranordnung des Sensorsystems, und entsprechend nur mit der übrigen verfügbaren Energie zu betreiben. Auf diese Weise kann zwar nicht immer ein optimales Signal-zu-Rausch-Verhältnis für das vom Meßaufnehmer geliefert Meßsignal erzielt werden, das ggf. vorhandene Defizit der Qualität des Meßsignals kann jedoch durch die Meßwertverarbeitung und -auswertung ohne weiteres ausgeglichen werden, die vom nach wie vor effizient operierenden Mikroprozessor realisiert ist.

Infolge dessen, daß der zweite Nutzspannungsregler von der vom ersten Nutzspannungsregler gelieferten Nutzspannung oder/und einer davon abgeleiteten Sekundärspannung gespeist ist, kann zudem durch einige wenige Übertrager und ggf. einige wenige Optokoppler auf sehr einfache und kostengünstige Weise eine sehr effektive galvanische Trennung zwischen einzelnen Komponenten oder Baugruppen der Feldgerät-Elektronik geschaffen werden. Dies im besonderen auch dann, wenn zwischen den vorgenannten Gruppen elektrischer Schaltungen unterschiedlicher Priorität eine entsprechende galvanische Trennung vorgenommen werden soll und/ oder die Felgerät-Elektronik modular aufgebaut sein soll.

Ein weiterer Vorteil einer solchen kaskadierten Verschaltung der beiden Nutzspannungsregler ist des weiteren auch darin zu sehen, daß zumindest die eingangs der Feldgerät-Elektronik vorgesehenen Baugruppen oder Komponenten trotzdem auch für eine Vielzahl von Typen von, insb. auch diversitären, Feldgeräten verwendet werden kann, insb. auch dann, wenn einzelne Baugruppen oder Komponenten modular zusammengefaßt und/oder voneinander galvanisch getrennt ausgeführt sind. Beispielsweise kann so ein mittels der eingangs vorgesehenen Baugruppen oder Komponenten gebildetes Eingangsmodul von einem zumindest Teile der Auswerte- und Betriebsschaltung, insb. die darin vorgesehene Treiberschaltung, umfassenden Schaltungsmodul auf einfache, energiesparende Weise galvanisch getrennt gehalten werden.

Ein weiterer Vorteil der Erfindung besteht darin, daß das Feldgerät aufgrund der für seinen Betrieb erforderlichen Kleinleistung die Vorschriften der verschiedenen Explosionsschutz-Klassen ohne weiteres einhalten kann. Dadurch ist Feldgerät in besonderer Weise auch für einen Einsatz in solchen explosionsgefährdeten Umgebungen geeignet, in denen lediglich Geräte von intrinsischer Sicherheit erlaubt sind. Ferner kann das Feldgerät dabei so ausgebildet werden, daß es mit einem der üblichen Feldbusse zusammenarbeiten kann. Dies kann einerseits durch direkten Anschluss an den Feldbus, z. B. entsprechend dem FIELDBUS-Protokoll, erfolgen (FIELDBUS ist eine eingetragene Marke der FIELDBUS FOUNDATION). Andererseits kann das Zusammenarbeiten mittels eines Buskopplers, z. B. entsprechend dem sogenannten HART-Protokoll, indirekt erfolgen (HART ist eine eingetragene Marke der HART User Group).

Die Erfindung wird nun anhand von Ausführungsbeispielen sowie den Figuren der Zeichnung näher erläutert. Funktionsgleiche Teile sind in den einzelnen Figuren mit denselben Bezugszeichen versehen, die jedoch in nachfolgenden Figuren nur dann wiederholt sind, wenn es sinnvoll erscheint.

Fig. 1 zeigt perspektivisch in einer Seitenansicht ein Feldgerät sowie eine mit diesem über eine Paar elektrische Leitungen elektrisch verbundene externe Energieversorgung,

Fig. 2 zeigt teilweise geschnitten ein Ausführungsbeispiel eines für das Feldgerät von Fig. 1 geeigneten Meßaufnehmers vom Vibrations-Typ perspektivisch in einer ersten Seitenansicht,

Fig. 3 zeigt den Meßaufnehmer von Fig. 2 perspektivisch in einer zweiten Seitenansicht,

Fig. 4 zeigt ein Ausführungsbeispiel einer elektromechanischen Erregeranordnung für den Meßaufnehmer von Fig. 2,

Fig. 5 zeigt nach Art eines Blockschaltbildes eine für die Verwendung in einem Feldgerät, insb. einem Zweileiter-Feldgeräte, geeignete Feldgerät-Elektronik,

Fign. 6 bis 8 zeigen teilweise nach Art eines Blockschaltbilds Schaltbilder von Ausführungsbeispielen einer für die Verwendung in einem Feldgerät gemäß Fig. 1 mit einem Meßaufnehmer vom Vibrationstyp gemäß den Fig. 2 bis 4 geeignete Erreger-Schaltung,

Fig. 9 bis 12 zeigen Schaltbilder von Ausführungsbeispielen von für die Erregerschaltungen nach den Fign. 6 bis 8 geeignete Endstufen,

Fig. 13 zeigt schematisch Abhängigkeiten von Teil-Spannungen in der Feldgerät-Elektronik gemäß Fig. 5.

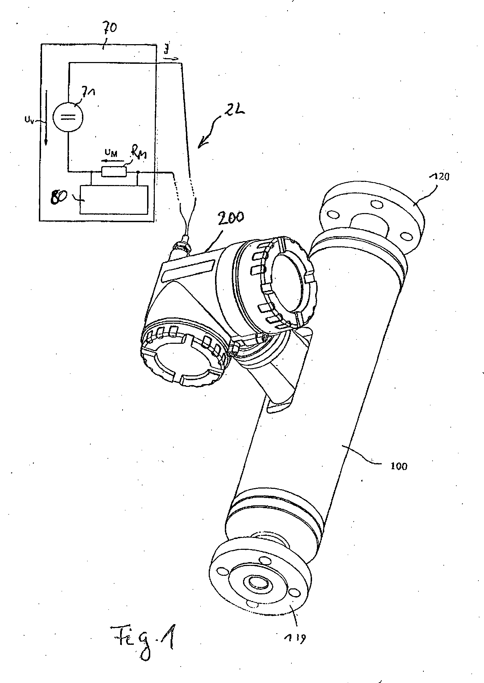

In den Fig. 1 ist ein Ausführungsbeispiel eines für die Verwendung in der industriellen Meß- und Automatisierungstechnik geeigneten Feldgeräts mit einer Feldgerät-Elektronik 20 gezeigt, die von einer externen elektrischen Energieversorgung 70 gespeist ist. Im Betrieb stellt die externe elektrische Energieversorgung 70 eine, insb. uni-polare, Versorgungsspannung Uᵥ bereit und liefert die externe elektrische Energieversorgung 70 damit einhergehend einen von der Versorgungsspannung Uᵥ entsprechend getriebenen veränderlichen, insb. binären, Versorgungsstrom I. Dafür ist die Feldgerät-Elektronik im Betrieb mit der externen elektrischen Energieversorgung 70 über wenigstens ein Paar elektrische Leitungen 2L elektrisch verbunden. Infolge der zwischen externer Energieversorgung 70 und Eingang der Feldgerät-Elektronik 20 naturgemäß auftretenden Spannungsfälle wird die Versorgungsspannung Uᵥ auf diesem Wege allerdings noch zur eingangs der Feldgerät-Elektronik tatsächlich anliegenden Klemmenspannung Uₖ reduziert.

Nach einer Ausgestaltung der Erfindung ist die Feldgeräte-Elektronik so ausgelegt und bemessen, daß eine maximal umgesetzte elektrische Leistung kleiner oder höchstens gleich 1 W ist. Nach einer anderen Ausgestaltung der Erfindung ist die Feldgerät-Elektronik so ausgelegt und bemessen, daß das Feldgerät soweit eigensicher ist, daß es im Sinne eines Explosionsschutzes den, beispielsweise in den Europäischen Normen EN 50 014 und EN 50 020 aufgestellten, Anforderungen an eine intrinsische Explosionssicherheit (Ex-i) genügt.

Das Feldgerät dient gemäß einer weiteren Ausgestaltung der Erfindung dazu, wenigstens einen vorgegebenen physikalischen und/oder chemischen Parameter, wie z.B. einem Durchfluß, einer Dichte, einer Viskosität, einem Füllstand, einem Druck, einer Temperatur, einem pH-Wert oder dergleichen, eines in einer Rohrleitung und/ oder einem Behälter geführten Mediums, insb. eines Gases und/oder einer Flüssigkeit, zu messen und/oder zu überwachen sowie wiederholt diesen Parameter entsprechend repräsentierenden Meßwert zu liefern. Dafür umfaßt das Feldgerät ferner einen mit der Feldgerät-Elektronik elektrisch gekoppelten physikalisch-elektrischen Meßaufnehmer, der auf Änderungen des wenigstens einen Parameters reagiert und zumindest zeitweise wenigstens ein mit dem Parameter korrespondierendes Meßsignal, insb. eine veränderliche Signalspannung und/oder einen veränderlichen Signalstrom, abgibt. Alternativ oder in Ergänzung dazu kann im Feldgerät ein mit der Feldgerät-Elektronik elektrisch gekoppeltes elektrisch-physikalisches Stellglied vorgesehen sein, das auf Änderungen wenigstens eines angelegten Steuersignals, insb. eine veränderliche Signalspannung und/oder einen veränderlichen Signalstrom, mit einer den einzustellenden Parameter beeinflussenden Verstellbewegung des Stellglieds reagiert, oder anders gesagt kann das Feldgerät beispielsweise auch so konzipiert sein, daß es dem Einstellen wenigstens eines solchen physikalischen und/oder chemischen Parameters des Mediums dient. Zum Steuern des Feldgeräts, insb. auch zum Ansteuern des erwähnten Meßaufnehmer oder zum Ansteuern des erwähnten Stellglieds, ist in der Feldgerät-Elektronik ferner eine interne Betriebs- und Auswerteschaltung 50 vorgesehen. Für den Fall, daß es sich bei dem Feldgerät um ein dem Messen des wenigstens einen vorgegebenen physikalischen und/oder chemischen Parameter dienendes Meßgerät handelt, ist ferner vorgesehen, daß die Betriebs- und Auswerteschaltung 50 den wenigstens einen Meßwert bzw. eine Vielzahl von entsprechende Meßwerten für den Parameter ermittelt.

Bei dem im in Fig. 1 gezeigten Feldgerät handelt es sich um ein In-Line-Meßgerät, das im besonderen dazu dient, Parameter, z.B. einen Massedurchfluß, eine Dichte und/ oder eine Viskosität, eines in einer - hier nicht dargestellte - Rohrleitung strömenden Mediums, insb. eines Gases und/oder einer Flüssigkeit, zu erfassen und in einen diesen Parameter momentan repräsentierenden Meßwert X_{M} abzubilden. Demgemäß kann das Feldgerät beispielsweise ein Coriolis-Massedurchflußmeßgerät, ein Dichte-Meßgerät, oder auch ein Viskositäts-Meßgerät sein. Zum Erzeugen des wenigstens einen Meßsignals umfaßt das hier gezeigte Feldgerät einen innerhalb eines entsprechenden Meßaufnehmer-Gehäuses 100 untergebrachten, Meßaufnehmer 10 vom Vibrationstyp sowie einer in einem Elektronik-Gehäuse 200 dargestellt, in dem die mit dem Meßaufnehmer 10 in geeigneter Weise elektrisch verbundene Feldgerät-Elektronik 20 untergebracht ist.

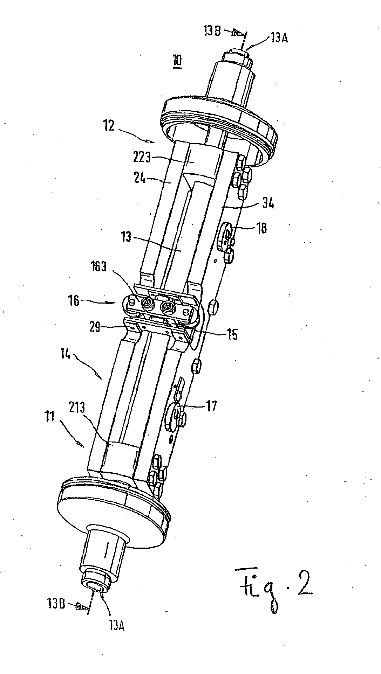

In den Fig. 2 bis 4 ist ein Ausführungsbeispiel für einen solchen Meßaufnehmer gezeigt, dessen Aufbau und Wirkungsweise im übrigen z.B. auch in der US-A 60 06 609 ausführlich beschrieben ist. Es sei jedoch bereits an dieser Stelle darauf hingewiesen, daß, obwohl es sich bei dem im Ausführungsbeispiel vorgestellten Feldgerät um ein In-Line-Meßgerät mit einem Meßaufnehmer vom Vibrationstyp handelt, die Erfindung selbstverständlich auch in anderen Feldgeräten, beispielsweise solchen In-Line-Meßgeräten mit magnetisch-induktivem Meßaufnehmer oder mit akustischem Meßaufnehmer, umgesetzt werden kann. Gleichermaßen kann die vorliegende Erfindung auch in Feldgeräten eingesetzt werden, die Messen von Parametern dienen, wie sie im Zusammenhang mit Medien vorhaltenden Behältern ermittelt werden, beispielsweise einem Füllstand und/oder einem Grenzstand. Derartige Feldgeräte sind üblicherweise mittels solcher Meßaufnehmer realisiert, die wenigstens eine in ein Lumen des Behälters hineinragende oder zumindest mit dem Lumen kommunizierende Meßsonde, beispielsweise eine Mikrowellenantenne, eine Gouboun-Leitung, einen vibrierenden Tauchkörper oder dergleichen, aufweisen.

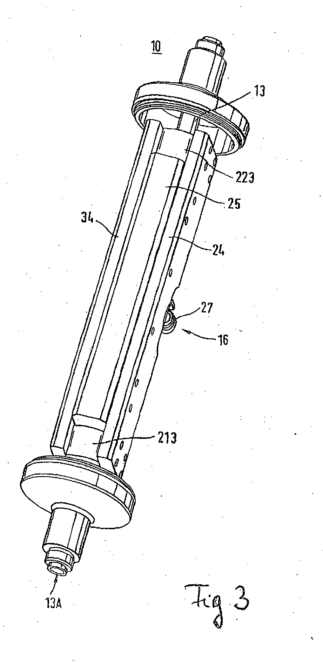

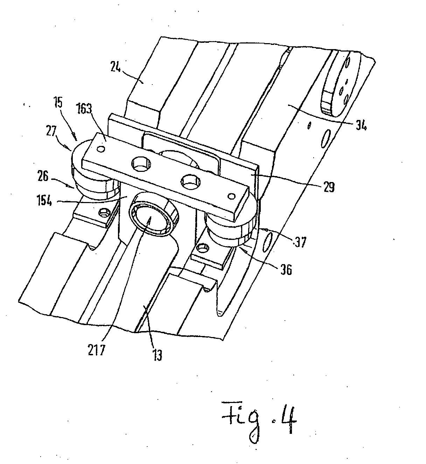

Zum Führen des zu messenden Mediums umfaßt der Meßaufnehmer 10 des Ausführungsbeispiels gemäß den Fig. 2 bis 4 wenigstens ein ein Einlaßende 11 und ein Auslaßende 12 aufweisendes Meßrohr 13 von vorgebbarem, im Betrieb elastisch verformbarem Meßrohrlumen 13A und von vorgebbarer Nennweite. Elastisches Verformen des Meßrohrlumens 13A bedeutet hier, daß zum Erzeugen der oben bereits erwähnten, mediumsinternen und somit das Medium beschreibenden Reaktionskräften eine Raumform und/oder eine Raumlage des Meßrohrlumens 13A innerhalb eines Elastizitätsbereiches des Meßrohrs 13 in vorgebbarer Weise zyklisch, insb. periodisch, verändert wird, vgl. z.B. die US-A 48 01 897, die US-A 56 48 616, die US-A 57 96 011 oder die US-A 60 06 609. Falls erforderlich, kann das Meßrohr, wie z.B. in der EP-A 1 260 798 gezeigt, beispielsweise auch gebogen sein. Darüber hinaus ist z.B. auch möglich, anstelle eines einzigen Meßrohrs, zwei gebogene oder gerade Meßrohre zu verwenden. Weitere geeignete Ausführungsformen für solche Meßaufnehmer vom Vibrationstyp sind z.B. in der US-B 67 11 958, der US-B 66 91 583, der US-B 66 66 098, der US-A 53 01 557, der US-A 53 57 811, der US-A 55 57 973, der US-A 56 02 345, der US-A 56 48 616 oder der US-A 57 96 011 ausführlich beschrieben. Als Material für das in den Fig. 3 und 4 gerade Meßrohr 13 sind z.B. Titanlegierungen besonders geeignet. Anstelle von Titanlegierungen können aber auch andere für derartige, insb. auch für gebogene, Meßrohre üblicherweise verwendete Materialien wie z.B. rostfreier Stahl, Tantal oder Zirconium etc. verwendet werden.

Das Meßrohr 13, das in der üblichen Weise einlaßseitig und auslaßseitig mit der das Medium zu- bzw. abführenden Rohrleitung kommuniziert, ist in einen starren, insb. biege- und verwindungssteifen, und vom Meßaufnehmer-Gehäuse 100 umhüllten, Tragrahmen 14 schwingfähig eingespannt. Der Tragrahmen 14 ist am Meßrohr 13 einlaßseitig mittels einer Einlaßplatte 213 und auslaßseitig mittels einer Auslaßplatte 223 fixiert, wobei letztere beide jeweils von entsprechenden Verlängerungsstücken 131, 132 des Meßrohrs 13 durchstoßen sind. Ferner weist der Tragrahmen 14 eine erste Seitenplatte 24 und eine zweite Seitenplatte 34 auf, welche beiden Seitenplatten 24, 34 jeweils derart an der Einlaßplatte 213 und an der Auslaßplatte 223 fixiert sind, daß sie praktisch parallel zum Meßrohr 13 verlaufen und von diesem sowie voneinander beabstandet angeordnet sind, vgl. Fig. 3. Somit sind einander zugewandte Seitenflächen der beiden Seitenplatten 24, 34 ebenfalls parallel zueinander. Ein Längsstab 25 ist an den Seitenplatten 24, 34, vom Meßrohr 13 beabstandet, fixiert, der als Schwingungen des Meßrohrs 13 tilgende Auswuchtmasse dient. Der Längsstab 25 erstreckt sich, wie in Fig. 4 dargestellt ist, praktisch parallel zur gesamten schwingfähigen Länge des Meßrohrs 13; dies ist jedoch nicht zwingend, der Längsstab 25 kann selbstverständlich, falls erforderlich, auch kürzer ausgeführt sein. Der Tragrahmen 14 mit den beiden Seitenplatten 24, 34, der Einlaßplatte 213, der Auslaßplatte 223 und dem Längsstab 25 hat somit eine Längsschwerelinie, die praktisch parallel zu einer das Einlaßende 11 und das Auslaßende 12 virtuell verbindenden Meßrohr-Mittelachse 13B verläuft. In den Fig. 3 und 4 ist durch die Köpfe der gezeichneten Schrauben angedeutet, daß das erwähnte Fixieren der Seitenplatten 24, 34 an der Einlaßplatte 213, an der Auslaßplatte 223 und am Längsstab 25 durch Verschrauben erfolgen kann; es können aber auch andere geeignete und dem Fachmann geläufige Befestigungsarten angewendet werden. Für den Fall, daß der Meßaufnehmer 10 lösbar mit der Rohrleitung zu montieren ist, ist dem Meßrohr 13 einlaßseitig ein erster Flansch 119 und auslaßseitig ein zweiter Flansch 120 angeformt, vgl. Fig. 1; anstelle der Flansche 19, 20 können aber z.B. auch andere Rohrleitungs-Verbindungsstücke zur lösbaren Verbindung mit der Rohrleitung angeformt sein, wie z.B. die in Fig. 3 angedeuteten sogenannten Tridamp-Anschlüsse. Falls erforderlich kann das Meßrohr 13 aber auch direkt mit der Rohrleitung, z.B. mittels Schweißen oder Hartlötung etc. verbunden werden bzw. sein

Zum Erzeugen der erwähnten Reaktionskäfte im Medium wird das Meßrohr 13 im Betrieb des Meßaufnehmers 10, angetrieben von einer mit dem Meßrohr gekoppelten elektro-mechanischen Erregeranordnung 16, bei einer vorgebbaren Schwingfrequenz, insb. einer natürlichen Resonanzfrequenz, im so genannten Nutzmode vibrieren gelassen und somit in vorgebbarer Weise elastisch verformt. Wie bereits erwähnt, ist diese Resonanzfrequenz auch von der momentanen Dichte des Fluids abhängig. Im gezeigten Ausführungsbeispiel wird das vibrierende Meßrohr 13, wie bei solchen Meßaufnehmern vom Vibrationstyp üblich, aus einer statischen Ruhelage räumlich, insb. lateral, ausgelenkt; gleiches gilt praktisch auch für solche Meßaufnehmer, bei denen ein oder mehrere gebogene Meßrohre Auslegerschwingungen um eine entsprechende, das jeweilige Einlaß- und Auslaßende virtuell verbindende, gedachte Längsachse ausführen, oder auch für solche Meßaufnehmer, bei denen ein oder mehre gerade Meßrohre lediglich ebene Biegeschwingungen um ihre Meßrohrlängsachse ausführen. In einem weiteren Fall, daß als Meßaufnehmer 10, wie z.B. in der erwähnten WO-A 95/16 897 beschrieben, peristaltische Radialschwingungen ausführt, so daß der Querschnitt des vibrierenden Meßrohrs in der dafür üblichen Weise symmetrisch verformt wird, verbleibt die Meßrohrlängsachse in ihrer statischen Ruhelage.

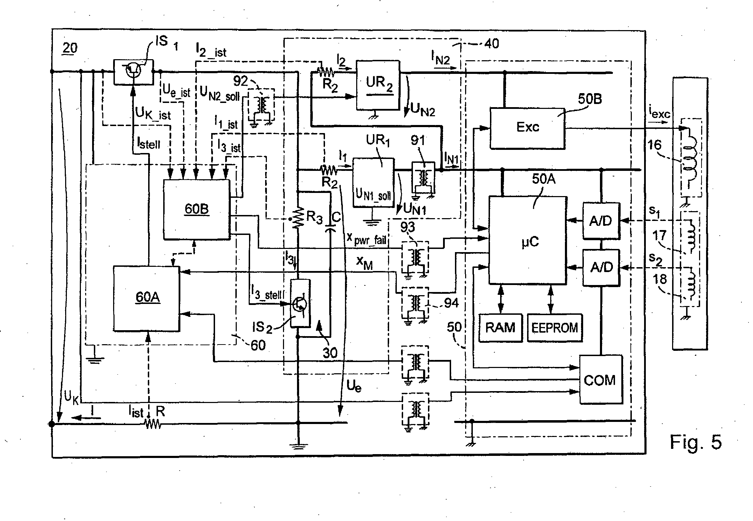

Die Erregeranordnung 16 dient dazu, unter Umsetzung einer von der Betriebs- und Auswerteschaltung 50 inform eines elektrischen Treibersignals eingespeisten elektrischen Erregerleistung P_{exc} eine auf das Meßrohr 13 einwirkende Erregerkraft F_{exc} zu erzeugen. Die Erregerleistung P_{exc} dient bei Erregung auf einer natürlichen Resonanzfrequenz praktisch lediglich zur Kompensation des über mechanische und fluidinterne Reibung dem Schwingungssystem entzogenen Leistungsanteils. Zur Erzielung eines möglichst hohen Wirkungsgrades ist die Erregerleistung P_{exc} daher möglichst genau so eingestellt, daß im wesentlichen die Schwingungen des Meßrohrs 13 im gewünschten Nutzmode, z.B. die einer Grund-Resonanzfrequenz, aufrecht erhalten werden. Zum Zwecke des Übertragens der Erregerkraft F_{exc} auf das Meßrohr 13 weist die Erregeranordnung 16, wie in Fig. 4 dargestellt ist, eine starre, elektromagnetisch und/oder elektrodynamisch angetriebene Hebelanordnung 15 mit einem am Meßrohr 13 biegefest fixierten Ausleger 154 und mit einem Joch 163 auf. Das Joch 163 ist an einem vom Meßrohr 13 beabstandeten Ende des Auslegers 154 ebenfalls biegefest fixiert, und zwar so, daß es oberhalb des Meßrohrs 13 und quer zu ihm angeordnet ist. Als Ausleger 154 kann z.B. eine metallische Scheibe dienen, die das Meßrohr 13 in einer Bohrung aufnimmt. Für weitere geeignete Ausführungen der Hebelanordnung 15 sei an dieser Stelle auf die bereits erwähnte US-A 60 06 609 verwiesen. Die Hebelanordnung 15 ist T-förmig und so angeordnet, vgl. Fig. 4, daß sie etwa in der Mitte zwischen Einlaß- und Auslaßende 11, 12 auf das Meßrohr 13 einwirkt, wodurch dieses im Betrieb mittig seine größte laterale Auslenkung erfährt. Zum Antreiben der Hebelanordnung 15 umfaßt die Erregeranordnung 16 gemäß Fig. 4 eine erste Magnetspule 26 und einen zugehörigen ersten dauermagnetischen Anker 27 sowie eine zweite Magnetspule 36 und einen zugehörigen zweiten dauermagnetischen Anker 37. Die beiden, elektrisch bevorzugt in Reihe geschalteten, Magnetspulen 26, 36 sind beiderseits des Meßrohrs 13 unterhalb des Jochs 163 am Tragrahmen 14, insb. lösbar, so fixiert, daß sie mit ihrem jeweils zugehörigen Anker 27 bzw. 37 im Betrieb in Wechselwirkung stehen. Die beiden Magnetspulen 26, 36, können, falls erforderlich, selbstverständlich auch einander parallelgeschaltet sein. Wie in Fig. 3 und 5 dargestellt ist, sind die beiden Anker 27, 37 derart voneinander beabstandet am Joch 163 fixiert, daß im Betrieb des Meßaufnehmers 10 der Anker 27 praktisch von einem Magnetfeld der Magnetspule 26 und der Anker 37 praktisch von einem Magnetfeld der Magnetspule 36 durchsetzt und aufgrund entsprechender elektrodynamischer und/oder elektromagnetischer Kraftwirkungen, , insb. in die jeweils zugehörige Magnetspule eintauchend, bewegt wird. Die mittels der Magnetfelder der Magnetspulen 26, 36 erzeugten Bewegungen der, insb. als auch Tauchanker wirkenden, Anker 27, 37 werden vom Joch 163 und vom Ausleger 154 auf das Meßrohr 13 übertragen. Diese Bewegungen der Anker 27, 37 relativ zur jeweils zugehörigen Magnetspule sind so ausgebildet, daß das Joch 163 alternierend in Richtung der Seitenplatte 24 oder in Richtung der Seitenplatte 34 aus seiner Ruhelage ausgelenkt wird. Eine entsprechende, zur bereits erwähnten Meßrohr-Mittelachse 13B parallele Drehachse der Hebelanordnung 15 kann z.B. durch den Ausleger 154 verlaufen. Der als Trägerlement für die Erregeranordnung 16 dienende Tragrahmen 14 umfaßt ferner eine mit den Seitenplatten 24, 34, insb. lösbar, verbundene Halterung 29 zum Haltern der Magnetspulen 26, 36 und ggf. einzelner Komponenten einer weiter unten genannten Magnetbremsanordnung 217.

Beim Meßaufnehmer 10 des Ausführungsbeispiels bewirken die lateralen Auslenkungen des am Einlaßende 11 und am Auslaßende 12 fest eingespannten, vibrierenden Meßrohrs 13 gleichzeitig eine elastische Verformung seines Meßrohrlumens 13A, die praktisch über die gesamte Länge des Meßrohrs 13 ausgebildet ist. Ferner wird im Meßrohr 13 aufgrund eines über die Hebelanordnung 15 auf dieses wirkenden Drehmoments gleichzeitig zu den lateralen Auslenkungen zumindest abschnittsweise eine Verdrehung um die Meßrohr-Mittelachse 13B erzwungen, so daß das Meßrohr 13 praktisch in einem als Nutzmode dienenden gemischten Biegeschwingungs-Torsionsmode schwingt. Die Verdrehung des Meßrohrs 13 kann dabei so ausgebildet sein, daß eine laterale Auslenkung des vom Meßrohr 13 beabstandeten Endes des Auslegers 154 entweder gleich- oder entgegengerichtet zur lateralen Auslenkung des Meßrohrs 13 ist. Das Meßrohr 13 kann also Torsionsschwingungen in einem dem gleich-gerichteten Fall entsprechenden ersten Biegeschwingungs-Torsionsmode oder in einem dem entgegengerichtet Fall entsprechenden zweiten Biegeschwingungs-Torsionsmode ausführen. Dann ist beim Meßaufnehmer 10 gemäß dem Ausführungsbeispiel die natürliche Grund-Resonanzfrequenz des zweiten Biegeschwingungs-Torsionsmodes von z.B. 900 Hz annährend doppelt so hoch wie die des ersten Biegeschwingungs-Torsionsmodes. Für den Fall, daß das Meßrohr 13 betriebsmäßig Schwingungen lediglich im zweiten Biegeschwingungs-Törsionsmode ausführen soll, ist eine auf dem Wirbelstromprinzip beruhende Magnetbremsanordnung 217 in die Erregeranordnung 16 integriert, die dazu dient, die Lage der erwähnten Drehachse zu stabilisieren. Mittels der Magnetbremsanordnung 217 kann somit sichergestellt werden, daß das Meßrohr 13 stets im zweiten Biegeschwingungs-Torsionsmode schwingt und somit allfällige äußere Störeinflüsse auf das Meßrohr 13 nicht zu einem spontanen Wechsel in einen anderen, insb. nicht in den ersten, Biegeschwingungs-Torsionsmode führen. Einzelheiten einer solchen Magnetbremsanordnung sind in der US-A 60 06 609 ausführlich beschrieben.

Zum Vibrierenlassen des Meßrohrs 13 wird die Erregeranordnung 16 im Betreib mittels eines gleichfalls oszillierenden Erregerstroms i_{exc}, insb. von einstellbarer Amplitude und von einstellbarer Erregerfrequenz f_{exc}, derart gespeist, daß die Magnetspulen 26, 36 im Betrieb von diesem durchflossen sind und in entsprechender Weise die zum Bewegen der Anker 27, 37 erforderlichen Magnetfelder erzeugt werden. Der Erregerstrom i_{exc} wird, wie in Fig. 2 schematisch dargestellt, von einer in der Feldgerät-Elektronik 20 ferner vorgesehenen Treibereinheit 50B geliefert und kann beispielsweise ein harmonischer Wechselstrom sein. Die Erregerfrequenz f_{exc} des Erregerstroms i_{exc} ist bei Verwendung eines Meßaufnehmers gemäß dem in den Fig. 2 bis 4 gezeigten Ausführungsbeispiel in vorteilhafter Weise so gewählt oder sie stellt sich so ein, daß das lateral schwingende Meßrohr 13 möglichst ausschließlich im zweiten Biegeschwingungs-Torsionsmode schwingt.

Es sei hierbei noch erwähnt, daß obwohl im hier gezeigten Ausführungsbeispiel die Feldgerät-Elektronik 20 lediglich eine von der Treibereinheit 50B gespeiste veränderliche induktive Impedanz - hier eine Magnetspule von veränderlicher Induktivität - aufweist, die Treibereinheit 50B auch dafür ausgelegt sein kann andere elektrische Impedanzen anzuregen, beispielsweise einen Meßkondensator von veränderlicher Kapazität oder dergleichen. Im Fall eines kapazitiven Drucksensors als Meßaufnehmer würde sich dessen elektrische Impedanz dann im Betrieb auch in Abhängigkeit vom wenigstens eine zu messenden und/oder zu überwachenden Parameter ändern, wobei bekanntlich eine über der sich ändernden elektrischen Impedanz abfallende Signalspannung und/oder ein durch die sich ändernden elektrische Impedanz fließender Signalstrom als Meßsignal dient.

Zum Detektieren der Verformungen des Meßrohrs 13 umfaßt der Meßaufnehmer 10 ferner eine Sensoranordnung, die, wie in Fig. 2, 3 gezeigt, mittels wenigstens eines auf Vibrationen des Meßrohrs 13 reagierenden ersten Sensorelements 17 ein diese repräsentierendes und als Meßsignal s₁ erstes Schwingungsmeßsignal erzeugt. Das Sensorelement 17 kann z.B. mittels eines dauermagnetischen Ankers gebildet sein, der am Meßrohr 13 fixiert ist und mit einer vom Tragrahmen 14 gehalterten Magnetspule in Wechselwirkung steht. Als Sensorelement 17 sind besonders solche geeignet, die, basierend auf dem elektrodynamischen Prinzip, eine Geschwindigkeit der Auslenkungen des Meßrohrs 13 Erfassen. Es können aber auch beschleunigungsmessende elektrodynamische oder aber auch wegmessende resistive oder optische Sensoren verwendet werden. Selbstverständlich können auch andere dem Fachmann bekannte und für die Detektion solcher Vibrationen geeignete Sensoren, wie z.B. Dehnungen des Meßrohrs 13 erfassende Sensoren, verwendet werden. Die Sensoranordnung umfaßt ferner einen, insb. zum ersten Sensorelement 17 identisches, zweites Sensorelement 18, mittels dem sie ein ebenfalls Vibrationen des Meßrohrs 13 repräsentierendes und insofern als ein zweites Meßsignal s₂ dienendes zweites Schwingungsmeßsignal liefert. Die beiden Sensorelemente 17, 18 sind bei dem im Ausführungsbeispiel gezeigten Meßaufnehmer entlang des Meßrohrs 13 voneinander beabstandet, insb. in einem gleichen Abstand von der Mitte des Meßrohrs 13, so angeordnet, daß mittels der Sensoranordnung 17, 18 sowohl einlaßseitige als auch auslaßseitige Vibrationen des Meßrohrs 13 örtlich erfaßt und in die entsprechenden Schwingungsmeßsignale abgebildet werden.

In Fig. 5 ist ferner schematisch nach Art eines Blockschaltbildes eine Ausgestaltung einer für das Feldgerät der Fig. 1 bis 4 geeigneten Feldgerät-Elektronik 20 dargestellt. In Fig. 5 ist rechts schematisch das der oben erwähnte Meßaufnehmer vom Vibrationstyp mit Erregeranordnung 16 und Sensoranordnung 17, 18 dargestellt, wobei die für das Meßprinzip des Meßaufnehmers erforderlichen Magnetspulen nur symbolisch gezeichnet sind.

Das erste Meßsignal s₁ und das ggf. vorhandene zweite Meßsignal s₂, von denen jedes üblicherweise eine der momentanen Schwingfrequenz des Meßrohrs 13 entsprechende Signalfrequenz aufweist, sind, wie in Fig. 2 gezeigt, einer der Feldgerät-Elektronik 20 vorgesehenen, vorzugsweise digitalen, Auswerteeinheit 50A der Betriebs- und Auswerteschaltung zugeführt. Die Auswerteeinheit 50A dient dazu, einen die zu erfassende Prozeßgröße, hier z.B. den Massendurchfluß, die Dichte, die Viskosität etc., momentan repräsentierenden Meßwert, X_{M}, insb. numerisch, zu ermitteln und in ein entsprechendes, ausgangs der der Betriebs- und Auswerteschaltung abgreifbares Meßwertsignal x_{M} umzuwandeln. Während beim hier gezeigten Meßaufnehmer die Dichte oder auch Viskosität durchaus anhand eines einzigen der Meßsignale s₁, s₂ bestimmbar sind, werden für den Fall, daß der Massedurchfluß gemessen werden soll, in der dem Fachmann bekannten Weise beide Meßsignale s₁, s₂ verwendet, um so, beispielsweise im Signal-Zeitbereich oder im Signal-Frequenzbreich, eine mit dem Massendurchfluß korrespondierende Phasendifferenz zu ermitteln.

Nach einer Ausgestaltung der Erfindung ist die Auswerteeinheit 50A unter Verwendung eines in der Feldgerät-Elektronik 20 vorgesehenen Mikrocomputers µC realisiert, der in entsprechender Weise so programmiert ist, daß er den Meßwert X_{M} anhand der von der Sensoranordnung 17, 18 gelieferten Meßsignale digital ermittelt. Zur Realisierung des Mikrocomputers können z.B. geeignete Mikroprozessoren und/ oder auch moderne Signalprozessoren verwendet werden. Wie in der Fig. 5 ferner dargestellt, umfaßt die Auswerteeinheit 50A ferner wenigstens einen A/D-Wandler, über den eines der Sensorsignale s₁, s₂ oder, wie im besonderen bei Coriolis-Massedurchflußaufnehmern üblich, eine zuvor von den beiden Sensorsignalen s₁, s₂ abgeleitete Signaldifferenz dem Mikroprozessor digitalisiert zugeführt ist. Die seitens der Auswerteeinheit 50A erzeugten und/oder empfangenen Meß- oder Betriebsdaten können ferner in entsprechenden digitalen Datenspeichern RAM, EEPROM flüchtig und/oder persistent abgespeichert werden.

Wie bereits erwähnt, enthält die Betriebs- und Auswerteschaltung 50 ferner eine der Speisung der Erregeranordnung 16 mit dem erwähnten Erregerstrom i_{exc} dienende Treibereinheit 50B, die zusammen mit dem Meßrohr 13 praktisch einen Regelkreis darstellt. Dieser Regelkreis ist so ausgelegt, daß er sich elektrisch sowohl auf die mechanische Resonanzfrequenz der angeregten Vibrationen des Meßrohrs 13 als auch auf die mittels des Referenzsignals Sr vorgegebene Amplitude dieser Vibrationen einstellt. Die Treibereinheit 50B kann dabei in der üblichen Weise mittels einer phasenverriegelte Schleife, eine so genannte PLL, zur elektrischen Regelung der Resonanzfrequenz wie auch der Phasenlage des Treibersignals und mittels einer entsprechenden Amplitudenregelstufe zur elektrischen Regelung der Amplitude des Treibersignals und insoweit auch der Vibrationsamplitude gebildet sein.

Wie in Fig. 5 dargestellt steht die Treibereinheit 50B auch in Kontakt mit der Auswerteeinheit, insb. dem bereits erwähnten Mikroprozessor µC, von der die Treibereinheit 50B z.B. die erforderlichen Betriebsdaten, wie z.B. die momentan einzustellende Erregerfrequenz und/oder die eine für den Erregerstrom momentan einzustellende Amplitude und ggf. einzustellende Phase, empfängt oder an den die Treibereinheit 50B intern erzeugte Einstellsignale und/oder -parameter, insb. auch Informationen über den eingestellten Erregerstrom i_{exc} und/oder die in den Meßaufnehmer eingespeiste Erregerleistung P_{exc} sendet. Die Betriebsdaten für die Treibereinheit 50B, Erregerfrequenz, Amplitude und/oder Phase, können dabei sowohl absolute Vorgaben als auch relative Vorgaben sein. Alternativ oder in Ergänzung dazu können die an die Treibereinheit 50B übergebenen Betriebsdaten auch inkrementelle bzw. dekrementelle Änderungen von Erregerfrequenz, Amplitude und/oder Phase repräsentieren. Zusätzlich zum Mikroprozessor µC kann die Betriebs- und Auswerteschaltung 50 beispielsweise auch einen dem Erzeugen des Treibersignals dienenden Signalgenerator, beispielsweise einen digitalen Signalprozessor oder ein entsprechend als Signalgenerator konfiguriertes programmierbares logisches Bauelement, insb. FPGA, aufweisen.

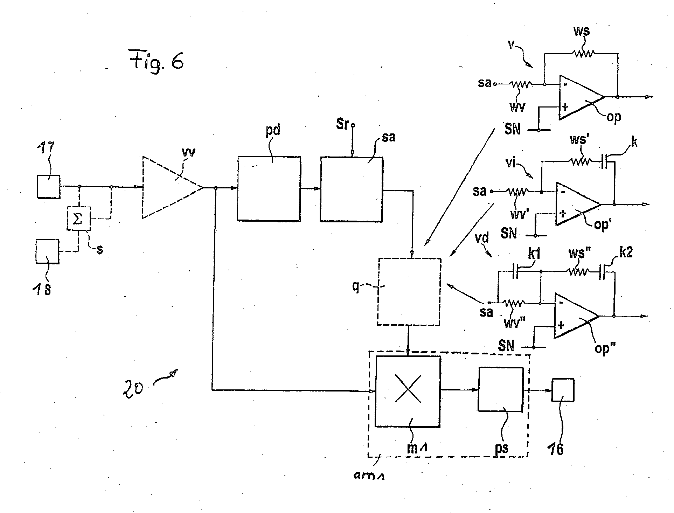

In den Fig. 6 bis 12 sind nach Art von Blockschaltbildern Ausführungsbeispiele für die Treibereinheit 50B dargestellt, die sich im besonderen auch für eine Verwendung in einem als eigensicheres Meßgerät und/oder als 2L-Meßgerät ausgelegten Feldgerät eignen.

In einer ersten Variante ist einer Amplitudendemodulationsstufe pd ist als Eingangssignal eines der von den Sensoren 17,18 gelieferten Sensorsignale oder z. B. auch deren Summe zugeführt. Somit ist die Amplitudendemodulationsstufe pd eingangsseitig mit einem der Sensoren 17,18 verbunden - in Fig. 6 ist das der Sensor 17. Die Amplitudendemodulationsstufe pd dient dazu, fortwährend eine Schwingungsamplitude der Meßrohrvibrationen zu bestimmen. Des weiteren dient die Amplitudendemodulationsstufe pd dazu, ein Ausgangssignal, z. B. ein einfaches Gleichsignal, zu liefern, daß diese erfaßte Schwingungsamplitude repräsentiert. Dafür ist nach einer bevorzugten Ausgestaltung der Erfindung in der Amplitudendemodulationsstufe pd ein Spitzenwertdetektor für das Eingangssignal vorgesehen. Anstelle dieses Spitzenwertdetektors kann aber z.B. auch ein Synchrongleichrichter zum Erfassen der Schwingungsamplitude verwendet werden, der von einem zum Eingangssignal phasengleichen Referenzsignal getaktet ist. Ein erster Eingang einer Vergleichsstufe sa ist mit einem Ausgang der Amplitudendemodulationsstufe pd verbunden; einem zweiten Eingang der Vergleichsstufe sa ist ein einstellbares Referenzsignal Sr zugeführt, das eine Amplitude der Vibration des Meßrohr 13 vorgibt. Die Vergleichsstufe sa ermittelt eine Abweichung des Ausgangssignals der Amplitudendemodulationsstufe pd vom Referenzsignal Sr und gibt diese als ein entsprechendes Ausgangsignal aus. Diese Abweichung kann z.B. unter Verwendung einer einfachen Differenz zwischen der erfaßten und der durch das Referenzsignal Sr vorgegebenen Schwingungsamplitude inform eines absoluten Amplitudenfehlers oder z. B. auch unter Verwendung eines Quotienten aus erfaßter und vorgegebener Schwingungsamplitude inform eines relativen Amplitudenfehlers bestimmt und weitergegeben werden. Einem ersten Eingang einer Amplitudenmodulationsstufe am1 ist das Eingangssignal der Amplitudendemodulationsstufe pd und einem zweiten Eingang das Ausgangssignal der Vergleichsstufe sa zugeführt. Die Amplitudenmodulationsstufe am1 dient dazu, das Eingangssignal der Amplitudendemodulationsstufe pd mit dem Ausgangssignal der Vergleichsstufe sa Amplituden zu modulieren. Dabei kann z.B. eines der Sensorsignal s₁, die Summe der beiden Sensorsignale s₁, s₂ oder auch ein dazu im wesentlichen proportionales, beispielsweise mittels eines entsprechenden, insb. digitalen, Signalgenerators künstlich erzeugtes Signal als Eingangssignal und insofern als in seiner Frequenz durchaus veränderliches Trägersignal dienen, auf das das mittels der Vergleichsstufe sa erzeugte, in seiner Amplitude veränderliche Fehlersignal aufmoduliert wird. Das Fehlersignal stellt nämlich die Abweichung der momentanen Vibrationsamplitude des Meßrohrs 13 von dessen bzw. deren durch das Referenzsignal Sr repräsentierten Soll-Schwingungsamplitude dar. Des weiteren dient die Amplitudenmodulationsstufe am1 dazu, das die Antriebsenergie tragendes Treibersignal für die Erregeranordnung 16 zu liefern. Dafür weist die Amplitudenmodulationsstufe eine entsprechende Endstufe ps zum Verstärken des mit dem Modulationssignal modulieilen Trägersignals auf. Zum Zwecke der Amplitudenmodulation des Trägersignals mit dem Modulationssignal ist in der Amplitudenmodulationsstufe am1 ferner ein Multiplizierer m1 vorgesehen, vgl. Fig. 6.

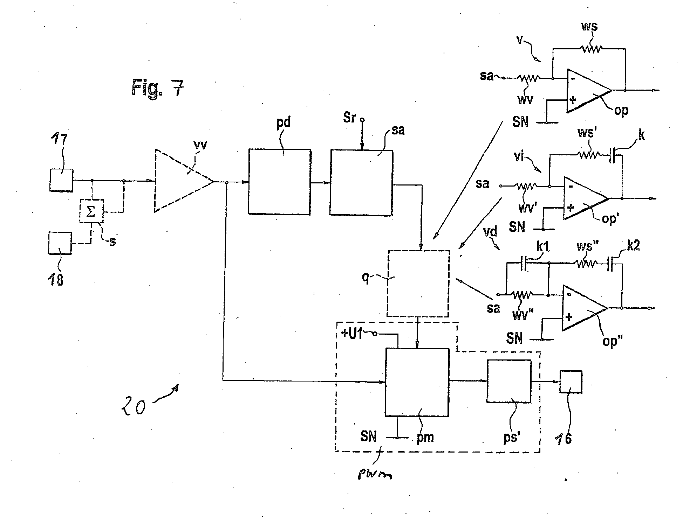

In Fig. 7 ist teilweise und nach Art eines Blockschaltbilds das Schaltbild einer zweiten Variante für die Treibereinheit 50B entsprechend der zweiten Variante der Erfindung dargestellt. Das Ausführungsbeispiel der Fig. 7 unterscheidet sich von dem der Fig. 6 im wesentlichen dadurch, daß anstatt von deren Amplitudenmodulationsstufe am eine Pulsweitenmodulationsstufe pwm mit einem von einem externen Wechselsignal getakteten Pulsdauermodulator pm vorgesehen ist. Der Pitlsdauermodulator pm ist, wie in Fig. 7 gezeigt, an einer konstanten positiven ersten Gleichspannung +U1 betrieben und liegt am Sehaltungsnullpunkt SN. Einem ersten Eingang des Pulsdauermodulators pm - das ist der Trägersignal Eingang - ist das Eingangssignal der Amplitudendemodulationsstufe pd zugeführt. Somit ist dieser erste Eingang mit einem der Sensoren verbunden - in Fig. 7 ist das wieder der Sensor 7. Einem zweiten Eingang des Pulsdauermodulators pm - das ist der Modulationssignal-Eingang - ist das zum ermittelten Amplitudenfehler proportionale Fehlersignal zugeführt. Der Ausgang des Pulsdauermodulators pm wiederum ist mit dem Eingang einer Endstufe ps' verbunden, die ausgangsseitig die Erregeranordnung 6 mit einem entsprechenden Treibersignal speist. Das von der Endstufe ps' gelieferte Treibersignal ist hierbei ein Rechtecksignal, das mit einer Signalfrequenz des Eingangssignals der Amplitudendemodulationsstufe pd getaktet ist und das eine mit dem Ausgangssignal der Vergleichsstufe sa modulierte Pulsweite aufweist.

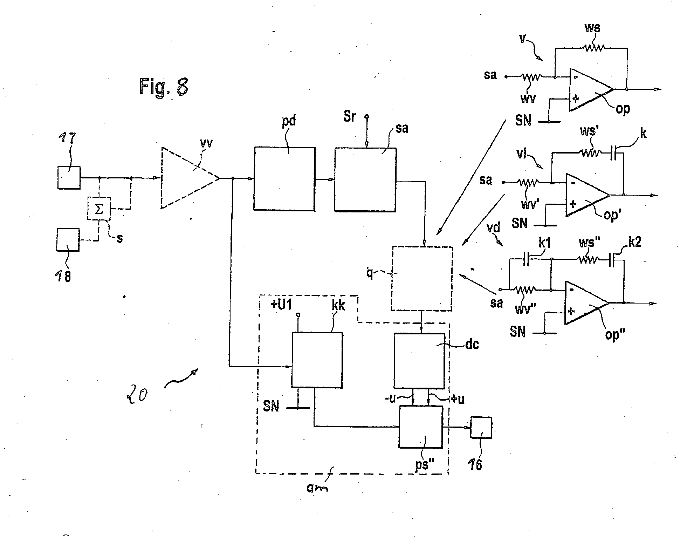

In Fig. 8 ist teilweise und nach Art eines Blockschaltbilds das Schaltbild einer dritten Variante für die Treibereinheit 50B dargestellt. Das Ausführungsbeispiel der Fig. 8 unterscheidet sich von dem der Fig. 6 dadurch, daß anstatt von deren Multiplizierer m1 ein Komparator kk und ein Gleichspannungswandler dc vorgesehen sind, der wenigstens eine den Erregerstrom i_{exc} treibende Treiberspannung liefert. Die Amplitude dieser Treiberspannung wiederum ist abhängig von dem Ausgangssignal der Vergleichsstufe sa und daher als nicht-konstant zu betrachten. Je nach Auslegung der Treiberspannung kann der Erregerstrom i_{exc}, wie bereits erwähnt, bi-polar oder aber auch uni-polar sein. Daher liefert der Gleichspannungswandler dc nach einer bevorzugten Ausgestaltung der Erfindung gemäß Fig. 8 eine Treiberspannung mit einem positiven ersten Potential +u und einem negativen zweiten Potential -u, wobei ein dem Einstellen der Potentiale dienender Steuer-Eingang des Gleichspannungswandlers dc das Ausgangssignal der Vergleichsstufe sa empfängt. Die vom Gleichspannungswandler dc gelieferte, in ihrer Amplitude entsprechend angepaßte Treiberspannung ist einer dem Speisen der Erregeranordnung 16 dienenden Endstufe ps" der Pulsweitenmodulationsstufe pwm als Betriebsspannung angelegt. Außerdem ist die Endstufe ps" eingangsseitig mit dem einen Ausgang des Komparators kk verbunden. Der Komparator kk ist an der konstanten positiven ersten Gleichspannung +U1 betrieben und liegt am Schaltungsnullpunkt SN. Einem Eingang des Komparators kk ist das Eingangssignal des Spitzenwertdetektors pd zugeführt. Somit ist der Komparator kk eingangsseitig mit einem der Sensoren verbunden - in Fig. 8 ist das wieder der Sensor 17.

In den Fig. 6 bis 7 ist jeweils gestrichelt angedeutet, daß anstatt eines der Sensorsignale der Sensoren 17,18 auch deren Summe dem Spitzenwertdetektor pd und dem Multiplizierer m1 bzw. dem Pulsdauermodulator pm bzw. dem Komparator kk zugeführt werden kann ; dann sind diese Sensorsignale über einen Summierers zu führen. Alternativ kann aber auch, wie bereits erwähnt, ein mittels digitalen Signalprozessors und daran ausgangs angeschlossenen D/A-Wandlers erzeugtes, in seiner Frequenz und Phasenlage an das Sensorsignal entsprechend angepaßtes künstliches Signal verwendet werden. In den Fig. 6 bis 7 sind noch weitere gestrichelt gezeichnete Teilschaltungen zu sehen, die bevorzugte Weiterbildungen der bevorzugten Erreger-Schaltung darstellen. In einer Weiterbildung der Treibereinheit 50B ist ein Vorverstärker w vorgesehen, der dem Spitzenwertdetektor pd oder ggf. dem Synchrongleichrichter vorgeschaltet ist. In einer anderen Weiterbildung der Treibereinheit 50B ist ein Verstärker v vorgesehen, der das Ausgangssignal der Vergleichsstufe sa verstärkt, bevor es als Fehlersignal zur Amplitudenmodulationsstufe am gelangt. Ein solcher Verstärker kann ein Operationsverstärker op sein, dessen nicht-invertierender Eingang am Schaltungsnullpunkt SN liegt, dessen invertierender Eingang über einen Vorwiderstand wv mit dem Ausgang der Vergleichsstufe sa und über einen Shuntwiderstand ws mit dem Verstärker-Ausgang verbunden ist. Der derart beschaltete Operationsverstärker op ist jeweils rechts oben in den Fig. 6 bis 7 zu sehen. In einer nächsten Weiterbildung der Treibereinheit 50B ist ein integrierender Verstärker vi vorgesehen, der das Ausgangssignal der Vergleichsstufe sa verstärkt und integriert, bevor es als Fehlersignal zum Multiplizierer m gelangt. Ein solcher Verstärker kann ein Operationsverstärker op' sein, dessen nicht-invertierender Eingang am Schaltungsnullpunkt SN liegt, dessen invertierender Eingang über einen Vorwiderstand wv' mit dem Ausgang der Vergleichsstufe sa und über eine Serienschaltung aus einen Shuntwiderstand ws' und einem Kondensator k mit dem Verstärker-Ausgang verbunden ist. Der derart beschaltete Operationsverstärker op' ist jeweils rechts in der Mitte der Fig. 6 bis 7 zu sehen.

Eine andere Weiterbildung der Treibereinheit 50B besteht in einem differenzierenden und integrierenden Verstärker vd, der das Ausgangssignal der Vergleichsstufe sa verstärkt, differenziert und integriert, bevor es als Fehlersignal zum Multiplizierer m1 gelangt. Ein solcher Verstärker kann ein Operationsverstärker op" sein, dessen nicht-invertierender Eingang am Schaltungsnullpunkt SN liegt, dessen invertierender Eingang über eine Parallelschaltung eines Vorwiderstands wv" und eines ersten Kondensators k1 mit dem Ausgang der Vergleichsstufe sa und über eine Serienschaltung aus einen Shuntwiderstand ws" und einem zweiten Kondensator k2 mit dem Verstärker-Ausgang verbunden ist. Der derart beschaltete Operationsverstärker op" ist jeweils rechts unten in den Fig. 6 bis 7 zu sehen. Mittels der Pfeile ist in den Fig. 6 bis 7 angedeutet, daß der jeweilige Verstärker v, vi, vd an die Stelle des gestrichelt gezeichneten Quadrats q zu setzen ist, das entweder zwischen dem Ausgang der Vergleichsstufe sa und dem zweiten Eingang des Amplitudenmodulationsstufe am oder aber zwischen dem Ausgang der Vergleichsstufe sa und dem Modulationssignal-Eingang der Pulsweitenmodulationsstufe pwm liegt.

Es liegt durchaus im Rahmen der Erfindung, daß die Funktionen der einzelnen Teilschaltungen der Fig. 6 bis 7 durch entsprechende analoge oder digitale Teilschaltungen realisiert werden, in letzterem Fall also z. B. mittels eines geeignet programmierten Mikroprozessors, wobei die diesem zuzuführenden Signale zuvor einer Analog/Digital-Wandlung und dessen Ausgangssignale gegebenenfalls einer Digital/Analog-Wandlung zu unterziehen sind.

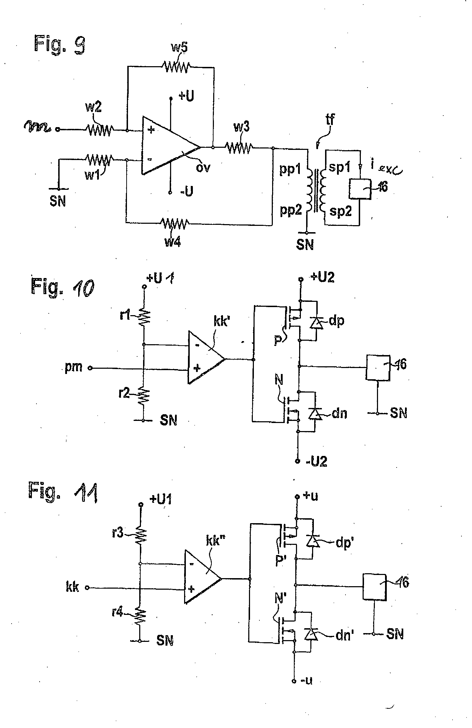

In Fig. 9 ist ein Schaltbild eines ersten Ausführungsbeispiels einer Endstufe ps dargestellt, die beispielsweise in der Amplitudenmodulationsstufe am gemäß Fig. 6 eingesetzt werden kann. Ein Operationsverstärker ov ist an einer positiven und an einer negativen, jeweils konstanten Gleichspannung +U, -U betrieben und wie folgt beschaltet. Ein invertierender Eingang liegt über einen ersten Widerstand w1 am Schaltungsnullpunkt SN und ein nicht-invertierender Eingang über einen zweiten Widerstand w2 am Ausgang des Multiplizierers m1. Ein Ausgang des Operationsverstärkers ov ist unter Zwischenschaltung eines dritten Widerstands w3 mit einem ersten Pol pp1 einer Primärwicklung eines Transformators tf verbunden; ein zweiter Pol pp2 der Primärwicklung liegt am Schaltungsnullpunkt SN. Der Transformator tf hat auch eine Sekundärwicklung, die mittels ihrer beiden Pole sp1, sp2 an der Erregeranordnung 16 angeschlossen ist.

Die Primärwicklung hat eine Primärwindungszahl N1 und die Sekundärwicklung eine Sekundärwindungszahl N2. Der Transformator tf ist ein Strom-Aufwärts Transformator und hat ein Übersetzungsverhältnis N1/N2 von z. B. 20 : 1. Der invertierende Eingang des Operationsverstärkers ov ist über einen vierten Widerstand w4 am ersten Polpp1 der Primärwicklung angeschlossen. Der nichtinvertierende Eingang ist über einen fünften Widerstand w5 mit dem Ausgang verbunden. Die fünf Widerständew1, w2, w3, w4, w5 haben entsprechende WiderstandswerteR1, R2, R3, R4, R5. Der Widerstandswert R1 ist gleich dem Widerstandswert R2 und der Widerstandswert R4 ist gleich dem Widerstandswert R5 zu wählen. Der in der Erregeranordnung 6 fliessende Wechselstrom i ergibt sich wie folgt, wenn die Ausgangsspannung des Multiplizierers m mit um bezeichnet ist :R5N1 1 =um m R1 R3 N2 In Fig. 10 ist ein Schaltbild eines bevorzugten zweiten Ausführungsbeispiels einer Endstufe ps' dargestellt, die beispielsweise in der Pulsweitenmodulationsstufe pwm gemäß Fig. 7 eingesetzt werden kann. Der "Kern" dieser Ausgestaltung der Endstufe, die eine komplementäre Gegentakt-Endstufe ist, ist eine Serienschaltung des gesteuerten Strompfads eines P-Kanal-Enhancemen-Isolierschicht-Feldeffekt-Transistors P mit einem N-Kanal-Enhancemen-Isolierschicht-Feldeffekt-Transistor N, die im Folgenden kurz als Transistoren bezeichnet sind. Am Verbindungspunkt der gesteuerten Strompfade ist die Erregeranordnung 16 angeschlossen. Jedem gesteuerten Strompfad ist eine Schutzdiode dn, dp parallelgeschaltet, wobei die jeweilige Katode am positiveren Punkt des jeweiligen Transistors liegt. Das P-transistor-seitige Ende der Serienschaltung liegt an einer konstanten positiven zweiten Gleichspannung +U2 und deren N-transistor-seitiges Ende an einer entsprechenden negativen Gleichspannung - U2. Die Gates der Transistoren N, P sind miteinander und mit einem Ausgang eines Komparators kk' verbunden. Der nicht-invertierende Eingang des Komparators kk'liegt am Ausgang des Pulsdauermodulators pm, vgl. Fig. 7. Der invertierende Eingang des Komparators kk' ist mit einem Abgriff eines Spannungsteilers verbunden, der aus einem Widerstand r1 und einem Widerstand r2 besteht. Die Widerständer1, r2 haben die gleichen Widerstandswerte und liegen zwischen der positiven Gleichspannung+U1 und dem Schaltungsnullpunkt SN. Die Widerständer1, r2 und der Komparator kk' dienen der Symmetrierung des Ausgangssignals des Pulsdauermodulators pm bezüglich des halben Wertes der Gleichspannung +U1. Die Erregeranordnung 16 erhält somit bei jedem positiv gerichteten Nulldurchgang des Ausgangssignals des Sensors 17 bzw. der Summe der Ausgangssignale der Sensoren 17,18 einen positiven Stromimpuls und bei jedem negativ gerichteten Nulldurchgang des Ausgangssignals des Sensors 17 bzw. der Summe der Ausgangssignale der Sensoren 17,18 einen negativen Stromimpuls zugeführt. Die jeweilige Dauer dieser Stromimpulse stellt sich automatisch so ein, daß die durch das Referenzsignal Sr vorgegebene Schwingungsamplitude des Meßrohrs 13 erreicht wird.

In Fig. 11 ist ein Schaltbild eines anderen Ausführungsbeispiels einer Endstufe ps" dargestellt, die beispielsweise in der Amplitudenmodulationsstufe am1 gemäss Fig. 8 eingesetzt werden kann. Der "Kern" dieser Ausgestaltung der Endstufe, die wieder eine komplementäre Gegentakt-Endstufe ist, ist auch hier wie in Fig. 10 eine Serienschaltung des gesteuerten Strompfads eines P-Kanal-Enhancement-Isolierschicht-Feldeffekt-Transistors P'mit einem N-Kanal-Enhancement-Isolierschicht-Feldeffekt-Transistor N', die im Folgenden wieder kurz als Transistoren bezeichnet sind. Am Verbindungspunkt der gesteuerten Strompfade ist die Erregeranordnung 6 angeschlossen. Jedem gesteuerten Strompfad ist eine Schutzdiode dn', dp' parallel geschaltet, wobei die jeweilige Katode am positiveren Punkt des jeweiligen Transistors liegt. Das P-transistor-seitige Ende der Serienschaltung liegt an der vom Ausgangssignal der Vergleichsstufe sa abhängigen positiven Gleichspannung +u und deren N-transistor-seitiges Ende an der vom Ausgangssignal der Vergleichsstufe sa abhängigen negativen Gleichspannung -u. Die Gates der Transistoren N', P' sind miteinander und mit einem Ausgang eines Komparators kk" verbunden. Der nicht-invertierende Eingang des Komparators kk" liegt am Ausgang des Komparators kk, vgl. Fig. 8. Der invertierende Eingang des Komparators kk" ist mit einem Abgriff eines Spannungsteilers verbunden, der aus einem Widerstand r3 und einem Widerstand r4 besteht. Die Widerstände r3, r4 haben die gleichen Widerstandswerte und liegen zwischen der konstanten positiven ersten Gleichspannung+U1 und dem Schaltungsnullpunkt SN. Die Widerstände r3, r4 und der Komparator kk" dienen der Symmetrierung des Ausgangssignals des Komparators kk bezüglich des halben Wertes der Gleichspannung +U1. Die Erregeranordnung 16 erhält somit während jeder positiven Halbwelle des Ausgangssignals des Sensors 17 bzw. der Summe der Ausgangssignale der Sensoren 17,18 einen positiven Stromimpuls und während jeder negativen Halbwelle des Ausgangssignals des Sensors 17 bzw. der Summe der Ausgangssignale der Sensoren 17,18 einen negativen Stromimpuls zugeführt. Die jeweilige Amplitude dieser Stromimpulse ist von den vom Ausgangssignal der Vergleichsstufe sa abhängigen Gleichspannungen +u, -u ihrerseits abhängig, sodaß sich die durch das Referenzsignal Sr vorgegebene Schwingungsamplitude des Meßrohrs 13 automatisch einstellt.

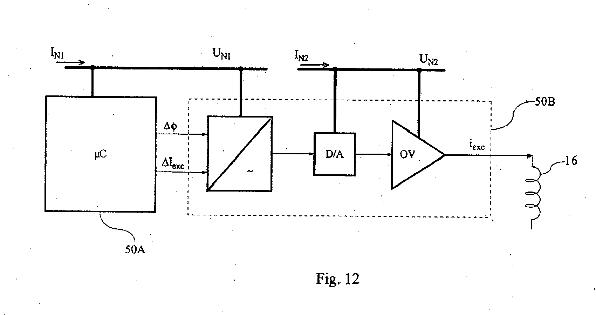

In Fig. 12 ist schließlich ein Ausführungsbeispiel für eine hybride - also anteilig digital und anteilig analog operierende - Treiberschaltung 50B schematisiert als Blockschaltbild dargestellt. Die Treiberschaltung 50B weist einen digitalen Signalgenerator auf, der dazu dient, vom Mikrocomputer 50A erzeugte, insb. numerische, Vorgabewerte für einzelne Parameter des Erregersignals, beispielsweise eine Amplitude des Erregerstroms i_{exc}, eine Phase des Erregersignals und/oder eine Schwingungsfrequenz desselben, in ein entsprechendes digitales Schwingungssignal umzuwandeln. Die einzelnen Parameter können, wie bereits erwähnt, dabei beispielsweise als Absolutwerte und/oder als Inkremental- bzw. Dekrementalwerte an die Treibereinheit 50B übergeben werden.

Wie bereits erwähnt, werden die Feldgerät-Elektronik und insofern auch das Feldgerät von einer externen elektrischen Energieversorgung 70, beispielsweise einem entfernt angeordneten Meßumformer-Speisegerät oder dergleichen, gespeist, das über das wenigstens eine Paar elektrischer Leitungen 2L mit dem Feldgerät oder genauer mit der Feldgerät-Elektronik 20 verbunden ist. Das Meßumformer-Speisegerät wiederum kann beispielsweise über ein Feldbussystem mit einem in einer in einer Prozeßkontroll-Warte stationierten übergeordneten Prozeßleitsystem verbunden sein. Im hier gezeigten Ausführungsbeispiel ist die Feldgerät-Elektronik ferner, wie in zahlreichen Anwendungen industriellen Meß- und Automatisierungstechnik oftmals üblich, mit der externen elektrischen Energieversorgung zumindest zeitweise lediglich über ein einziges Paar elektrischer Leitungen 2L elektrisch wirksam verbunden. Dementsprechend wird dann also die Feldgerät-Elektronik einerseits über dieses eine Paar Leitungen mit elektrischer Energie versorgt. Anderseits ist vorgesehen, daß die Feldgerät-Elektronik den zumindest zeitweise erzeugten Meßwert X_{M} ebenfalls über das einzige Paar elektrischer Leitungen 2L an eine in der externen elektrischen Energieversorgung 70 angeordnete und/oder mit der Energieversorgung elektrische gekoppelte externe Auswerteschaltung 80 sendet. Das Meßumformer-Speisegerät und Feldgerät verbindende - hier einzige - Paar elektrischer Leitungen 2L kann dafür beispielsweise mit einer den Versorgungsstrom I einspeisenden Energiequelle 71, z. B. einer Batterie oder einer über ein anlageninternes Versorgungsnetz gespeiste Gleichspannungsquelle, und einem Meßwiderstand R_{M} in Reihe geschaltet sein. Die Energiequelle 70 treibt den Versorgungsstrom I und versorgt somit die Feldgerät-Elektronik 20 mit der zu ihrem Betrieb erforderlichen elektrischen Energie. Der Meßwiderstand R_{M} ist ferner mit zwei Meß-Anschlüssen 72, 73 versehen, an denen der den Meßwert X_{M} momentan repräsentierende Versorgungsstrom als stromproportionale Meßspannung U_{M} abgreifbar ist. Die Meßspannung U_{M} kann z.B. vor Ort visualisiert oder einer übergeordneten Meßwertverarbeitung zugeführt werden. Das - hier einzige - Paar elektrischer Leitungen 2L kann beispielsweise als sogenannte Zweileiter-Stromschleife, insb. 4 mA - 20 mA-Stromschleife, oder als eine Verbindungsleitung zu einem externen digitalen Feldbus, beispielsweise einem PROFIBUS-PA oder einem FOUNDATION FIELDBUS, ausgebildet sein.

Nach einer weiteren Ausgestaltung der Erfindung ist daher ferner vorgesehen, den momentanen Meßwert X_{M} auf den Versorgungsstrom I aufzumodulieren. Beispielsweise kann der momentan mittels des Feldgeräts ermittelte Meßwert durch eine momentane, insb. auf einen zwischen 4 mA und 20 mA liegenden Wert eingestellte, Stromstärke des in dem als Zweileiter-Stromschleife ausgebildeten Paar elektrische Leitungen 2L fließenden Versorgungsstroms I repräsentiert werden.

Nach einer anderen Ausgestaltung der Erfindung ist vorgesehen, daß das Feldgerät zumindest zeitweise mit einer externen Steuer- und Kontroll-Einheit, beispielsweise einem Handbediengerät oder einer speicherprogrammierbare Steuerung (SPS), über ein Datenübertragungssystem kommuniziert, beispielsweise feldgerätespezifische Daten austauscht. Dafür ist in der Feldgerät-Elektronik 20 ferner eine Kommunikationsschaltung COM vorgesehen, die die Kommunikation via Datenübertragungssystem kontrolliert und steuert. Im besonderen dient die Kommunikationsschaltung dazu, neben dem Meßwert X_{M} z.B. auch interne Feldgerätparameter in Signale umzuwandeln, die über das Paar elektrische Leitungen 2L übertragbar sind, und diese dann darin einzukoppeln. Alternativ oder in Ergänzung dazu kann die Kommunikationsschaltung COM aber auch dafür ausgelegt sein, von extern über das Paar elektrische Leitungen 2L gesendete Feldgerät-Parameter entsprechend zu empfangen. Als Kommunikationsschaltung COM kann, insb. für den vorbeschriebenen Fall, daß das Feldgerät im Betrieb lediglich via Zweileiter-Stromschleife an die externe Versorgungsschaltung angeschlossen ist, z. B. eine gemäß dem HART@-Feld-Kommunikations-Protokoll der HART Communication Foundation, Austin TX arbeitende Schnittstellenschaltung sein, die also FSK-codierte höher frequente Wechselspannungen als Signalträger verwendet.

Wie aus der Zusammenschau der Fig. 1. und 5 ersichtlich, weist Feldgerät-Elektronik 20 für die Einstellung und Reglung von Spannungen und/oder Strömen intern im Feldgerät ferner wenigstens einen vom Versorgungsstrom I durchflossenen Stromsteller IS₁ zum Einstellen und/oder Modulieren, insb. Takten, des Versorgungsstroms I auf. Zudem ist in der Feldgerät-Elektronik 20 eine interne Versorgungsschaltung 40 vorgesehen, die an einer von der Klemmenspannung U_{K} abgeteilten internen Eingangsspannung Uₑ der Feldgerät-Elektronik 20 anliegt und die dazu dient, die interne Betriebs- und Auswerteschaltung 50 elektrisch zu speisen.

Zum Erfassen und Regulieren von momentan in der Feldgerät-Elektronik 20 abfallenden Spannungen und/oder momentan fließenden Strömen weist die Versorgungsschaltung 40 ferner eine entsprechende Meß- und Regeleinheit 60 auf. Darüber hinaus dient die Meß- und Regeleinheit 60, insb. für den oben erwähnten Fall, daß der Meßwert X_{M} auf den Versorgungsstrom I aufmoduliert wird, auch dazu, ein von der Betriebs- und Auswerteschaltung 50 geliefertes, den momentan erzeugten Meßwert X_{M} repräsentierendes Meßwertsignal x_{M} in ein den Stromsteller IS₁ und insoweit auch den Versorgungsstrom entsprechend einstellendes erstes Stromstellsignal Iₛₜₑₗₗ umzusetzen. Hierzu weist die Meß- und Regeleinheit 60 eine entsprechende Stromsteuerschaltung 60A auf, die das von der interne Betriebs- und Auswerteschaltung 50 an die Meß- und Regeleinheit 60 gelieferte Meßwertsignal x_{M} entsprechend in das Stromstellsignal Iₛₜₑₗₗ umrechnet. Die Steuerschaltung 60A der Meß- und Regeleinheit 60 bildet insoweit zusammen mit dem Stromsteller IS₁ praktisch einen Stromregler - hier einen sogenannten linearen Längsregler - für den Versorgungsstrom I. Das Stromstellsignal Iₛₜₑₗₗ ist gemäß einer Ausgestaltung der Erfindung so ausgelegt, daß der vorgenannte Stromregler in die Lage versetzt ist, den Versorgungsstrom I unter Berücksichtigung des momentan ermittelten Meßwerts X_{M} proportional zu diesem einzustellen. Alternativ oder in Ergänzung dazu ist das Stromstellsignal Iₛₜₑₗₗ so ausgebildet, das der Stromregler den Versorgungsstrom I taktet, beispielsweise zum Zwecke der Kommunikation binär-codiert gemäß dem Standard PROFIBUS-PA. Zum Erzeugen von entsprechend stromrepräsentativen, insb. im wesentlichen stromproportionalen, Sensespannungen I_{1_ist}, I_{3_ist}, I_{3_ist} sind des weiteren in der Versorgungsschaltung 40 entsprechende, zumindest zeitweise vom Versorgungsstrom oder davon abgezeigten Teilströmen I₁, I₂, I₃ entsprechend durchflossene Sensewiderstände R₁, R₂, R₃ vorgesehen.

Zumindest für den vorbeschriebenen Fall, bei dem der Versorgungsstrom I zum Zwecke der Garstellung des Meßwerts X_{M} in seiner Amplitude moduliert wird und infolge der begrenzten elektrischen Leistung der externen Energieversorgung die davon gelieferte Versorgungsspannung Uᵥ und damit einhergehend auch die Klemmenspannung U_{K} bei steigendem Versorgungsstrom I entsprechend absinkt oder umgekehrt bei sinkendem Versorgungsstrom I wieder ansteigt, ist die Versorgungsspannung Uᵥ und insoweit auch die Klemmenspannung U_{K} in ihrer Spannungshöhe in vorab nicht bestimmbarer Weise schwankend und insoweit als im Betrieb in erheblichem Maße veränderlich anzusehen. Wenn das Feldgerät nach dem oben erwähnten, in der industriellen Meßtechnik seit langem eingeführten Standard von 4 mA bis 20 mA arbeitet, steht für die Energieversorgung im Normalbetrieb somit lediglich der Strombereich unterhalb von 4 mA und je nach Höhe der Versorgungsspannung somit etwa nur 40 bis 90 mW (= Milliwatt) an elektrischer Leistung permanent zur Verfügung.

Die Versorgungsschaltung 40 weist daher, wie auch in Fig. 5 schematisch dargestellt, ferner eingangs einen Spannungssteller 30 auf, der - angesteuert von der Meß- und Regeleinheit 60 - dafür vorgesehen ist, eine als Primär- oder Basisspannung für die interne Energieversorgung dienenden internen Eingangsspannung Uₑ der Feldgerät-Elektronik auf einem vorgebbaren, ggf. im Betrieb auch veränderlichen Spannungsniveau möglichst genau einzustellen sowie zumindest für den ungestörten Normalbetrieb, bei dem u.a. die Klemmenspannung U_{K} mindest gleich einem minimalen Spannungswert U_{K_min} ist, auch möglichst konstant und gleich bleibend auf diesem momentan gewählten Spannungsniveau zu halten. Die Meß- und Regeleinheit 60 bildet insoweit zusammen mit dem Spannungssteller 30 einen Eingangsspannungsregler für die internen Eingangsspannung Uₑ, der insb. dazu dient, diese möglichst genau einzustellen und weitgehend zu stabilisieren.

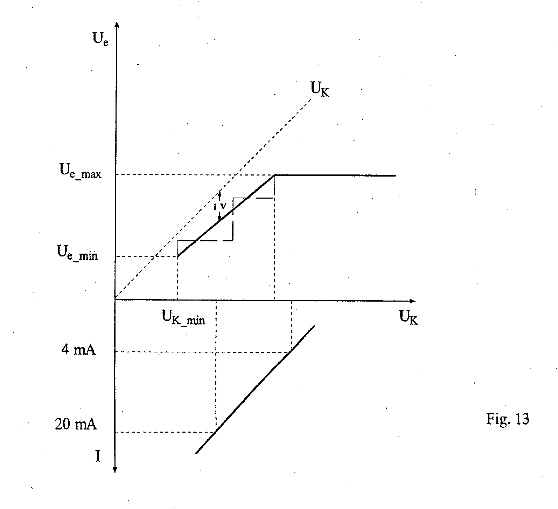

Das Spannungsniveau der internen Eingangsspannung Uₑ ist gemäß einer Ausgestaltung der Erfindung so gehalten, daß die interne Eingangsspannung Uₑ, wie auch in Fig. 13 schematisiert dargestellt, stets niedriger ist als die Klemmenspannung U_{K}. Dabei kann das Spannungsniveau, auf dem die interne Eingangsspannung Uₑ mittels des vorgenannten Eingangsspannungsreglers 30, 60 gehalten ist, im Betrieb in Abhängigkeit vom momentan fließenden Versorgungsstrom I beispielsweise im wesentlichen kontinuierlich verändert werden. Alternativ dazu ist aber auch möglich, das Spannungsniveau über einen gewissen Stromstärkebereich des Versorgungsstroms I und insoweit auch über einen entsprechenden Spannungsbereich der Klemmenspannung U_{K} konstant zu halten und, wie in Fig. 13 mittels der strichpunktiert gezeichneten Linie angedeutet, stufenweise zu ändern, beispielsweise bei Über- oder Unterschreiten entsprechend vorgegebener Schwellenwerte für den Versorgungsstrom I und/oder die Klemmenspannung U_{K}. Nach einer weiteren Ausgestaltung der Erfindung ist der Eingangsspannungsregler 30, 60 so ausgelegt, daß das das Spannungsniveau nach dem Erreichen einer vorgegebenen oder vorgebbaren maximalen Spannungshöhe U_{e_max}, beispielsweise in der Größenordnung von 15 V, trotz allfällig weiter ansteigender Klemmenspannung U_{K}, beispielsweise auf über 20 V, konstant gehalten ist. Insoweit wirkt also der Eingangsspannungsregler 30, 60 nicht nur als ein Spannungsstabilisator für die interne Eingangsspannung Uₑ sondern auch als ein Spannungsbegrenzer dafür.

Zur weiteren internen Unterverteilung der elektrischen Energie an einzelnen Komponenten oder Baugruppen der Feldgerät-Elektronik weist diese des weiteren einen die stabilisierte interne Eingangsspannung Uₑ umsetzenden ersten Nutzspannungsregler UR₁ auf, der zumindest zeitweise von einem, insb. veränderlichen, ersten Teilstrom I₁ des Versorgungsstroms I durchflossen ist und der dazu dient, eine auf einem vorgebbaren, ggf. auch parametrierbaren, ersten Spannungsniveau *U_{N1_soll}* im wesentlichen konstant geregelte erste interne Nutzspannung U_{N1} in der Feldgerät-Elektronik 20 bereitzustellen.

Ferner ist in der Versorgungsschaltung 40 ein ebenfalls die stabilisierte interne Eingangsspannung Uₑ umsetzender zweiter Nutzspannungsregler UR₂ vorgesehen, der zumindest zeitweise von einem, insb. veränderlichen, zweiten Teilstrom I₂ des Versorgungsstroms I durchflossen ist. Der zweite Nutzspannungsregler UR₂ wiederum dient dazu, eine über einen vorgebbaren Spannungsbereich veränderliche zweite interne Nutzspannung U_{N2} in der Feldgerät-Elektronik 20 bereit zu stellen. Die für die momentane Verbrauchssituation in der Feldgerät-Elektronik am besten geeignete Spannungshöhe für die Nutzspannung U_{N2} kann beispielsweise seitens der Meß- und Regeleinheit 60 unter Berücksichtigung einer momentanen Verbrauchssituation in der Feldgerät-Elektronik ermittelt und inform eines Spannungssteuersignals *U_{N2_soll}* entsprechend an den Nutzspannungsregler U_{R2} übermittelt werden. Das Spannungssteuersignals *U_{N2_soll}* kann, wie auch in Fig. 5 gezeigt, beispielsweise mittels der gegebenenfalls vorhanden Leistungssteuerschaltung 60B der Meß- und Regeleinheit 60 erzeugt werden.

Als Nutzspannungsregler UR₁, UR₂ können beispielsweise so genannte Schaltregler und/oder ungetaktete Linearregler verwendet werden, während der Spannungssteller 30 und insoweit auch der Eingangsspannungsregler beispielsweise mittels eines in einem Nebenschluß zur internen Eingangsspannung Uₑ liegenden, beispielsweise mittels Transistor und/oder adjustierbaren Zener-Dioden realisieiten, Shunt-Regulator IS₂ gebildet sein kann.

Desweiteren ist der Eingangsspannungsregler, wie auch in Fig. 5 dargestellt, so ausgelegt, das er im Normalbetrieb zumindest zeitweise von einem, insb. veränderlichen, dritten Teilstrom I₃ des Versorgungsstroms I durchflossen ist, wobei die Meß- und Regeleinheit 60 ein den Spannungssteller 30 - hier den Shunt-Regulator IS₂ - entsprechend steuerndes und somit auch den dritten Teilstrom bestimmendes zweite Stromstellsignal I_{3_stell} liefert. Das Stromstellsignal I_{3_stell} ist dabei - zumindest für den Fall, daß die sich aus der im wesentlich konstant gehalten internen Eingangsspannung Uₑ und dem momentan eingestellten Versorgungsstrom I ergebenden, momentan in der Feldgerät-Elektronik 20 verfügbare elektrische Leistung die seitens der Betriebs- und Auswerteschaltung 50 momentan tatsächlich benötigte elektrische Leistung übersteigt -, so ausgelegt, daß es einen im Eingangsspannungsregler vorgesehenen Transistor in ausreichendem Maße leitfähig werden läßt, um einen für die Stabilisierung der Eingangsspannung Uₑ ausreichend hohen Teilstrom I₃ fließen zu lassen. Zu diesem Zweck sind im Eingangsspannungsregler - hier im Spannungssteller 30 - nach einer weiteren Ausgestaltung der Erfindung auch der Dissipation elektrischer Energie und dem Abführen von dabei entstandener Wärmeenergie dienende Komponenten, insb. ein Halbleiterelement mit Kühlblech oder dergleichen, vorgesehen. Andererseits ist das Stromstellsignal I_{3_stell} aber auch so ausgelegt, daß es bei größer werdendem Leistungsbedarf in der Betriebs- und Auswerteschaltung 50 den im Spannungssteller 30 momentan fließenden Teilstrom I₃ wieder verringert. Zum Erzeugen des den Spannungssteller 30 im Betrieb entsprechend ansteuernden und insoweit auch die Aufteilung der in der Feldgerät-Elektronik momentan verfügbare elektrischen Leistung zumindest anteilig regulierenden Stellsignals I_{3_stell} weist die Meß- und Regeleinheit 60 gemäß einer weiteren Ausgestaltung der Erfindung ferner eine entsprechende Leistungssteuerschaltung 60B auf.

Wie in der Fig. 5 ferner gezeigt, ist bei der erfindungsgemäßen Feldgerät-Elektronik 20 und insofern auch beim erfindungsgemäßen Feldgerät ferner vorgesehen, daß die Betriebs- und Auswerteschaltung 50 zumindest zeitweise sowohl von einem von der zumindest im Normalbetrieb im wesentlichen konstant gehaltenen ersten Nutzspannung U_{N1} getriebenen, insb. veränderlichen, ersten Nutzstrom I_{N1} als auch von einem von der betriebsgemäß variieren gelassenen zweiten Nutzspannung U _{N2} getriebenen, insb. veränderlichen, zweiten Nutzstrom I_{N2} durchflossen ist. Dies hat den Vorteil, daß zumindest die den Normalbetrieb steuernden und insofern das Feldgerät in Gang haltenden Baugruppen und Schaltungen der Feldgerät-Elektronik 20, insb. der erwähnte wenigstens eine Mikroprozessor µC, stets mit der elektrischen Energie versorgt werden können, die sie momentan tatsächlich benötigen. Demgemäß ist nach einer Ausgestaltung der Erfindung vorgesehen, den oben erwähnten Mikroprozessor µC und/oder den erwähnten Signalprozessor zumindest anteilig mit der im Normalbetrieb weitgehend konstant gehalten ersten Nutzspannung U_{N1} oder eine davon abgeleitet Sekundärspannung zu betreiben. Nach einer Weiterbildung dieser Ausgestaltung der Erfindung dient die erste Nutzspannung U_{N1} oder eine davon abgeleitet Sekundärspannung ferner zumindest anteilig auch dem wenigstens einen in der Betriebs- und Auswerteschaltung vorgesehenen A/D-Wandler als Betriebsspannung. Gemäß einer weiteren Ausgestaltung der Erfindung ist vorgesehen, zumindest auch die die Kommunikation mit der erwähnten übergeordneten Steuer- und Kontroll-Einheit steuernden und aufrechterhaltenden Komponenten der Feldgerät-Elektronik, hier also neben dem Mikroprozessor µC auch die Kommunikationsschaltung COM, zumindest anteilig mittels der ersten Nutzspannung U_{N1} oder eine davon abgeteilte Sekundärspannung zu versorgen.

Je nach dem, welche elektrische Leistung seitens der externen Versorgungsschaltung 70 im Betrieb tatsächlich zur Verfügung gestellt werden kann sowie in Abhängigkeit auch von dem tatsächlichen Leistungsbedarf der in der vorgenannten Weise bereits von ersten Nutzspannung U_{N1} gespeisten Verbraucher können zudem auch einzelne, vornehmlich der Erzeugung des Treibersignals i_{exc} dienende Komponenten der Treibereinheit 50B, beispielsweise darin vorgesehene Verstärker, D/A-Wandler und/oder Signalgeneratoren etc., zumindest anteilig mittels der ersten Nutzspannung U_{N1} oder eine davon abgeteilte Sekundärspannung gespeist sein, vgl. hierzu auch die Fig. 12. Allerdings hat es sich gezeigt, daß allein schon mit derzeit erhältlichen Mikroprozessoren µC und/oder A/D-Wandlern und den dafür erforderlich peripheren Beschaltungen im Normalbetrieb bereits mit einem permanenten Leistungsbedarf von etwa 30 mW zu rechnen ist, so daß zumindest bei Anwendungen mit einer permanent verfügbaren Leistung von nur etwa 40 mW, also bei einer Klemmenspannung von 12 V (= Volt) oder weniger, die vorgenannte Komponenten der Treibereinheit 50B nur noch in sehr geringen Ausmaß an die erste Nutzspannung U_{N1} angeschlossen werden können ohne deren gewünschte hohe Stabilität zu gefährden. Insoweit ist nach einer Ausgestaltung der Erfindung ferner vorgesehen, einzelne Komponenten der Treibereinheit 50B, insb. dauerhaft, lediglich an der zweiten Nutzspannung U_{N2} zu betreiben. Im besonderen eignet sich zweite Nutzspannung U_{N2}, wie auch in Fig. 12 stellvertretend gezeigt, als Betriebsspannung für den in der Treibereinheit 50B vorgesehenen Operations-Verstäiker. Dementsprechend würde dann der Erregerstrom i_{exc} für die Magnetfeldspule im wesentlichen von der zweiten Nutzspannung U_{N2} oder eine davon abgeleitet Sekundärspannung getrieben sein.

Zur Überbrückung transienter Spannungsschwankungen seitens der Versorgungsspannung und/oder zur Pufferung allfälliger kurzzeitiger "Überlastungen" der feldgerätinternen Spannungsversorgung aufgrund eines kurzeitig höheren internen Leistungsbedarfs, beispielsweise beim Aufstarten des Meßaufnehmers oder beim Beschreiben des erwähnten persistenten Speichers EEPROM, ist in der Betriebs- und Auswerteschaltung gemäß einer Weiterbildung der Erfindung ferner eine dem temporären Speichern elektrischer Energie dienende, insb. kapazitive, Speicherschaltung vorgesehen. Der Energiepuffer C ist im hier gezeigten Ausführungsbeispiel als Teil des Spannungsstellers 30 dargestellt, sodaß praktisch permanent an der interne Eingangsspannung Uₑ liegt. Um jedoch ein Zusammenbrechen der Nutzspannung U_{N1} zumindest im Normalbetrieb sicher vermeiden zu können, ist bei der Auslegung dieser mittels der ersten Nutzspannung U _{N1} versorgten Baugruppen und Schaltungen vorab selbstverständlich sicherzustellen, daß deren maximal umgesetzte elektrische Leistung höchstens gleich ist einer im Normalbetrieb minimal verfügbaren elektrischen Leistung und/oder deren momentan umgesetzte elektrische Leistung höchstens gleich ist einer momentan verfügbaren Leistung.

Nach einer weiteren Ausgestaltung der Erfindung ist des weiteren vorgesehen, daß die zweite Nutzspannung U_{N2} im Betrieb in Abhängigkeit von einer momentanen Spannungshöhe der internen Eingangsspannung Uₑ der Feldgerät-Elektronik geregelt ist. Alternativ oder in Ergänzung dazu ist vorgesehen, daß die zweite Nutzspannung U _{N2} in Abhängigkeit von einer momentanen Spannungshöhe einer von der Versorgungsspannung abgeteilten, über der Feldgerät-Elektronik eingangs abfallenden Klemmenspannung U_{K} geregelt ist. Als vorteilhaft hat es sich hierbei ferner gezeigt, die interne Eingangsspannung Uₑ so zu regeln, daß eine zwischen dieser und der Klemmenspannung U_{K} existierende Spannungsdifferenz zumindest im Normalbetrieb möglichst konstant gehalten ist, beispielsweise auf etwa 1 V. Dies ermöglicht u.a. die Eingangsspannung Uₑ auch bei sich ändernder Betriebstemperatur des Stromstellers IS ₁ oder auch des gesamten Stromreglers und einer damit einhergehenden Änderung von dessen jeweiliger Übertragungscharakteristik vergleichsweise genau einzustellen und so auf einfache Weise eine sehr robuste Regelung für die interne Eingangsspannung Uₑ zu erreichen. Die Regelung kann dabei beispielsweise mittels eines in der erwähnten Meß- und Regeleinheit 60 vorgesehenen Differenzverstärkers realisiert werden, der eine von der internen Eingangsspannung Uₑ entsprechend abgeleitete Sensespannung von einer von der Klemmenspannung U_{K} entsprechend abgeleiteten Sensespannung subtrahiert. Alternativ oder in Ergänzung dazu kann die zweite Nutzspannung U_{N2} auch in Abhängigkeit von einer momentanen Stromstärke wenigstens eines der drei Teilströme I₁, I₂, I₃ geregelt sein. Beispielsweise kann die zweite Nutzspannung U_{N2} in Abhängigkeit von der momentanen Stromstärke des dritten Teilstroms I₃ geregelt sein, die unter Berücksichtigung der momentanen Eingangsspannung Uₑ praktisch eine momentan in der Feldgerät-Elektronik vorhandene überschüssige Leistung repräsentiert. Als Meßgröße ist hierbei im besonderen auch das den Spannungssteller steuernde und insoweit auch den dritten Teilstrom I₃ bestimmende zweite Stromstellsignal I_{3_stell} geeignet.

Zur Feststellung und/oder Überwachung eines momentanen Betriebszustands der Feldgerät-Elektronik sind gemäß einer anderen Weiterbildung der Erfindung ferner Mittel zum Vergleichen von in der Feldgerät-Elektronik abfallenden elektrischen Spannungen und/oder in der Feldgerät-Elektronik fließenden elektrischen Strömen mit vorgegebenen, insb. einstellbaren, Schwellenweiten vorgesehen. Diese Mittel zum Vergleichen von Spannungen und/oder Strömen könne beispielsweise als integraler Bestandteil der bereits erwähnten Meß- und Regeleinheit der Versorgungsschaltung ausgebildet sein. Nach einer Ausgestaltung dieser Weiterbildung der Erfindung sind die Mittel zum Vergleichen so ausgelegt, daß seitens der Feldgerät-Elektronik zumindest dann ein eine Unterversorgung der Feldgerät-Elektronik signalisierendes Alarmsignal X_{pwr_fail} erzeugt wird, wenn ein Unterschreiten eines für die die zweite Nutzspannung U_{N2} vorgegebenen minimalen Nutzspannungsgrenzwerts durch die zweite Nutzspannung U_{N2} und ein Unterschreiten eines für den dritten Teilstrom I₃ vorgegebenen minimalen Teilstromgrenzwert durch den dritten Teilstrom I₃ detektiert werden. Zum Erfassen des dritten Teilstrom I₃ kann z.B. ein im Eingansspannungsregler 30, 60 vorgesehener entsprechend vom Teilstrom I₃ durchflossener Sensewiderstand R₃ dienen, der eine im wesentlichen stromproportionale Sensespannung liefert. Nach einer weiteren Ausgestaltung der Erfindung steuert die Meß- und Regeleinheit 60, den Spannungssteller 30 mittels des Stromstellsignals *I_{3_stell}* so, daß der dritte Teilstrom I₃, insb. nur dann; fließt, wenn der die zweite Nutzspannung U_{N2} mit wenigstens einer zugehörigen Referenzspannung vergleichende Komparator ein Überschreiten eines für die zweite Nutzspannung U_{N2} vorgegebenen maximalen Nutzspannungsgrenzwerts durch die zweite Nutzspannung U_{N2} signalisiert. Bei den Mitteln zum Vergleichen von Spannungen und/oder Strömen kann es sich beispielsweise um einfache Komparatoren handeln, die die jeweilige Sensespannung mit einem zugehörigen, beispielsweise mittels der Eingangsspannung Uₑ intern erzeugten, dem jeweiligen Schwellenwert proportionalen Referenzspannung vergleicht.

Bei der erfindungsgemäßen Feldgerät-Elektronik ist, wie bereits eingangs angedeutet, ferner vorgesehen, daß zumindest Teile der internen Betriebs- und Auswerteschaltung 50, insb. aber die gesamte internen Betriebs- und Auswerteschaltung 50, zumindest vom Strömsteller IS₁ galvanisch getrennt ist. Darüber hinaus kann es jedoch durchaus von Vorteil sein, die interne Betriebs- und Auswerteschaltung 50, wie auch aus Fig. 5 ohne weiteres ersichtlich, sowohl vom Stromsteller IS₁ als auch vom Spannungssteller 30 galvanisch getrennt zu halten. Insoweit sind bei dieser Ausgestaltung der Erfindung auch der gegebenenfalls vorhandene Mikroprozessor µC und/oder der auch der gegebenenfalls vorhandene Signalprozessor als Komponente der Betriebs- und Auswerteschaltung 50 gleichermaßen zumindest vom Stromsteller IS₁ und/oder vom Spannungssteller 30 galvanisch getrennt. In einer anderen Ausgestaltung der Erfindung ist ferner vorgesehen, daß der erste Nutzspannungsregler UR₁ von der Treiberschaltung 60B, insb. dem darin vorgesehenen wenigstens einen Verstärker und/oder vom wenigstens einen D/A-Wandler, und/oder vom wenigstens einen A/D-Wandler voneinander galvanisch getrennt gehalten ist. Zur Realisierung der galvanischen Trennung zwischen Betriebs- und Auswerteschaltung 50 und zumindest dem Stromsteller IS₁ ist gemäß einer vorteilhaften Weiterbildung ferner vorgesehen, daß bereits auch der zweite Nutzspannungsregler UR₂ von Stromsteller IS₁ und/oder Spalinungssteller 30 galvanisch getrennt ist.

Gemäß einer weiteren Ausgestaltung der Erfindung ist vorgesehen, daß der erste Nutzspannungsregler UR₁ und die interne Betriebs- und Auswerteschaltung 50 voneinander galvanisch getrennt sind. Beispielsweise können der Nutzspannungsregler UR₁ und die interne Betriebs- und Auswerteschaltung 50 dafür mittels eines Übertragers 91 miteinander gekoppelt sein. Anstelle des hier einzigen Übertragers 91 können aber auch, falls erforderliche zwei oder mehrere solcher Übertrager zur Kopplung von Nutzspannungsregler UR₁ und interner Betriebs- und Auswerteschaltung 50 verwendet werden. Es ist für den Fachmann hierbei ohne weiteres erkennbar und bedarf insoweit keiner ausführlichen Erläuterung, daß bei Verwendung von Übertragern zur galvanisch getrennten Kopplung zweier auf der Basis von Gleichspannung betriebenen elektrischer Komponenten primärseitig des Übertrager zunächst einen entsprechend Konvertierung von Gleich- zu Wechselspannung und sekundärseitig des Übertrager dementsprechend eine entsprechende Konvertierung von Wechsel- zu Gleichspannung vorzunehmen ist. Dementsprechend ist also zumindest für den Fall, daß die zu übertragende Nutzspannung U_{N1} als eine Gleichspannung ausgebildet ist, der Übertrager 91 primär- und sekundärseitig jeweils an solche elektronischen in geeigneter Weise die Gleichspannung modulierende Elektronik-Komponenten bzw. die modulierte und übertragene Spannung wieder demodulierende Elektronik-Komponenten anzukoppeln, mit denen er im Zusammenspiel als Gleichspannungswandler oder auch DC/ DC-Wandler für die vom primärseitig plazierten ersten Nutzspannungsregler UR₁ gelieferte Nutzspannung U_{N1} wirkt. Die Gleichspannung entsprechend modulierende Elektronik-Komponenten können beispielsweise als Zerhacker wirkende Rechteckmodulatoren sein, während beispielsweise passive oder synchrongetaktete Gleichrichter als entsprechend demodulierende Elektronik-Komponenten dienen können.

Nach einer Weiterbildung der Erfindung sind der Stromsteller IS₁ und zumindest Teile der internen Betriebs- und Auswerteschaltung 50 dadurch auf sehr einfache und effektive Weise voneinander galvanisch getrennt gehalten, daß bereits zwischen beiden Nutzspannungsregler UR₁, UR₂ eine galvanische Trennung eingefügt ist. Dafür ist der Übeitrager 91, wie auch in Fig. 5 dargestellt, zwischen die beiden Nutzspannungsreglern UR₁, UR₂ eingesetzt, so daß letztere beiden, insb. ausschließlich, über den - hier einzigen - der Kopplung der beiden Nutzspannungsregler UR₁, UR₂ dienenden Übertrager 91 miteinander gekoppelt sind, ggf. unter Bildung eines geeigneten Gleichspannungswandlers. Gemäß einer vorteilhaften Ausgestaltung der Erfindung ist dafür der zweite Nutzspannungsregler UR₂ von der vom ersten Nutzspannungsregler UR₁ gelieferten Nutzspannung U_{N1} oder/ und zumindest von einer von der ersten Nutzspannung U_{N1} abgeleiteten Sekundärspannung U_{N1}' gespeist. Der zweite Nutzspannungsregler UR₂ wirkt insoweit also als ein vom ersten Nutzspannungsregler UR₁ mit der im obigen Sinne konstanten internen Nutzspannung U_{N1} versorgter Verbraucher.

Wie bereits erwähnt, ist der zweite Nutzspannungsregler UR₂ im Betrieb von der Meß- und Regeleinheit 60 angesteuert, zumindest insoweit, als das von der Meß- und Regeleinheit 60 das momentan für die zweite Nutzspannung UN₂ einzustellende Spannungsniveau vorgegeben wird. Dafür liefert die Meß- und Regeleinheit 60 im Betrieb zumindest zeitweise ein den zweite Nutzspannungsregler UR₂ entsprechend ansteuerndes Spannungssteuersignals U_{N2_soll}, das die für die zweite Nutzspannung U_{N2} momentan einzustellende Spannungshöhe repräsentiert. Gemäß einer weiteren Ausgestaltung der Erfindung ist hierbei ferner vorgesehen, daß die Meß- und Regeleinheit 60 und der zweite Nutzspannungsregler UR₂ voneinander galvanisch getrennt gehalten sind. Die Meß- und Regeleinheit 60 kann dabei, wie auch in Fig. 5 schematisch dargestellt; beispielsweise mittels wenigstens eines zumindest zeitweise in den Signalpfad des Spannungssteuersignals U_{N2_soll} eingeschalteten Übertragers 92 und/ oder mittels wenigstens eines zumindest zeitweise in den Signalpfad des Spannungssteuersignals U_{N2_soll} eingeschalteten Optokopplers an den zweiten Nutzspannungsregler UR₂ gekoppelt sein.

Ferner ist in einer weiteren Ausgestaltung der Erfindung vorgesehen, daß die Meß-und Regeleinheit 60 und die interne Betriebs- und Auswerteschaltung 50 voneinander galvanisch getrennt gehalten sind.

Die Meß- und Regeleinheit 60 und die interne Betriebs- und Auswerteschaltung 50 können dabei, wie auch in Fig. 5 schematisch dargestellt, beispielsweise mittels wenigstens eines Übertragers 93 und/oder mittels wenigstens eines Optokopplers miteinander gekoppelt sein. Insoweit ist bei dieser Ausgestaltung der Erfindung die interne Betriebs- und Auswerteschaltung 50 auch von dem gegebenenfalls vorhandenen wenigstens einen Komparator für den dritten Teilstrom I₃ und/oder von dem gegebenenfalls vorhanden wenigstens einen Komparator für die zweite Nutzspannung UN₂ galvanisch getrennt gehalten. Gemäß einer Weiterbildung dieser Ausgestaltung der Erfindung ist dafür bereits der zweite Nutzspannungsregler UR₂ vom wenigstens einen Komparator für den dritten Teilstrom I₃ und/oder vom wenigstens einen Komparator für die zweite Nutzspannung UN₂ galvanisch getrennt gehalten. Je nach Anzahl der Signalausgänge der Betriebs- und Auswerteschaltung 50 sowie der Meß- und Regeleinheit 60, die im einzelnen jeweils direkt mit einem korrespondierenden Signaleingang der Betriebs- und Auswerteschaltung 50 oder der Meß- und Regeleinheit 60 galvanisch getrennt zu koppeln sind, kann es durchaus erforderlich sein zusätzlich zum Übertrager 93 entsprechend weitere Übertrager in der Feldgerät-Elektronik vorzusehen. Beispielsweise kann der Übertrager 93 dazu dienen, das Alarmsignal X_{pwr_fail} von der der Meß- und Regeleinheit 60 zur Betriebs- und Auswerteschaltung 50 zu übertragen, während, wie in Fig. 5 dargestellt., ein entsprechender Übertrager 94 zur Übertragung des Meßweilsigilals X_{M} verwendet werden.

Für den oben beschriebenen Fall, daß die Feldgerät-Elektronik eine Kommünikationsschaltung COM aufweist, ist gemäß einer weiteren vorteilhaften Ausgestaltung der Erfindung zumindest die Kommunikationsschaltung COM yom Stromsteller IS₁ galvanisch getrennt gehalten. Dafür weist die Feldgerät-Elektronik wenigstens einen weiteren Optokoppler oder, wie auch in Fig. 5 dargestellt, wenigstens einen weiteren Übertrager 95 auf.

Es versteht sich im übrigen auch bei den oben aufgezeigten Varianten der galvanischen Trennung jeweils praktisch von selbst, daß auch dafür die gegebenenfalls verwendeten Übertrager 92, 93, 94, 95 jeweils als Komponenten von entsprechend geeigneten DC/DC-Wandlern zu verstehen sind, zumindest für den Fall, daß auf diesem Wege Gleichspannungen/-ströme zu übertragen sind. Für den Fall, daß getaktete Signale, wie z.B. Digitalsignale, via Übertrager oder Optokoppler zu übertragen sind, beispielsweise das von der Meß- und Regeleinheit 60 an die interne Betriebs- und Auswerteschaltung 50 gelieferte Alarmsignal x _{pwr_fai}l oder, wie auch in Fig. 5 schematisch dargestellt, das von der interne Betriebs- und Auswerteschaltung 50 an die Meß- und Regeleinheit 60 gelieferte Meßwertsignal X_{M}, können die jeweils verwendeten Übeitrager bzw. Optokoppler, falls erforderlich, mit entsprechenden Schaltungskomponenten ergänzt werden, die die jeweils zu übertragenden Signale in geeigneter, dem Fachmann an und für sich bekannter Weise konvertieren. Beispiele für solche der Übertragung von Digitalsignalen über galvanische Trennstellen dienende Schaltungen sind u.a. in der US-B 68 53 685, der US-A 59 52 849, oder der DE-A 102 51 504 gezeigt.

Bei den oben aufgezeigten Varianten der galvanischen Trennung kann es zudem durchaus von Vorteil sein, wenn der gegebenenfalls verwendete wenigstens eine Übertrager in der Weise im Multiplexbetrieb eingesetzt ist, daß primärseitig zwei oder mehrere Teilschaltungen angeschlossen sind, deren jeweilige Ausgangssignale jeweils über diesen einen Übertrager übertragen werden, beispielsweise zeitversetzt sequentiell und/oder auf unterschiedlichen Frequenzbändern. Alternativ oder in Ergänzung dazu kann der gegebenenfalls verwendete wenigstens eine Übertrager auch so im Demultiplexbetrieb eingesetzt werden, daß sekundärseitig zwei oder mehrere Teilschaltungen angeschlossen sind, die jeweils über diesen einen Übertrager übertragene Signale selektiv empfangen, beispielsweise zeitversetzt getaktet sequentiell und/oder wiederum auf unterschiedlichen Frequenzbändern. Darüberhinaus ist es auch möglich, ein und denselben Übertrager bidirektional im Duplexbetrieb oder im Halbduplexbetrieb zu verwenden. Gleichermaßen können zudem auch allfällig verwendete Optokoppler gegebenenfalls unidirektional oder bidirektional im Multiplex- und/oder im Demultiplexbetrieb eingesetzt werden.

## Patentansprüche

1. Von einer externen elektrischen Energieversorgung (70) gespeiste, insb. mit der externen elektrischen Energieversorgung lediglich über ein einziges Paar elektrischer Leitungen (2L) elektrisch verbundene, Feldgerät-Elektronik (20) für ein Feldgerät, wobei die externe elektrische Energieversorgung (70) eine, insb. uni-polare, Versorgungsspannung (Uᵥ) bereitstellt und einen davon getriebenen, insb. unipolaren und/oder binären, veränderlichen Versorgungsstrom (I) liefert, welche Feldgerät-Elektronik (20) umfaßt:
- einen vom Versorgungsstrom (I) durchflossenen Stromsteller (IS₁) zum Einstellen und/oder Modulieren, insb. Takten, des Versorgungsstroms (I),
- eine interne Betriebs- und Auswerteschaltung (50) zum Steuern des Feldgeräts, sowie
- eine an einer von der Versorgungsspannung (Uᵥ) abgeteilten internen Eingangsspannung (Uₑ) der Feldgerät-Elektronik (20) anliegende, die interne Betriebs- und Auswerteschaltung (50) speisende interne Versorgungsschaltung (40)
-- mit einem zumindest zeitweise von einem, insb. veränderlichen, ersten Teilstrom (I₁) des Versorgungsstroms (I) durchflossenen ersten Nutzspannungsregler (UR₁), der eine auf einem vorgebbaren ersten Spannungsniveau (*U_{N1_soll}*) im wesentlichen konstant geregelten erste interne Nutzspannung (U_{N1}) in der Feldgerät-Elektronik (20) bereitstellt,
-- mit einem zumindest zeitweise von einem, insb. veränderlichen, zweiten Teilstrom (I₂) des Versorgungsstroms (I) durchflossenen zweiten Nutzspannungsregler (UR₂), der eine über einen vorgebbaren Spannungsbereich veränderliche zweite interne Nutzspannung (U_{N2}) in der Feldgerät-Elektronik (20) bereitstellt, sowie
-- mit einem zumindest zeitweise von einem, insb. veränderlichen, dritten Teilstrom (I₃) des Versorgungsstroms (I) durchflossenen Spannungssteller (30) zum Einstellen und Halten der internen Eingangsspannung (Uₑ) der Feldgerät-Elektronik (20) auf einem vorgebbaren, insb. im Betrieb veränderlichen, Spannungsniveau,
- wobei die beiden Nutzspannungsregler (UR₁, UR₂) voneinander galvanisch getrennt sind.

2. Feldgerät-Elektronik nach dem vorherigen Anspruch, wobei in der Betriebs- und Auswerteschaltung (50) wenigstens ein Mikroprozessor (µC) vorgesehen ist, bei dem die erste Nutzspannung (U_{N1}) oder eine davon abgeleitet Sekundärspannung zumindest anteilig als Betriebsspannung dient.

3. Feldgerät-Elektronik nach dem vorherigen Anspruch,
- wobei der erste Nutzspannungsregler (UR₁) und der Mikroprozessor (µC) voneinander galvanisch getrennt sind; und/oder
- wobei der Stromsteller (IS₁) und der Mikroprozessor (µC) voneinander galvanisch getrennt sind; und/oder
- wobei der Spannungssteller (30) und der Mikroprozessor (µC) voneinander galvanisch getrennt sind.

4. Feldgerät-Elektronik nach einem der vorherigen Ansprüche, weiters umfassend wenigstens einen Komparator, der eine vom dritten Teilstrom des Versorgungsstroms abgeleitete Sensespannung mit einer zugehörigen Referenzspannung vergleicht.

5. Feldgerät-Elektronik nach dem vorherigen Anspruch,
- wobei der wenigstens eine Komparator für den dritten Teilstrom (I₃) und der zweite Nutzspannungsregler (UR₂) voneinander galvanisch getrennt sind; und/oder
- wobei der wenigstens eine Komparator für den dritten Teilstrom (I₃) und die interne Betriebs- und Auswerteschaltung (50) voneinander galvanisch getrennt sind.

6. Feldgerät-Elektronik nach einem der vorherigen Ansprüche, weiters umfassend wenigstens einen Komparator, der die zweite Nutzspannung mit wenigstens einer zugehörigen Referenzspannung vergleicht.

7. Feldgerät-Elektronik nach dem vorherigen Anspruch,
- wobei der wenigstens eine Komparator für die zweite Nutzspannung (UN₂) und der zweite Nutzspannungsregler (UR₂) voneinander galvanisch getrennt sind; und/oder
- wobei der wenigstens eine Komparator für die zweite Nutzspannung (UN₂) und die interne Betriebs- und Auswerteschaltung (50) voneinander galvanisch getrennt sind.

8. Feldgerät-Elektronik nach einem der vorherigen Ansprüche, weiters umfassend eine Meß- und Regeleinheit (60) zum Erfassen und Einstellen von in der Feldgerät-Elektronik abfallenden Spannungen, insb. der zweiten Nutzspannung, und/oder in der Feldgerät-Elektronik fließenden Strömen, insb. dem zweiten und/oder dritten Teilstrom.

9. Feldgerät-Elektronik nach Anspruch 8,
- wobei die Meß- und Regeleinheit (60), den Spannungssteller so steuert, daß der dritte Teilstrom fließt, wenn der die zweite Nutzspannung mit wenigstens einer zugehörigen Referenzspannung vergleichende Komparator ein Überschreiten eines für die zweite Nutzspannung vorgegebenen maximalen Nutzspannungsgrenzwerts durch die zweite Nutzspannung signalisiert; und/oder
- wobei die Meß- und Regeleinheit (60) anhand der Eingangsspannung (Uₑ) und/oder der Klemmenspannung (U_{K}) eine zwischen der Eingangsspannung (Uₑ) und der Klemmenspannung (U_{K}) bestehende Spannungsdifferenz (U_{K} - Uₑ) auf eine vorgegebene Höhe, insb. gleich oder größer 1 V, einstellt; und/oder
- wobei der zweite Nutzspannungsregler (UR₂) von der Meß- und Regeleinheit (60) gesteuert ist; und/oder -
- wobei die Meß- und Regeleinheit (60) zumindest zeitweise ein den zweite Nutzspannungsregler (UR₂) ansteuerndes Spannungssteuersignals (U_{N2_soll}) liefert, das eine für die zweite Nutzspannung (U_{N2}) momentan einzustellende Spannungshöhe repräsentiert; und/oder
- wobei die Meß- und Regeleinheit (60) und der zweite Nutzspannungsregler (UR₂) voneinander galvanisch getrennt sind; und/oder.
- wobei die Meß- und Regeleinheit (60) und der zweite Nutzspannungsregler (UR₂) mittels wenigstens eines Übertragers (92) und/oder mittels wenigstens eines Optokopplers aneinander gekoppelt sind; und/oder
- wobei die Meß- und Regeleinheit (60) und die interne Betriebs- und Auswerteschaltung (50) voneinander galvanisch getrennt sind; und/oder
- wobei die Meß- und Regeleinheit (60) und die interne Betriebs- und Auswerteschaltung (50) mittels wenigstens eines Übertragers (93) und/oder mittels wenigstens eines Optokopplers miteinander gekoppelt sind.

10. Feldgerät-Elektronik nach einem der vorherigen Ansprüche,
- wobei die beiden Nutzspannungsregler (UR₁, UR₂) mittels wenigstens eines Übertragers (91) miteinander gekoppelt sind; und/oder
- wobei der Stromsteller (IS₁) und der zweite Nutzspannungsregler (UR₂) voneinander galvanisch getrennt sind; und/oder
- wobei der Stromsteller (IS₁) und die interne Betriebs- und Auswerteschaltung (50) voneinander galvanisch getrennt sind; und/oder
- wobei der Spannungssteller (30) und der zweite Nutzspannungsregler (UR₂) voneinander galvanisch getrennt sind; und/oder
- wobei der Spannungssteller (30) und die interne Betriebs- und Auswerteschaltung (50) voneinander galvanisch getrennt sind; und/oder
- wobei die Betriebs- und Auswerteschaltung (50) zumindest zeitweise sowohl von einem von der ersten Nutzspannung (U_{N1}) getriebenen, insb. veränderlichen, ersten Nutzstrom (I_{N1}) als auch von einem von der zweiten Nutzspannung (U_{N2}) getriebenen, insb. veränderlichen, zweiten Nutzstrom (I_{N2}) durchflossen ist; und/oder
- wobei der zweite Nutzspannungsregler (UR₂) von der vom ersten Nutzspannungsregler (UR₁) gelieferten Nutzspannung (U_{N1}) oder/und einer davon abgeleiteten Sekundärspannung (U_{N1}') gespeist ist; und/oder
- wobei die interne Eingangsspannung (Uₑ) der Feldgerät-Elektronik in Abhängigkeit von einer momentanen Spannungshöhe einer von der Versorgungsspannung (U_{V}) abgeteilten, über der Feldgerät-Elektronik eingangs abfallenden Klemmenspannung (U_{K}) geregelt ist; und/oder
- wobei der erste Nutzspannungsregler (UR₁) und die interne Betriebs- und Auswerteschaltung (50) voneinander galvanisch getrennt sind; und/oder
- wobei der erste Nutzspannungsregler (UR₁) und die interne Betriebs- und Auswerteschaltung (50) mittels wenigstens eines Übertragers (91) miteinander gekoppelt sind; und/oder
- wobei die zweite Nutzspannung (U_{N2}) in Abhängigkeit von einer momentanen Spannungshöhe einer von der Versorgungsspannung (U_{V}) abgeteilten, über der Feldgerät-Elektronik eingangs abfallenden Klemmenspannung (U_{K}) geregelt ist; und/oder
- wobei die interne Eingangsspannung (Uₑ) der Feldgerät-Elektronik in Abhängigkeit von der momentanen Spannungshöhe der Klemmenspannung (U_{K}) geregelt ist; und/oder
- wobei mittels des Spannungsstellers (30) die interne Eingangsspannung (Uₑ) der Feldgerät-Elektronik (20) auf einem vorgebbaren, insb. im Betrieb veränderlichen, Spannungsniveau gehalten ist, das niedriger ist als die Klemmenspannung (U_{K}); und/oder
- wobei das Spannungsniveau, auf dem die interne Eingangsspannung (Uₑ) mittels des Spannungsstellers (30) gehalten ist, im Betrieb; insb. stufenweise oder im wesentlichen kontinuierlich, veränderlich ist; und/oder
- wobei die zweite Nutzspannung (U_{N2}) in Abhängigkeit von einer momentanen Spannungshöhe der internen Eingangsspannung (Ue) der Feldgerät-Elektronik geregelt ist; und/oder
- wobei die zweite Nutzspannung (U_{N2}) in Abhängigkeit von einer momentanen Stromstärke wenigstens eines der drei Teilströme (I₁, I₂, I₃) geregelt ist; und/oder
- wobei die zweite Nutzspannung (U_{N2}) in Abhängigkeit von der momentanen Stromstärke des dritten Teilstroms (I₃) geregelt ist; und/oder
- wobei die zweite Nutzspannung (U_{N2}) in Abhängigkeit von der momentanen Stromstärke des zweiten Teilstroms (I₂) und einer momentanen Spannungshöhe der internen Eingangsspannung (Uₑ) der Feldgerät-Elektronik geregelt ist; und/oder
- wobei die speisende externe Energieversorgung (70) eine Versorgungsspannung (U_{V}) mit veränderlicher, insb. schwankender, Spannungshöhe bereitstellt; und/oder
- wobei die von der externen Energieversorgung (70) gelieferte Versorgungsspannung (U_{V}) einen Versorgungsstrom (I) mit veränderlicher, insb. im wesentlichen in vorab nicht bestimmbarer Weise schwankender, Stromstärke treibt; und/oder
- wobei in der Betriebs- und Auswerteschaltung (50) eine dem temporären Speichern elektrischer Energie dienende Speicherschaltung (C) vorgesehen ist; und/oder
- wobei der Spannungssteller (30) der Dissipation elektrischer Energie und dem Abführen von dabei entstandener Wärmeenergie dienende Komponenten (IS2), insb. ein Halbleiterelement mit einem Kühlkörper oder dergleichen, aufweist; und/oder
- wobei in der Betriebs- und Auswerteschaltung (50) wenigstens ein, insb. vom ersten Nutzspannungsregler (UR₁) galvanisch getrennter, digitaler Signalprozessor vorgesehen ist, bei dem die erste Nutzspannung (U_{N1}) oder eine davon abgeteilte Sekundärspannung zumindest anteilig als Betriebsspannung dient; und/oder
- wobei in der Betriebs- und Auswerteschaltung (50) wenigstens ein, insb. vom ersten Nutzspannungsregler (UR₁) galvanisch getrennter, Verstärker vorgesehen ist, bei dem zumindest ein der beiden Nutzspannung (U_{N1}, U_{N2}) oder eine davon abgeleitet Sekundärspannung zumindest anteilig als Betriebsspannung dient; und/oder
- wobei in der Betriebs- und Auswerteschaltung wenigstens ein, insb. vom ersten Nutzspannungsregler (UR₁) galvanisch getrennter, A/D-Wandler vorgesehen ist, bei dem die erste Nutzspannung (U_{N1}) oder eine davon abgeleitet Sekundärspannung zumindest anteilig als Betriebsspannung dient; und/oder
- wobei in der Betriebs- und Auswerteschaltung wenigstens ein, insb. vom ersten Nutzspannungsregler (UR₁) galvanisch getrennter, D/A-Wandler vorgesehen ist, bei dem zumindest ein der beiden Nutzspannung (U_{N1}, U_{N2}) oder eine davon abgeleitet Sekundärspannung zumindest anteilig als Betriebsspannung dient.

11. Feldgerät-Elektronik nach einem der vorherigen Ansprüche, die weiters dem Erzeugen von im wesentlichen stromproportionalen Sensespannung dienende Sensewiderstände (R₁, R₂, R₃) umfaßt.

12. Feldgerät zum Messen und/oder Überwachen wenigstens eines vorgegebenen physikalischen und/oder chemischen Parameters, insb. eines Durchflusses, einer Dichte, einer Viskosität, eines Füllstands, eines Drucks, einer Temperatur, eines pH-Wertes oder dergleichen, eines, insb. in einer Rohrleitung und/oder einem Behälter geführten, Mediums, welches Feldgerät eine Feldgerät-Elektronik nach einem der Ansprüche 1 bis 11 sowie einen mit der Feldgerät-Elektronik elektrisch gekoppelten physikalisch-elektrischen, insb. wenigstens ein in den Verlauf einer Rohrleitung eingesetztes und/oder im Betrieb zumindest zeitweise vibrierendes Meßrohr (13) zum Führen des Mediums aufweisenden, Meßaufnehmer (10) umfaßt, der auf Änderungen des wenigstens einen Parameters reagiert und zumindest zeitweise wenigstens ein mit dem Parameter korrespondierendes Meßsignal (S₁, S₂), insb. eine veränderliche Signalspannung und/oder einen veränderlichen Signalstrom, abgibt.

13. Feldgerät nach dem vorherigen Anspruch,
- wobei die Betriebs- und Auswerteschaltung der Feldgerät-Elektronik mittels des wenigstens einen Meßsignals einen den wenigstens einen zu messenden und/oder zu überwachenden Parameter momentan, insb. digital, repräsentierenden Meßwert (X_{M}) zumindest zeitweise erzeugt; und/oder
- wobei die Betriebs- und Auswerteschaltung wenigstens einen A/D-Wandler für das wenigstens eine Meßsignal aufweist, bei welchem A/D-Wandler die erste Nutzspannung oder eine davon abgeleitet Sekundärspannung zumindest anteilig als Betriebsspannung dient; und/oder
- wobei die Betriebs- und Auswerteschaltung wenigstens einen, insb. mit einem A/D-Wandler verbundenen und/oder mittels eines Mikroprozessors und/oder eines Signalprozessor gebildeten, Mikrocomputer für das Generieren des Meßwerts aufweist, bei welchem Mikrocomputer die erste Nutzspannung zumindest anteilig als eine Betriebsspannung dient.

14. Feldgerät nach Anspruch 12 oder 13, wobei die Feldgerät-Elektronik den Versorgungsstrom unter Berücksichtigung des den wenigstens einen zu messenden und/oder zu überwachenden Parameter momentan repräsentierenden Meßwerts einstellt, insb. derart, daß der Meßwert zumindest zeitweise einer Amplitude des Versorgungsstroms auf moduliert, und/oder daß der Versorgungsstrom zumindest zeitweise in Abhängigkeit vom Meßwert getaktet ist.

15. Feldgerät nach einem der Ansprüche 12 bis 14, wobei die Betriebs- und Auswerteschaltung wenigstens eine, insb. wenigtens einen Operations-Verstärker aufweisende und/oder wenigstens einen D/A-Wandler aufweisende und/oder wenigstens einen Signalgenerator zum Erzeugen des Treibersignals aufweisende, Treiberschaltung (50B) für den Meßaufnehmer (10) umfaßt, bei der die zweite Nutzspannung oder eine davon abgeleitet Sekundärspannung zumindest anteilig als Betriebsspannung dient.

16. Feldgerät nach dem vorherigen Anspruch, wobei der Meßaufnehmer eine, insb. veränderliche und/oder von der Treiberschaltung gespeiste, elektrische Impedanz, insb. eine Magnetspule von veränderlicher Induktivität und/oder einen Meßkondensator von veränderlicher Kapazität, aufweist.

17. Feldgerät nach dem vorherigen Anspruch,
- wobei die elektrische Impedanz von der Treiberschaltung gespeist ist; und/oder
- wobei sich die elektrische Impedanz des Meßaufnehmers in Abhängigkeit vom wenigstens eine zu messenden und/oder zu überwachenden Parameter verändert, insb. derart, daß eine über der sich ändernden elektrischen Impedanz abfallende Signalspannung und/oder ein durch die sich ändernden elektrische Impedanz fließender Signalstrom als Meßsignal dient.

18. Feldgerät nach einem der Ansprüche 12 bis 17, wobei am Meßaufnehmer wenigstens eine Magnetspule (26, 36) zum Erzeugen eines, insb. veränderlichen, Magnetfeldes angeordnet ist.

19. Feldgerät nach dem vorherigen Anspruch,
- wobei die wenigstens eine Magnetspule (26, 36) im Betrieb des Meßaufnehmers (10) zumindest zeitweise von einem das Magnetfeld generierenden, insb. bipolaren und/oder in einer Stromstärke veränderlichen, Erregerstrom (i_{exc}) durchflossen ist, der von der zweiten Nutzspannung oder eine davon abgeleitet Sekundärspannung getrieben ist; und/oder
- wobei die Magnetspule (26, 36) via Magnetfeld mit einem Tauchanker (27, 37) in Wechselwirkung steht, und wobei Magnetfeldspule und Tauchanker relative zueinander beweglich sind.

20. Feldgerät nach dem vorherigen Anspruch, wobei der Meßaufnehmer wenigstens ein Meßrohr (13), insb. zwei Meßrohre, zum Führen von des Mediums umfaßt, welches Meßrohr, angetrieben von einer mittels der Magnetfeldspule und dem Tauchanker gebildeten elektro-mechanischen, insb. elektro-dynamischen, Erregeranordnung, im Betrieb des Meßaufnehmers zumindest zeitweise vibriert.

21. Feldgerät nach einem der Ansprüche 12 bis 20, wobei der Meßaufnehmer dem Erfassen wenigstens eines Parameters von einem das Medium vorhaltenden Behälter, insb. einem Füllstand, dient, und wobei der Meßaufnehmer dafür wenigstens eine in ein Lumen des Behälters hineinragende oder zumindest mit dem Lumen kommunizierende Meßsonde, insb. eine Mikrowellenantenne, eine Gouboun-Leitung, einen vibrierenden Tauchkörper oder dergleichen, umfaßt.

22. Feldgerät nach einem der Ansprüche 12 bis 21, das zumindest zeitweise mit einer vom Feldgerät entfernt angeordneten externen Steuer- und Kontroll-Einheit über eine Datenübertragungssystem kommuniziert, wobei in der Feldgerät-Elektronik dafür ferner eine die Kommunikation via Datenübertragungssystem kontrollierende Kommunikationsschaltung (COM) vorgesehen ist; insb. derart daß die erste Nutzspannung (U_{N1}) oder eine davon abgeteilte Sekundärspannung zumindest anteilig als Betriebsspannung für die Kommunikationsschaltung (COM) dient, und/oder derart, daß der Stromsteller (IS₁) und die Kommunikationsschaltung (COM) voneinander galvanisch getrennt gehalten sind.

23. Feldgerät nach einem der Ansprüche 12 bis 22, wobei die Feldgerät-Elektronik mit der externen elektrischen Energieversorgung (70) lediglich über ein einziges Paar elektrischer Leitungen (2L) elektrisch verbunden ist und wobei die Feldgerät-Elektronik (20) den zumindest zeitweise erzeugten, den wenigstens einen zu messenden und/oder zu überwachenden Parameter momentan, insb. digital, repräsentierenden Meßwert (X_{M}) über das einzige Paar elektrischer Leitungen (2L) an eine in der externen elektrischen Energieversorgung (70) vorgesehene und/oder mit dieser elektrisch gekoppelte Auswerteschaltung (80) überträgt, insb. derart, daß eine momentane, insb. auf einen zwischen 4 mA und 20 mA liegenden Wert eingestellte, Stromstärke des Versorgungsstroms den momentan erzeugten Meßwert (X_{M}) repräsentiert.

24. Feldgerät zum Einstellen wenigstens eines vorgegebenen physikalischen und/oder chemischen Parameters, insb. eines Durchflusses, einer Dichte, einer Viskosität, eines Füllstands, eines Drucks, einer Temperatur, eines pH-Wertes oder dergleichen, eines, insb. in einer Rohrleitung und/oder einem Behälter geführten, Mediums, welches Feldgerät eine Feldgerät-Elektronik nach einem der Ansprüche 1 bis 11 sowie ein mit der Feldgerät-Elektronik elektrisch gekoppeltes elektrischphysikalisches Stellglied umfaßt, das auf Änderungen wenigstens eines angelegten Steuersignais, insb. eine veränderliche Signalspannung und/oder einen veränderlichen Signalstrom, mit einer den einzustellenden Parameter beeinflussenden Verstellbewegung reagiert.

## Claims

1. Field device electronics (20) for a field device, said field device electronics being powered by an external electrical power supply system (70), particularly field device electronics that are electrically connected to the external electrical power supply system merely via a single pair of electrical wires (2L), wherein the external electrical power supply (70) provides a supply voltage (Uv), particularly a unipolar supply voltage, and delivers a variable supply current (I), particularly unipolar and/or binary, said field device electronics (20) comprising:
- a current controller (IS₁) through which the supply current flows (I) and which is used to set and/or modulate, in particular to clock, the supply current (I)
- an internal operating and evaluation circuit (50) to control the field device, and
- applied to an internal input voltage (Ue) of the field device electronics(20) which is divided from the supply voltage (Uv) an internal power supply circuit (40) which powers the internal operating an evaluation circuit (50)
-- with a first useful voltage regulator (UR₁) through which at least temporarily a first, particularly variable, component current (I₁) of the supply current (I) flows, said useful voltage regulator providing a first internal useful voltage (U_{N1}) in the field device electronics (20), said first internal useful voltage being essentially regulated constantly at a predefinable first voltage level (U_{*N1*_*tar*})
-- with a second useful voltage regulator (UR₂) through which at least temporarily a second, particularly variable, component current (I₂) of the supply current (I) flows, said useful voltage regulator providing a second internal useful voltage (U_{N2}) in the field device electronics (20), said second internal useful voltage being variable over a predefinable voltage range, and
-- with a voltage controller (30) through which at least temporarily a third, particularly variable, component current (I₃) of the supply current (I) flows, said voltage controller serving to set and hold the internal input voltage (Uₑ) of the field device electronics (20) at a predefinable voltage level which can vary particularly during operation,
- wherein the two useful voltage regulators (UR₁, UR₂) are galvanically isolated from one another.

2. Field device electronics as claimed in the previous claim, wherein at least one microprocessor (µC) is provided in the operating and evaluation circuit (50) and for said microprocessor either the first useful voltage (U_{N1}) or a secondary voltage derived therefrom is used as the operating voltage at least to some extent.

3. Field device electronics as claimed in the previous claim,
- wherein the first useful voltage regulator (UR₁) and the microprocessor (µC) are galvanically isolated from one another; and/or
- wherein the current controller (30) and the microprocessor (µC) are galvanically isolated from one another; and/or
- wherein the voltage controller (IS₁) and the microprocessor (µC) are galvanically isolated from one another.

4. Field device electronics as claimed in one of the previous claims, further comprising at least one comparator which compares a sensing voltage, derived from the third component current of the supply current, with an associated reference voltage.

5. Field device electronics as claimed in the previous claim
- wherein the at least one comparator for the third current component (I₃) and the second useful voltage regulator (UR₂) are galvanically isolated from one another; and/or
- wherein the at least one comparator for the third current component (I₃) and the internal operating and evaluation circuit (50) are galvanically isolated from one another.

6. Field device electronics as claimed in one of the previous claims, further comprising at least one comparator which compares the second useful voltage with at least one associated reference voltage.

7. Field device electronics as claimed in the previous claim
- wherein the at least one comparator for the second useful voltage (U_{N2}) and the second useful voltage regulator (UR₂) are galvanically isolated from one another; and/or
- wherein the at least one comparator for the second useful voltage (U_{N2}) and the internal operating and evaluation circuit (50) are galvanically isolated from one another.

8. Field device electronics as claimed in one of the previous claims, further comprising a measuring and control unit (60) for measuring and setting voltages dropping in the field device electronics, particularly the second useful voltage, and /or currents flowing in the field device electronics, particularly the second and/or third current component.

9. Field device electronics as claimed in Claim 8,
- wherein the measuring and control unit (60) controls the voltage controller in such a way that the third current component flows when the comparator, comparing the second useful voltage with at least one associated reference voltage, signals that the second useful voltage has exceeded a predefined maximum useful voltage limit for the second useful voltage; and/or
- wherein the measuring and control unit (60) uses the input voltage (Uₑ) and/or the terminal voltage (U_{K}) to set a voltage difference (U_{K}-Uₑ), which exists between the input voltage (Uₑ) and the terminal voltage (U_{K}), to a predefined level, especially equal to or greater than 1 V; and/or
- wherein the second useful voltage regulator (UR₂) is controlled by the measuring and control unit (60); and/or
- wherein the measuring and control unit (60) at least temporarily supplies a voltage control signal (U_{N2_tar}) that controls the second useful voltage regulator (UR₂) said signal representing a voltage level that is to be currently set for the second useful voltage (U_{N2}); and/or
- wherein the measuring and control unit (60) and the second useful voltage regulator (UR₂) are galvanically isolated from one another; and/or
- wherein the measuring and control unit (60) and the second useful voltage regulator (UR₂) are coupled to one another with at least one transformer (92) and/or at least one optocoupler; and/or
- wherein the measuring and control unit (60) and the internal operating and evaluation circuit (50) are galvanically isolated from one another, and/or
- wherein the measuring and control unit (60) and the internal operating and evaluation circuit (50) are coupled to one another with at least one transformer (93) and/or at least one optocoupler;

10. Field device electronics as claimed in one of the previous claims,
- wherein the two useful voltage regulators (UR₁. UR₂) are coupled together with at least one transformer (91); and/or
- wherein the current controller (IS₁) and the second useful voltage regulator (UR₂) are galvanically isolated from one another; and/or
- wherein the current controller (IS₁) and the internal operating and evaluation circuit (50) are galvanically isolated from one another; and/or
- wherein the voltage controller (30) and the second useful voltage regulator (UR₂) are galvanically isolated from one another; and/or
- wherein the voltage controller (30) and the internal operating and evaluation circuit (50) are galvanically isolated from one another; and/or
- wherein, at least at times, a first particularly variable useful current (I_{N1}) which is driven by the first useful voltage (U_{N1}), and a second particularly variable useful current (I_{N2}) which is driven by the second useful voltage (U_{N2}) flow through the operating and evaluation circuit (50); and/or
- wherein the second useful voltage regulator (UR₂) is powered by the useful voltage (U_{N1}) supplied by the first useful voltage regulator (UR₁) and/or by a secondary voltage (U_{N1}') derived from this.
- wherein the internal input voltage (Uₑ) of the field device electronics is regulated depending on a current voltage level of a terminal voltage (U_{K}), which drops at the input over the field device electronics and is divided from the supply voltage (U_{V}); and/or
- wherein the first useful voltage regulator (UR₁) and the internal operating and evaluation circuit (50) are galvanically isolated from one another; and/or
- wherein the first useful voltage regulator (UR₁) and the internal operating and evaluation circuit (50) are coupled to one another with at least one transformer (91); and/or
- wherein the second useful voltage (U_{N2}) is regulated depending on a current voltage level of a terminal voltage (U_{K}), which drops at the input over the field device electronics and is divided from the supply voltage (U_{V});
- wherein the internal input voltage (Uₑ) of the field device electronics is regulated depending on the current voltage level of the terminal voltage (U_{K}); and/or
- wherein, by means of the voltage controller (30), the internal input voltage (Uₑ) of the field device electronics (20) is kept at a predefinable voltage level, which can vary during operation and is lower than the terminal voltage (U_{K}); and /or
- wherein the voltage level at which the internal input voltage (Uₑ) is held using the voltage controller (30) is variable during operation, particularly in stages or essentially continuously; and/or
- wherein the second useful voltage (U_{N2}) is regulated depending on a current voltage level of the internal input voltage (Uₑ) of the field device electronics; and/or
- wherein the second useful voltage (U_{N2}) is regulated depending on a current strength of current of at least one of the three current components (I₁, I₂, I₃); and/or
- wherein the second useful voltage (U_{N2}) is regulated depending on the current strength of current of the third current component (I₃); and/or
- wherein the second useful voltage (U_{N2}) is regulated depending on the current strength of current of the second current component (I₂) and a current voltage level of the internal input voltage (Uₑ) of the field device electronics; and/or
- wherein the power-supplying external power supply (70) provides a supply voltage (U_{V}) with a variable, particularly fluctuating, voltage level; and/or
- wherein the supply voltage (U_{V}) supplied by the external power supply (70) drives a supply current (I) with a varying current strength, particularly a current strength that fluctuates essentially in a way that cannot be specified beforehand; and/or
- wherein a circuit memory (C) is provided in the operating and evaluation circuit (50) and is used to temporarily save electrical energy; and/or
- wherein the voltage controller (30) has components (IS2) which are used for the dissipation of electrical energy and for conducting away resulting thermal energy, particularly a semiconductor element with a heat sink or similar; and/or
- wherein at least one digital signal processor is provided in the operating and evaluation circuit (50), said signal processor in particular being galvanically isolated from the first useful voltage regulator (UR₁), and where for said signal processor the first useful voltage (U_{N1}) or a secondary voltage divided from this acts at least in part as the operating voltage; and/or
- wherein at least one amplifier is provided in the operating and evaluation circuit (50), said amplifier in particular being galvanically isolated from the first useful voltage regulator (UR₁), and where for said amplifier one of the two useful voltages (U_{N1}, U_{N2}) or a secondary voltage derived from this acts at least in part as the operating voltage; and/or
- wherein at least one A/D converter is provided in the operating and evaluation circuit, said A/D converter in particular being galvanically isolated from the first useful voltage regulator (UR₁), and where for said A/D converter the first useful voltage (U_{N1}) or a secondary voltage derived from this acts at least in part as the operating voltage; and/or
- wherein at least one D/A converter is provided in the operating and evaluation circuit, said D/A converter in particular being galvanically isolated from the first useful voltage regulator (UR₁), and where for said D/A converter at least one of the two useful voltages (U_{N1}, U_{N2}) or a secondary voltage derived from this acts at least in part as the operating voltage.

11. Field device electronics as claimed in one of the previous claims, further comprising sensing resistors (R₁, R₂, R₃) which are used to generate essentially current-proportional sensing voltage.

12. Field device for measuring and/or monitoring at least one predefined physical and/or chemical parameter, particularly a flow, a density, a viscosity, a level, a pressure, a temperature, a pH value or similar, of a medium, particularly a medium conducted in a pipe and/or a container, said field device comprising field device electronics as claimed in one of the Claims 1 to 11 and an electro-physical sensor (10) which is electrically coupled to the field device electronics, particularly a sensor that has a measuring tube (13) that is designed to conduct the medium and is installed in the course of a pipe and/or which vibrates at least at times during operation, said sensor reacting to changes of the at least one parameter and issuing at least at times at least one measuring signal (S₁, S₂) that corresponds to the parameter, particularly a variable signal voltage and/or a variable signal current.

13. Field device as claimed in the previous claim
- wherein the operating and evaluation circuit of the field device electronics uses the at least one measuring signal to generate at least at times a measured value (X_{M}) which currently represents, particularly digitally, the at least parameter to the measured and/or to be monitored; and/or
- wherein the operating and evaluation circuit has at least one A/D converter for the at least one measuring signal, where for said A/D converter the first useful voltage or a secondary voltage derived therefrom is used at least in part as the operating voltage; and/or
- wherein the operating and evaluation circuit has at least one microcomputer for generating the measured value, said microcomputer in particular being connected with an A/D converter and/or formed using a microprocessor and/or a single processor, where for said microcomputer the first useful voltage is used at least in part as the operating voltage.

14. Field device as claimed in Claim 12 or 13, wherein the field device electronics set the supply current taking into consideration the measured value currently representing the at least one parameter to be measured and/or the at least one parameter to be monitored, particularly in such a way that the measured value modulates an amplitude of the supply current at least at times, and/or that the supply current is clocked at least at times depending on the measured value.

15. Field device as claimed in one of the Claims 12 to 14, wherein the operating and evaluation circuit has a driver circuit (50B) for the sensor (10), said driver circuit having at least an operation amplifier and/or at least one D/A converter and/or at least one signal generator for generating the driver signal, wherein the second useful voltage or a secondary voltage derived therefrom is used at least at times as the operating voltage for the driver circuit.

16. Field device as claimed in the previous claim, wherein the sensor has an electrical impedance, particularly a variable impedance and/or an impedance fed by the driver circuit, particularly a magnetic coil of variable inductance and/or a capacitor of variable capacitance.

17. Field device as claimed in the previous claim
- wherein the electrical impedance is powered by the driver circuit; and/or
- wherein the electrical impedance of the sensor changes depending on the at least one parameter to be measured and/or to be monitored, particularly in such a way that a signal voltage dropping over the changing electrical impedance and/or a signal current which flows as a result of the changing electrical impedance is used as the measuring signal.

18. Field device as claimed in one of the Claims 12 to 17, wherein at least one magnetic coil (26, 36) for generating a, particularly variable, magnetic field is arranged on the sensor.

19. Field device as claimed in the previous claim
- wherein when the sensor (10) is in operation an exciter current (I_{exc}) flows through the at least one magnetic coil (26, 36) at least at times, said exciter current generating a magnetic field and being bipolar and/or variable as regards current strength and being driven by the second useful voltage or a secondary voltage derived therefrom; and/or
- wherein the magnetic coil (26, 36) interacts with a plunger (27, 37) via a magnetic field, and wherein the magnetic field coil and the plunger can move relative to one another.

20. Field device as claimed in the previous claim, wherein the sensor comprises at least one measuring tube (13), particularly two measuring tubes, for conducting the medium, said measuring tube - being driven by an electromechanical, and particularly electrodynamic, exciter arrangement which is formed by the magnetic field coil and the plunger - vibrating at least at times when the sensor is in operation.

21. Field device as claimed in one of the Claims 12 to 20, wherein the sensor is used to measure at least one parameter of a container holding the medium, particularly a level, and wherein the sensor to this end comprises a measuring probe projecting into a lumen of the container or at least communicating with the lumen, particularly a microwave antenna, a Gouboun cable, a vibrating submersion body or similar.

22. Field device as claimed in one of the Claims 12 to 21 which communicates via a data transmission system at least at times with an external control unit that is arranged at a distance from the field device, wherein to this end the field device electronics further comprise a communication circuit (COM) designed to control communication via a data transmission system, particularly in such a way that the first useful voltage (U_{N1}) or a secondary voltage divided therefrom is used at least in part as the operating voltage for the communication circuit (COM), and/or in such a way that the current controller (IS₁) and that the communication circuit (COM) are kept galvanically isolated from one another.

23. Field device as claimed in one of the Claims 12 to 22, wherein the field device electronics are electrically connected to the external electrical power supply (70) solely via a single pair of electrical wires (2L), and wherein the field device electronics (20) transmit the measured value (X_{M}), which is at least generated at times and currently represents the at least one parameter to be measured and/or to be monitored, especially digitally, to an evaluation circuit (80) via the single pair of electrical cables, said evaluation circuit being provided in the external electrical power supply system (70) and/or being electrically connected thereto, particularly in such a way that a current strength of the supply current, particularly one that is set to a value between 4 mA and 20 mA, represents the measured value (X_{M}) currently generated.

24. Field device for setting at least one predefined physical and/or chemical parameter, particularly a flow, a density, a viscosity, a level, a pressure, a temperature, a pH value or similar, particularly of a medium held in a pipe and/or a container, said field device comprising field device electronics as claimed in one of the Claims 1 to 11 and an electro-physical actuator electrically coupled with the field device electronics that reacts to changes of at least one control signal that is applied, particularly a variable signal voltage and/or a variable signal current, with an adjusting movement that affects the parameter to be set.

## Revendications

1. Electronique d'appareil de terrain (20) alimentée par une alimentation en énergie électrique externe (70), notamment reliée électriquement avec l'alimentation en énergie électrique externe seulement au moyen d'une paire unique de conducteurs électriques (2L), l'alimentation en énergie électrique externe (70) mettant à disposition une tension d'alimentation (Uᵥ), notamment unipolaire, et fournissant un courant d'alimentation (I) variable, notamment unipolaire et ou binaire, laquelle électronique d'appareil de terrain (20) comprend :
- un variateur de courant (IS₁) parcouru par le courant d'alimentation (I), destiné au réglage et/ou à la modulation, notamment au découpage, du courant d'alimentation (I)
- un circuit interne d'exploitation et d'évaluation (50) destiné à la commande de l'appareil de terrain, ainsi que
- un circuit d'alimentation interne (40) alimentant le circuit interne d'exploitation et d'évaluation (50), appliqué à la tension d'entrée interne (Uₑ) de l'électronique d'appareil de terrain (20) issue de la tension d'alimentation (U_{V})
-- avec un premier régulateur de tension utile (UR₁) parcouru au moins temporairement par un premier courant partiel (I₁), notamment variable, du courant d'alimentation (I), lequel régulateur met à disposition dans l'électronique d'appareil de terrain (20) une première tension utile interne (U_{N1}) régulée, pour l'essentiel constante, à un niveau de tension (U_{N1_cons}) prédéfinissable,
-- avec un deuxième régulateur de tension utile (UR₂) parcouru au moins temporairement par un deuxième courant partiel (I₂), notamment variable, du courant d'alimentation (I), lequel régulateur met à disposition dans l'électronique d'appareil de terrain (20) une deuxième tension utile interne (U_{N2}) régulée, variable sur une plage de tension prédéfinissable, ainsi que
-- un dispositif de réglage de tension (30) parcouru au moins temporairement par un troisième courant partiel (I₃), notamment variable, du courant d'alimentation (I), lequel dispositif est destiné à régler et maintenir la tension d'entrée interne (Uₑ) de l'électronique d'appareil de terrain (20) à un niveau de tension prédéfinissable, notamment variable en fonctionnement,
- les deux régulateurs de tension utile (UR₁, UR₂) étant séparés galvaniquement l'un par rapport à l'autre.

2. Electronique d'appareil de terrain selon la revendication précédente, pour laquelle est prévue dans le circuit d'exploitation et d'évaluation (50) au moins un microprocesseur (µC), pour lequel la première tension utile (U_{N1}) ou une tension secondaire dérivée de celle-ci sert au moins partiellement de tension de fonctionnement.

3. Electronique d'appareil de terrain selon la revendication précédente,
- pour laquelle le premier régulateur de tension utile (UR₁) et le microprocesseur (µC) sont séparés galvaniquement l'un par rapport à l'autre : et/ou
- pour laquelle le dispositif de réglage de courant (IS₁) et le microprocesseur (µC) sont séparés galvaniquement l'un par rapport à l'autre : et/ou
- pour laquelle le dispositif de réglage de tension (30) et le microprocesseur (µC) sont séparés galvaniquement l'un par rapport à l'autre.

4. Electronique d'appareil de terrain selon l'une des revendications précédentes, comprenant en outre au moins un comparateur, lequel compare une tension de détection dérivée du troisième courant partiel du courant d'alimentation avec une tension de référence correspondante.

5. Electronique d'appareil de terrain selon la revendication précédente
- pour laquelle l'au moins un comparateur pour le troisième courant partiel (I₃) et le deuxième régulateur de tension utile (UR₂) sont séparés galvaniquement l'un par rapport à l'autre ; et/ou
- pour laquelle l'au moins un comparateur pour le troisième courant partiel (I₃) et le circuit interne d'exploitation et d'évaluation (50) sont séparés galvaniquement l'un par rapport à l'autre.

6. Electronique d'appareil de terrain selon l'une des revendications précédentes, comprenant en outre au moins un comparateur, lequel compare la deuxième tension utile avec au moins une tension de référence correspondante.

7. Electronique d'appareil de terrain selon la revendication précédente
- pour laquelle l'au moins un comparateur pour la deuxième tension utile (UN₂) et le deuxième régulateur de tension utile (UR₂) sont séparés galvaniquement l'un par rapport à l'autre ; et/ou
- pour laquelle l'au moins un comparateur pour la deuxième tension utile (UN₂) et le circuit interne d'exploitation et d'évaluation (50) sont séparés galvaniquement l'un par rapport à l'autre.

8. Electronique d'appareil de terrain selon l'une des revendications précédentes, comprenant en outre une unité de mesure et de régulation (60) destinée à la mesure et au réglage des tensions chutant dans l'électronique d'appareil de terrain, notamment la deuxième tension utile, et/ou les courants circulant dans l'électronique d'appareil de terrain, notamment le deuxième et/ou le troisième courant partiel.

9. Electronique d'appareil de terrain selon la revendication 8,
- pour laquelle l'unité de mesure et de régulation (60) commande le dispositif de réglage de tension de telle manière que le troisième courant partiel circule lorsque le comparateur comparant la deuxième tension utile avec au moins une tension de référence correspondante signale un dépassement par la deuxième tension utile d'un seuil de tension utile maximal prédéfinissable pour la deuxième tension utile ; et/ou
- pour laquelle l'unité de mesure et de régulation (60) règle, au moyen de la tension d'entrée (Uₑ) et/ou de la tension aux bornes (U_{K}) une différence de tension (U_{K} - Uₑ) présente entre la tension d'entrée (Uₑ) et/ou la tension aux bornes (U_{K}) à un niveau prédéfini, notamment supérieur ou égal à 1 V ; et/ou
- pour laquelle le deuxième régulateur de tension utile (UR₂) est commandé par l'unité de mesure et de régulation (60) ; et/ou
- pour laquelle l'unité de mesure et de régulation (60) et le deuxième régulateur de tension utile (UR₂) sont séparés galvaniquement l'un par rapport à l'autre ; et/ou
- pour laquelle l'unité de mesure et de régulation (60) et le deuxième régulateur de tension utile (UR₂) sont couplés au moyen d'au moins un transformateur (92) et/ou au moyen d'au moins un optocoupleur ; et/ou
- pour laquelle l'unité de mesure et de régulation (60) et le circuit interne d'exploitation et d'évaluation (50) sont séparés galvaniquement l'un par rapport à l'autre ; et/ou
- pour laquelle l'unité de mesure et de régulation (60) et le circuit interne d'exploitation et d'évaluation (50) sont couplés au moyen d'au moins un transformateur (93) et/ou au moyen d'au moins un optocoupleur.

10. Electronique d'appareil de terrain selon l'une des revendications précédentes
- pour laquelle les deux régulateurs de tension utile (UR₁, UR₂) sont séparés galvaniquement l'un par rapport à l'autre ; et/ou
- pour laquelle le dispositif de réglage de courant (IS₁) et le deuxième régulateur de tension utile (UR₂) sont séparés galvaniquement l'un par rapport à l'autre ; et/ou
- pour laquelle le dispositif de réglage de courant (IS₁) et le circuit interne d'exploitation et d'évaluation (50) sont séparés galvaniquement l'un par rapport à l'autre ; et/ou
- pour laquelle le dispositif de réglage de tension (30) et le deuxième régulateur de tension utile (UR₂) sont séparés galvaniquement l'un par rapport à l'autre ; et/ou
- pour laquelle le dispositif de réglage de tension (30) et le circuit interne d'exploitation et d'évaluation (50) sont séparés galvaniquement l'un par rapport à l'autre ; et/ou
- pour laquelle le circuit interne d'exploitation et d'évaluation (50) est au moins temporairement parcouru à la fois par un premier courant utile (I_{N1}), notamment variable, généré par la première tension utile (U_{N1}) et par un deuxième courant utile (I_{N2}), notamment variable, généré par la deuxième tension utile (U_{N2}) ; et/ou
- pour laquelle le deuxième régulateur de tension utile (UR₂) est alimenté par la tension utile (U_{N1}) fournie par le premier régulateur de tension utile (UR₁) et/ou par une tension secondaire (U_{N1}') dérivée de celui-ci ; et/ou
- pour laquelle la tension d'entrée interne (Uₑ) de l'électronique de bus de terrain est régulée en fonction d'un niveau momentané d'une tension aux bornes (U_{K}) chutant à l'entrée à travers l'électronique de bus de terrain, dérivée de la tension d'alimentation (U_{V}) ; et/ou
- pour laquelle le premier régulateur de tension utile (UR₁) et le circuit interne d'exploitation et d'évaluation (50) sont séparés galvaniquement l'un par rapport à l'autre ; et/ou
- pour laquelle le premier régulateur de tension utile (UR₁) et le circuit interne d'exploitation et d'évaluation (50) sont couplés au moyen d'au moins un transformateur (91) ; et/ou
- pour laquelle la deuxième tension utile (U_{N2}) est régulée en fonction d'un niveau momentané d'une tension aux bornes (U_{K}) chutant à l'entrée à travers l'électronique de bus de terrain, dérivée de la tension d'alimentation (U_{V}) ; et/ou
- pour laquelle la tension d'entrée interne (Uₑ) de l'électronique de bus de terrain est régulée en fonction du niveau momentané de la tension aux bornes (U_{K}) ; et/ou
- pour laquelle, au moyen du dispositif de réglage de tension (30), la tension d'entrée interne (Uₑ) de l'électronique de bus de terrain (20) est maintenue à un niveau de tension prédéfinissable, notamment variable en fonctionnement, lequel niveau est inférieur à la tension aux bornes (U_{K}) ; et/ou
- pour laquelle le niveau de tension, auquel la tension d'entrée interne (Uₑ) est maintenue au moyen d'un dispositif de réglage de tension (30), est variable, en fonctionnement, notamment par paliers ou pour l'essentiel en continu ; et/ou
- pour laquelle la deuxième tension utile (U_{N2}) est régulée en fonction d'un niveau de tension momentané de la tension d'entrée interne (Uₑ) de l'électronique de bus de terrain ; et/ou
- pour laquelle la deuxième tension utile (U_{N2}) est régulée en fonction d'une intensité d'au moins l'un des trois courants partiels (I₁, I₂, I₃) ; et/ou
- pour laquelle la deuxième tension utile (U_{N2}) est régulée en fonction de l'intensité du troisième courant partiel (I₃) ; et/ou
- pour laquelle la deuxième tension utile (U_{N2}) est régulée en fonction de l'intensité momentanée du deuxième courant partiel (I₂) et un niveau momentané de la tension d'entrée interne (Uₑ) de l'électronique de bus de terrain ; et/ou
- pour laquelle l'alimentation en énergie externe (70) met à disposition une tension d'alimentation (U_{V}) avec un niveau de tension variable, notamment fluctuant ; et/ou
- pour laquelle la tension d'alimentation (U_{V}) fournie par l'alimentation en énergie externe (70) génère un courant d'alimentation (I) d'une intensité variable, notamment pour l'essentiel fluctuant d'une manière non déterminable au préalable ; et/ou
- pour laquelle est prévue, dans le circuit d'exploitation et d'évaluation (50), un circuit de stockage (C) servant à stocker temporairement l'énergie électrique ; et/ou
- pour laquelle le dispositif de réglage de tension (30) comporte des composants (IS₂), notamment un élément semi-conducteur muni d'un radiateur ou un élément analogue, servant à la dissipation de l'énergie électrique et à l'évacuation de l'énergie thermique en résultant; et/ou
- pour laquelle est prévu, dans le circuit d'exploitation et d'évaluation (50), au moins un processeur de signal numérique, notamment séparé galvaniquement du premier régulateur de tension utile (UR₁), processeur pour lequel la première tension utile (U_{N1}) ou une tension secondaire issue de celle-ci sert au moins partiellement de tension de fonctionnement ; et/ou
- pour laquelle est prévu, dans le circuit d'exploitation et d'évaluation (50), au moins un amplificateur, notamment séparé galvaniquement du premier régulateur de tension utile (UR₁), amplificateur pour lequel l'une des deux tensions utiles (U_{N1}, U_{N2}) ou une tension secondaire issue de celle-ci sert au moins partiellement de tension de fonctionnement ; et/ou
- pour laquelle est prévu, dans le circuit d'exploitation et d'évaluation (50), au moins un convertisseur A/N, notamment séparé galvaniquement du premier régulateur de tension utile (UR₁), convertisseur pour lequel la première tension utile (U_{N1}) ou une tension secondaire issue de celle-ci sert au moins partiellement de tension de fonctionnement ; et/ou
- pour laquelle est prévu, dans le circuit d'exploitation et d'évaluation (50), au moins un convertisseur N/A, notamment séparé galvaniquement du premier régulateur de tension utile (UR₁), convertisseur pour lequel l'une des deux tensions utiles (U_{N1}, U_{N2}) ou une tension secondaire issue de celle-ci sert au moins partiellement de tension de fonctionnement.

11. Electronique d'appareil de terrain selon l'une des revendications précédentes, laquelle comprend en outre des résistances de détection (R₁, R₂, R₃) servant à générer une tension de détection pour l'essentielle proportionnelle au courant.

12. Appareil de terrain destiné à la mesure et/ou la surveillance d'au moins un paramètre physique et/ou chimique prédéfini, notamment un débit, une densité, une viscosité, un niveau, une pression, une température, un pH, etc., d'un produit, notamment acheminé dans une conduite et/ou dans un réservoir, lequel appareil de terrain comprend une électronique d'appareil de terrain selon l'une des revendications 1 à 11, ainsi qu'un transmetteur de mesure (10) électro-physique couplé électriquement avec l'électronique d'appareil de terrain, lequel transmetteur comporte au moins un tube de mesure (13) destiné à acheminer le produit, installé dans l'écoulement d'une conduite et/ou vibrant au moins temporairement en fonctionnement, lequel transmetteur réagit aux changements de l'au moins un paramètre et lequel délivre au moins temporairement au minimum un signal de mesure (S₁, S₂) correspondant au paramètre, notamment un signal de tension variable et/ou un signal de courant variable.

13. Appareil de terrain selon la revendication précédente,
- pour lequel le circuit d'exploitation et d'évaluation de l'électronique d'appareil de terrain génère au moins temporairement, au moyen de l'au moins un signal de mesure, une valeur mesurée (X_{M}) momentanée, notamment numérique, représentant l'au moins un paramètre à mesurer et/ou à surveiller ; et/ou
- pour lequel le circuit d'exploitation et d'évaluation comporte au moins un convertisseur A/N pour l'au moins un signal de mesure, convertisseur A/N pour lequel la première tension utile ou une tension secondaire dérivée de celle-ci sert au moins partiellement de tension de fonctionnement ; et/ou
- pour lequel le circuit d'exploitation et d'évaluation comporte au moins un micro-ordinateur destiné à la génération de la valeur mesurée, notamment relié avec un convertisseur A/N et/ou constitué d'un microprocesseur et/ou d'un processeur de signal, micro-ordinateur pour lequel la première tension utile sert au moins partiellement de tension de fonctionnement.

14. Appareil de terrain selon la revendication 12 ou 13, pour lequel l'électronique d'appareil de terrain règle le courant d'alimentation en tenant compte de la valeur mesurée représentant momentanément l'au moins un paramètre à mesurer et/ou à surveiller, notamment de telle sorte à ce que la valeur mesurée module au moins temporairement une amplitude du courant d'alimentation, et/ou de telle sorte que le courant d'alimentation est découpé au moins temporairement en fonction de la valeur mesurée.

15. Appareil de terrain selon l'une des revendications 12 à 14, pour lequel le circuit d'exploitation et d'évaluation comprend au moins un circuit d'attaque (50B) pour le transmetteur de mesure (10), lequel circuit comporte au moins un amplificateur opérationnel et/ou au moins un convertisseur N/A et/ou au moins un générateur de signaux destinés à la génération du signal d'attaque, circuit pour lequel la deuxième tension utile ou une tension secondaire dérivée de celle-ci sert au moins partiellement de tension de fonctionnement.

16. Appareil de terrain selon la revendication précédente, pour lequel le transmetteur de mesure présente une impédance électrique, notamment variable et/ou alimentée par le circuit d'attaque, notamment une bobine d'électroaimant d'inductance variable et/ou un condensateur de mesure de capacité variable.

17. Appareil de terrain selon la revendication précédente,
- pour lequel l'impédance électrique est alimentée par le circuit d'attaque ; et/ou
- pour lequel l'impédance électrique du transmetteur de mesure varie en fonction de l'au moins un paramètre à mesurer et/ou à surveiller, notamment de telle sorte qu'une tension de signal chutant à travers l'impédance électrique variable et/ou qu'un courant de signal circulant à travers l'impédance électrique variable sert de signal de mesure.

18. Appareil de terrain selon les revendications 12 à 17, pour lequel est disposée, sur le transmetteur de mesure, au moins une bobine d'électroaimant (26, 36) destinée à générer un champ magnétique, notamment variable.

19. Appareil de terrain selon la revendication précédente,
- pour lequel l'au moins une bobine d'électroaimant (26, 36) est parcourue, pendant le fonctionnement du transmetteur de mesure (10), au moins temporairement par un courant d'excitation (i_{exc}) générant le champ magnétique, notamment bipolaire et/ou d'intensité variable, lequel courant est commandé par la deuxième tension utile ou une tension secondaire dérivée de celle-ci ; et/ou
- pour lequel la bobine d'électroaimant (26, 36) est en interaction avec un noyau plongeur (27, 37) via un champ magnétique, et pour lequel la bobine d'électroaimant et le noyau plongeur sont mobiles l'un par rapport à l'autre.

20. Appareil de terrain selon la revendication précédente, pour lequel le transmetteur de mesure comprend au moins un tube de mesure (13), notamment deux tubes de mesure, destiné à l'acheminement du produit, lequel tube de mesure, excité par un circuit excitateur électromécanique, notamment électrodynamique, constitué de la bobine d'électroaimant et du noyau plongeur, vibre au moins temporairement pendant le fonctionnement du transmetteur de mesure.

21. Appareil de terrain selon l'une des revendications 12 à 20, pour lequel le transmetteur de mesure sert à la saisie d'au moins un paramètre relatif à un réservoir contenant le produit, notamment un niveau de remplissage, et pour lequel le transmetteur de mesure comprend à cette fin au moins une sonde de mesure s'avançant dans un canal du réservoir ou communiquant au minimum avec le canal, notamment une antenne microondes, une ligne Gouboun, un noyau plongeur vibrant, etc.

22. Appareil de terrain selon l'une des revendications 12 à 21, qui communique au moins temporairement, par l'intermédiaire d'un système de transmission de données, avec une unité de commande et de contrôle externe, disposée à distance de l'appareil de terrain, un circuit de communication (COM) étant prévu dans l'électronique d'appareil de terrain, contrôlant la communication via le système de transmission de données ; notamment de telle sorte que la première tension utile (U_{N1}) ou une tension secondaire issue de celle-ci sert au moins partiellement de tension de fonctionnement pour le circuit de communication (COM), et/ou de telle sorte que le dispositif de réglage de courant (IS₁) et le circuit de communication (COM) sont séparés galvaniquement l'un par rapport à l'autre.

23. Appareil de terrain selon l'une des revendications 12 à 22, pour lequel l'électronique d'appareil de terrain est reliée avec une alimentation en énergie électrique externe (70) à travers une unique paire de conducteurs électriques (2L) et pour lequel l'électronique d'appareil de terrain (20) transmet la valeur mesurée (X_{M}) au moins générée partiellement, représentant momentanément l'au moins un paramètre à mesurer et/ou à surveiller, notamment numérique, par l'intermédiaire de l'unique paire de conducteurs électriques (2L) à un circuit d'évaluation (80) prévu dans l'alimentation en énergie électrique externe (70) et/ou couplé électriquement à celle-ci, notamment de telle sorte qu'une intensité réglée momentanément, notamment à une valeur située entre 4 et 20 mA, du courant d'alimentation représente la valeur mesurée (X_{M}) générée momentanément.

24. Appareil de terrain destiné au réglage d'au moins un paramètre physique et/ou chimique prédéfini, notamment un débit, une densité, une viscosité, un niveau, une pression, une température, un pH, etc., d'un produit, notamment acheminé dans une conduite et/ou dans un réservoir, lequel appareil de terrain comprend une électronique d'appareil de terrain selon l'une des revendications 1 à 11, ainsi qu'un composant de réglage électro-physique couplé électriquement avec l'électronique d'appareil de terrain, qui réagit aux changements d'au moins un signal de commande appliqué, notamment une tension de signalisation variable et/ou un courant de signalisation variable, avec un mouvement de réglage influençant le paramètre à régler.
